# EUROPÄISCHE PATENTSCHRIFT

(11) **EP 2 755 857 B1**
(45) Veröffentlichungstag und Bekanntmachung des Hinweises auf die Patenterteilung: **18.04.2018**
(21) Anmeldenummer: 12737541.8
(22) Anmeldetag: 17.07.2012
(51) Int. Cl.: B60P 3/34, B60R 9/055

(54) **DACHBOX, KRAFTFAHRZEUGDACH MIT DACHBOX SOWIE KRAFTFAHRZEUG MIT DACHBOX**
ROOF BOX, MOTOR VEHICLE ROOF COMPRISING A ROOF BOX, AND MOTOR VEHICLE COMPRISING A ROOF BOX
COFFRE DE TOIT, TOIT DE VÉHICULE À MOTEUR ÉQUIPÉ DUDIT COFFRE DE TOIT ET VÉHICULE À MOTEUR ÉQUIPÉ DUDIT COFFRE DE TOIT

(30) Priorität: 17.07.2011 DE 102011051891; 25.10.2011 DE 102011054802; 21.11.2011 DE 102011055543; 29.11.2011 DE 102011055847; 29.11.2011 DE 102011055848; 06.07.2012 DE 102012106103
(43) Veröffentlichungstag der Anmeldung: 23.07.2014
(73) Patentinhaber: SES Solutions GmbH, 01705 Freital (DE)
(72) Erfinder: ESPIG, Serle, 20253 Hamburg (DE)
(74) Vertreter: RGTH
(86) Internationale Anmeldenummer: PCT/EP2012/064038
(87) Internationale Veröffentlichungsnummer: WO 2013/011041

(56) Entgegenhaltungen:
- EP-A2- 1 514 734
- DE-A1- 2 717 516
- DE-A1- 3 036 100
- DE-B3-102007 042 345
- GB-A- 2 050 962

## Beschreibung

### Technisches Gebiet der Erfindung

Die Erfindung betrifft eine Dachbox für Kraftfahrzeuge zur Ausbildung eines nutzbaren Innenraums, ein Kraftfahrzeugdach mit einer Dachbox sowie ein Kraftfahrzeug mit einer Dachbox.

### Stand der Technik

Bekannte Dachboxen sind geschlossene bzw. verschließbare Behälter zur Lagerung von Gepäck, die den zusätzlichen Transport von Gepäck, beispielsweise einer Skiausrüstung, mit einem Kraftfahrzeug, außerhalb der üblichen Stauräume, wie Kofferraum, ermöglichen. Sie werden auf dem Dach des Kraftfahrzeugs montiert, in der Regel an einer Dachreling oder an dafür vom Hersteller vorgesehenen Dachschienen. Eine Dachbox erhöht den Kraftstoffverbrauch des Kraftfahrzeugs, da sie das Gewicht und den Luftwiderstand des Kraftfahrzeugs vergrößert. Zusätzlich werden die Fahrgeräusche verstärkt und die erreichbare bzw. zulässige Höchstgeschwindigkeit des Fahrzeugs reduziert. Wird der zusätzliche Gepäckraum der Dachbox nicht benötigt, muss diese deshalb demontiert und anderweitig gelagert werden. Für die Lagerung der Dachbox besteht ein erheblicher Platzbedarf, was insbesondere dann nachteilig ist, wenn keine geeignete Garage oder ein Abstellraum zur Verfügung steht.

Aus der DE 60 2005 002 301 T2 ist ein Fahrzeugdachkarosserieteil eines Kraftfahrzeuges bekannt, das als Behälter ausgebildet ist, der einen Stauraum begrenzt, wobei dieser Behälter mit einer von außerhalb des Kraftfahrzeugs zugänglichen Klappe ausgerüstet ist. Dieser Behälter ist somit in das Dach des Kraftfahrzeuges integriert ausgebildet und muss nicht montiert und demontiert werden. Auch werden hierdurch der Kraftstoffverbrauch sowie die Fahrgeräusche reduziert. Nachteilig ist jedoch, dass der Behälter nur einen äußerst begrenzten Stauraum zur Verfügung stellt, da die Höhe des Behälters auf die Dicke des Kraftfahrzeugdaches beschränkt ist.

Aus der DE 27 17 516 A ist ein Wohnmobil aus einem Busfahrzeug mit ausfaltbarem Dachaufsatz, dessen mit dem Fahrzeugdach verbundener Grundrahmen eine Öffnung aufweist, die mit einem Dachausschnitt des Fahrzeugs zusammenpasst, bekannt.

### Darstellung der Erfindung: Aufgabe, Lösung, Vorteile

Aufgabe der Erfindung ist es daher, eine Dachbox vorzuschlagen, die für den Benutzer komfortabel zu handeln ist, einen möglichst großen Stauraum bietet und gleichzeitig Fahrgeräusche und Kraftstoffverbrauch reduziert.

Diese Aufgabe wird bei einer Dachbox für Kraftfahrzeuge zur Ausbildung eines nutzbaren Innenraums zur Anordnung bzw. Lagerung von Gegenständen dadurch gelöst, dass die Dachbox in das Dach eines Kraftfahrzeuges integrierbar ausgebildet ist und dass Volumenänderungsmittel zum Ändern des Volumens des Innenraums vorgesehen sind, wobei die Dachbox als eigenständiger, in sich geschlossener Behälter ausgebildet ist, wobei die Dachbox Wandungselemente zur Ausbildung des Innenraums umfasst und wobei die Wandungselemente ein Bodenelement, ein Deckenelement, eine Rückwand und/oder eine oder mehrere Seitenwände umfassen, wobei die Dachbox ein Oberteil, das einen Deckel für die Dachbox bildet und gegenüber einem Unterteil der Dachbox in einem ausgefahrenen Zustand der Dachbox verschwenkbar ist, umfasst, wobei das Oberteil vom Deckenelement und/oder der Rückwand und/oder den Seitenwänden gebildet wird.

Die integrative Anordnung der Dachbox im Fahrzeugdach besteht darin, dass die Dachbox nicht als separater Behälter mittels einer Trägervorrichtung auf das Fahrzeugdach montiert wird, sondern stattdessen im Fahrzeugdach angeordnet ist und, insbesondere in der optischen Wahrnehmung des Fahrzeuges, einen Teil des Fahrzeugdaches bildet. Durch die integrative Anordnung der Dachbox im Fahrzeugdach, ist es nunmehr für den Benutzer nicht mehr notwendig diese zu montieren bzw. demontieren. Vielmehr verbleibt die Dachbox als integrativer Bestandteil des Fahrzeugdaches permanent im Fahrzeugdach und steht einem Benutzer ständig zur Verfügung.

Hierdurch ergibt sich ein komfortableres Handling der Dachbox für den Benutzer. Die Dachbox ist stets als eigenständiger, insbesondere in sich geschlossener, Behälter ausgebildet und ist insbesondere nicht vom Innenraum des Kraftfahrzeuges zugänglich, sondern nur von außerhalb.

Durch die Vorsehung der Volumenänderungsmittel ist es möglich, das Volumen des Innenraums der Dachbox zu verändern und somit die Größe der Dachbox zu variieren. Insbesondere ist es zweckmäßig, dass die Dachbox mittels der Volumenänderungsmittel zwischen einem ausgefahrenen Zustand, in dem der Innenraum ein maximales Volumen aufweist, und einem eingefahrenen Zustand, in dem der Innenraum ein minimales Volumen aufweist, verfahrbar ist. Wird der Stauraum der Dachbox benötigt, bringt der Benutzer die Dachbox in den ausgefahrenen Zustand. Nach Beendigung der Lagerung von Gegenständen in der Dachbox, kann die Dachbox wieder in den eingefahrenen Zustand verfahren werden. Hierdurch wird erreicht, dass die Dachbox nur dann ihr maximales Volumen bzw. ihre maximale Größe aufweist, wenn diese auch tatsächlich vom Benutzer verwendet wird. Bei Nicht-Verwendung der Dachbox wird diese eingefahren und weist dann einen verringerten Luftwiderstand auf, was wiederum in reduzierten Fahrgeräuschen und einem reduzierten Kraftstoffverbrauch resultiert. Im eingefahrenen Zustand ist die Dachbox optisch nicht erkennbar bzw. zumindest wenig auffällig. Durch die Integration der Dachbox in das Fahrzeugdach wird der Luftwiderstand des Kraftfahrzeugs bei eingefahrener Dachbox gegenüber Kraftfahrzeugen ohne Dachbox nicht oder zumindest nicht wesentlich verschlechtert. Bevorzugt beträgt das minimales Volumen (im eingefahrenen Zustand) der Dachbox weniger als 50 %, bevorzugt weniger als 25 %, besonders bevorzugt weniger als 10 %, am bevorzugtesten weniger als 5% des maximalen Volumens (im ausgefahrenen Zustand) der Dachbox. Hierdurch wird gewährleistet, dass sich bei Nichtverwendung der Dachbox im eingefahrenen Zustand ein möglichst geringer Luftwiderstand ergibt. Die Dachbox kann sowohl während des Parkens des Kraftfahrzeugs als auch während der Fahrt im ausgefahrenen Zustand und selbstverständlich auch im eingefahrenen Zustand sein.

Unter dem Begriff "Dachbox" wird im vorliegenden Zusammenhang ein im oder am Dach eines Kraftfahrzeuges vorgesehener Behälter verstanden, der, zumindest im ausgefahrenen Zustand, einen nutzbaren Innenraum, d.h. einen Stauraum, zur Anordnung bzw. Lagerung von Gegenständen bietet. Der Innenraum ist dabei der Stauraum innerhalb der Dachbox, der von der Wandung der Dachbox eingefasst wird. Die Wandung der Dachbox setzt sich dabei aus mehreren Wandungselementen zusammen. Diese Wandungselemente umfassen ein Bodenelement, ein Deckenelement, eine Rückwand und/oder eine oder mehrere Seitenwände. Unter dem Begriff "Kraftfahrzeug" wird im vorliegenden Zusammenhang jedes motorisierte, nicht schienengebundene Landfahrzeug verstanden, wobei die Kraftfahrzeuge, die zur Verwendung der vorliegenden Erfindung geeignet sein sollen, selbstverständlich ein Fahrzeugdach aufweisen müssen. Insbesondere sind hierunter PKW, LKW, Cabriolets, etc. zu subsumieren. Bevorzugt ist ferner, dass die Rückwand und/oder die Seitenwände und/oder das Deckenelement in jedem Zustand der Dachbox, und insbesondere sowohl im eingefahrenen als auch im ausgefahrenen Zustand, am Bodenelement anliegen bzw. an das Bodenelement angrenzen.

Zweckmäßigerweise ist zumindest eines der Wandungselemente oder zumindest Teile eines der Wandungselemente der Dachbox vom Dach eines Kraftfahrzeuges gebildet. Hierdurch vereinfacht sich zum einen der Aufbau der Dachbox und zum anderen wird die integrative Ausbildung der Dachbox im Fahrzeugdach verstärkt. Insbesondere kann es zweckmäßig sein, ein Bodenelement der Dachbox als Bestandteil des Fahrzeugdaches auszubilden. Insbesondere können auch sämtliche Wandungselemente der Dachbox als Bestandteile des Fahrzeugdaches ausgebildet sein. Häufig wird es zweckmäßig sein, die Dachbox fest im Dach zu verankern, so dass diese ortsfest ausgebildet ist. Alternativ kann die Dachbox auch an einem Trägerelement, Dachgepäckträger oder dergleichen fest angebracht werden, wobei dann das Trägerelement bzw. der Dachgepäckträger gegebenenfalls verfahrbar sein können, um die Beladung der ausgefahrenen Dachbox für einen Benutzer zu vereinfachen.

Um das Volumen der Dachbox nach Belieben bzw. bei Bedarf ändern zu können, bzw. die Dachbox zwischen dem eingefahrenen und dem ausgefahrenen Zustand verfahren zu können, ist es zweckmäßig, dass Aktivierungsmittel vorgesehen sind, mit denen die Volumenänderungsmittel aktiviert bzw. betätigt werden können. Die Aktivierungsmittel können beispielsweise Elektromotoren, insbesondere Servomotoren, Federn, pneumatisch steuerbare Gaskissen, insbesondere Luftkissen, Magneten und/oder Elektromagneten sowie auch Kombinationen hiervon umfassen. Zweckmäßigerweise weisen die Aktivierungsmittel ferner eine geeignete Steuereinrichtung auf, um die Motoren bzw. Luftkissen und Elektromagnete anzusteuern. Hierdurch kann die Dachbox automatisiert zwischen dem eingefahrenen Zustand und dem ausgefahrenen Zustand verfahren werden. Die Verwendung von Luftkissen ist insbesondere vorteilhaft, das diese im ausgefahrenen Zustand der Dachbox die Steifigkeit derselben erhöhen, eine Polsterung für zu transportierende Gegenstände bieten können, im eingefahrenen Zustand der Dachbox kein oder wenig Lagerungsvolumen erfordern und bei Anordnung auf der dem Dachboxinnenraum zugewandten Seite eines Volumenänderungsmittels als Beschädigungs- bzw- Kratzschutz dienen können. Die Gaskissen können dabei an die jeweiligen Gegebenheiten in Ihrer Form angepasst werden. Insbesondere können Sie Aussparungen, Ausnehmungen, Einziehungen und dgl. aufweisen, um die Luftkissen so an die Bauteile, an die sie anliegen, anzupassen. Diese Bauteile können beispielsweise Wandungselemente, Schwenkmittel, oder auch Rahmen bzw. andere Trägerelemente sein. Die Gaskissen können mehrere Kammern aufweisen, die über entsprechende Ventile und eine Steuereinrichtung wahlweise ansteuerbar sind. So können zu einem gegebenen Zeitpunkt nur bestimmte Bereiche des Gaskissens aufgepumpt oder entleert werden.

In einer bevorzugten Ausführungsform der Erfindung umfassen die Volumenänderungsmittel Schwenkmittel. Mithilfe der Schwenkmittel können einzelne oder auch mehrere Wandungselemente und/oder Segmente von Wandungselementen verschwenkt werden. Durch die so erreichte Verschwenkbarkeit einzelner Wandungselemente kann insbesondere ein Klappen einzelner Wandungselemente oder auch ein Falten von Wandungselementen gegeneinander oder von Segmenten von Wandungselementen gegeneinander erreicht werden. Durch das Verschwenken der Wandungselemente kann die Dachbox für den eingefahrenen Zustand zusammengeklappt oder gegebenenfalls auch zusammengefaltet werden. Bevorzugt sind die Rückwand, das Deckenelement und/oder die Seitenwände mit Schwenkmitteln versehen bzw. schwenkbar ausgebildet. Insbesondere können diese Wandungselemente mit dem Bodenelement mittels der Schwenkmittel verbunden sein. Die Rückwand und/oder die Seitenwände können zusätzlich oder alternativ mit dem Deckenelement schwenkbar verbunden sein.

Die Schwenkmittel können sämtliche aus dem Stand der Technik bekannten geeigneten Mittel zum Verschwenken von Wandungselemente umfassen. Insbesondere umfassen die Schwenkmittel ein oder mehrere Gelenke, die bevorzugt als Scharnier ausgebildet sein können. Zusätzlich oder alternativ können die Schwenkmittel einen elastisch und/oder plastisch verformbaren Materialabschnitt umfassen. Dieser Materialabschnitt ist dann zweckmäßigerweise in das zu verschwenkende Wandungselemente integriert ausgebildet. Insbesondere kann auch ein gesamtes Wandungselement oder ein gesamtes Segment eines Wandungselementes aus elastisch und/oder plastisch verformbaren Material ausgebildet sein. Ein solches Material kann sich insbesondere auch zum Falten eines Wandungselementes eignen, wobei dann bevorzugterweise in dem Materialabschnitt bzw. im Wandungselement ein Falz vorgesehen ist, so dass die Faltung repetitiv in derselben Weise bzw. um dieselbe Falz durchgeführt werden kann. Bevorzugt sind im Bereich zumindest einiger der Schwenkmittel Aktivierungsmittel angeordnet, so dass die Aktivierungsmittel in Verbindung mit den Schwenkmitteln stehen können. Auf diese Weise kann durch die Aktivierungsmittel zu einem beliebigen, gewünschten Zeitpunkt die Verschwenkung eines bestimmten Wandungselementes ausgelöst werden. In Abhängigkeit der Ausbildung der Aktivierungsmittel kann es auch zweckmäßig sein, diese im Bereich der Wandungselemente vorzusehen. Bei Vorsehung der Aktivierungsmittel im Bereich der Schwenkmittel, insbesondere Scharniere, ist es besonders bevorzugt, dass bei einem Schwenkmittel eine (Rückstell-)Feder, ein Magnet, ein Elektromagnet und ein Gaskissen, insbesondere Luftkissen, vorgesehen sind. Im eingefahrenen Zustand der Dachbox befindet sich die Feder im entspannten Zustand. Durch ein Aufpumpen des Luftkissens verschwenkt sich das Schwenkmittel und die Feder wird vorgespannt. Ist der ausgefahrene Zustand erreicht, wird der Elektromagnet aktiviert und verriegelt das Schwenkmittel in seiner ausgeschwenkten Stellung. Für ein Zurückschwenken (zum eingefahrenen Zustand) wird der Elektromagnet deaktiviert bzw. entriegelt und die vorgespannte Feder veranlasst das Schwenkmittel zurück zu schwenken. Dabei entleert sich das Luftkissen. Zusätzlich kann das Luftkissen auch aktiv, über Pumpen oder dergleichen, entleert werden. Das Luftkissen dient nicht nur der Verschwenkung der Schwenkmittel, sondern bietet, wenn es entsprechend angeordnet ist, insbesondere an der Innenseite der Schwenkmittel, einen Beschädigungs- bzw. Kratzschutz.

In einigen Ausführungsformen der Erfindung weisen die Volumenänderungsmittel zum Bewegen von Wandungselemente bzw. von Abschnitten von Wandungselementen kein Gestänge und/oder keine elektromechanischen oder mechanischen Zylinder auf. Dies ist insofern vorteilhaft, als dass Gestänge und Zylinder, die zur Faltung bzw. Verschwenkung der Wandungselemente verwendet werden, insbesondere im eingefalteten Zustand, einen hohen Platzbedarf aufweisen und daher Dachboxen im eingefahrenen Zustand größer sein müssen als eine Dachbox ohne solche Bauteile. Auch ist der Aufbau derartiger Systeme häufig kompliziert und verringert im ausgefahrenen Zustand den Stauraum der Dachbox.

Bevorzugt wird die Dachbox von zwei Seitenwänden, einer Rückwand, einem Bodenelement und einem Deckenelement gebildet. Insbesondere ist keine gesonderte vordere Seitenwand bzw. Vorderwand vorgesehen, die bei bekannten Dachboxen beispielsweise in etwa parallel zur Rückwand ausgerichtet ist und die Dachbox nach vorne hin abschließt. Vielmehr verläuft das Deckenelement bei der erfindungsgemäßen Dachbox vorteilhafterweise schräg nach unten in Längsrichtung betrachtet und liegt mit seiner vorderen Kante direkt am Bodenelement an. Insbesondere weist die Fläche des an das Bodenelement angrenzenden Segmentes des Deckenelements einen gemittelten Winkel gegenüber der Fläche des Fahrzeugdaches auf, der höchstens 60 Grad, bevorzugt höchstens 45 Grad, besonders bevorzugt höchstens 40 Grad beträgt. Hierdurch ergibt sich eine aerodynamische Form der Dachbox und es wird eine gesonderte Vorderwand vermieden.

Die Rückwand, die (beiden) Seitenwände und/oder das Deckenelement weisen bevorzugt jeweils mindestens zwei Segmente auf, d.h. zwei Rückwandsegmente, zwei Seitenwandsegmente und/oder zwei Deckensegmente. Insbesondere kann durch die mindestens zwei Segmente das gesamte jeweilige Wandungselement gebildet sein. Bevorzugt können die mindestens zwei Segmente jeweils ein oberes Segment und ein unteres Segment umfassen. Die mindestens zwei Segmente sind ferner jeweils mittels der Schwenkmittel miteinander verbunden, so dass beide Segmente gegeneinander verschwenkbar bzw. aufeinander faltbar sind. Es ist ferner besonders bevorzugt, dass die mindestens zwei Rückwandsegmente und/oder die mindestens zwei Seitenwandsegmente nach innen, also in Richtung des Innenraums, einklappbar sind. Hierdurch ist die Dachbox faltbar ausgebildet, denn beim Einklappen der Rückwand- oder der Seitenwandsegmente verringert sich die effektive Höhe der Rückwand oder der Seitenwand. Da das Deckenelement mit der Rückwand und den beiden Seitenwänden zweckmäßigerweise durch ein (oberes) Schwenkmittel verbunden ist, wird es beim Einklappen der Segmente abgesenkt, was insgesamt ein Zusammenfalten der Dachbox bewirkt. Dadurch, dass das Deckenelement zwei oder mehrere Deckensegmente aufweist, die jeweils durch ein oder mehrere Schwenkmittel beweglich verbunden sind, kann die Gesamtkrümmung des Kraftfahrzeugdachs zum Teil ausgeglichen werden, so dass sich im zusammengefalteten Zustand der Dachbox ein geringerer Platzbedarf ergibt.

Insbesondere ist es bevorzugt, dass die Schwenkmittel, die die beiden Seitenwandsegmente und/oder die beiden Rückwandsegmente und/oder die beiden Deckensegmente miteinander verbinden, eine Schwenkachse aufweisen, um die die beiden Segmente gegeneinander verschwenkt werden, wobei die Schwenkachse im Wesentlichen horizontal ausgerichtet ist. Durch die im Wesentlichen horizontale Ausrichtung der Schwenkachse wird ein Klappen der einzelnen Segmente bzw. Wandungselemente zueinander und auf die Oberfläche des Fahrzeugdaches ermöglicht, da diese in der Regel zwar gekrümmt, jedoch im Wesentlichen horizontal ausgerichtet ist.

Bei einigen Ausführungsformen ist es bevorzugt, dass insbesondere die beiden Seitenwände jeweils mindestens zwei, bevorzugt genau zwei, Seitenwandsegmente aufweisen. Hierbei ist es häufig ferner bevorzugt, dass sich ein erstes der beiden Seitenwandsegmente in Längsrichtung der Seitenwand betrachtet bis zu einem vorderen Bereich der Seitenwand erstreckt. Dieser vordere Bereich der Seitenwand ist im montierten Zustand der Dachbox auf einem Kraftfahrzeug der Vorderseite dieses Kraftfahrzeuges zugewandt und bildet den vorderen Abschluss der Seitenwand. Insbesondere verläuft der vordere Bereich der Seitenwand in Bezug auf die Höhe der Seitenwand vom unteren Rand der Seitenwand bis zu einem oberen Rand der Seitenwand, d.h. über die gesamte Höhe der Seitenwand im vorderen Bereich. Ferner ist es bevorzugt, dass sich das zweite Seitenwandsegment nicht in diesen vorderen Bereich der Seitenwand erstreckt. Mit anderen Worten wird der vordere Bereich der Seitenwand ausschließlich von dem ersten Seitenwandsegment gebildet. Besonders bevorzugt ist es, wenn der vordere Bereich der Seitenwand in Längsrichtung der Seitenwand von hinten nach vorne betrachtet im montierten Zustand der Dachbox auf einem Kraftfahrzeug ungefähr in demjenigen Bereich beginnt, in dem die Dachfläche des Kraftfahrzeuges in einer Draufsicht beginnt sich nach außen zu krümmen. In der Regel verlaufen Dachflächen von modernen Kraftfahrzeugen nicht rechteckig, sondern insbesondere die Seitenkanten der Dachfläche beginnen ab einem bestimmten Punkt sich (leicht) nach außen zu krümmen. Im hinteren Bereich der Dachfläche bis hin zu einem mittleren Bereich kann gegebenenfalls bei den seitlichen Dachkanten eine Krümmung nach innen gegeben sein.

Durch die Krümmung des vorderen Bereichs der seitlichen Dachkanten nach außen ist es zweckmäßig, den vorderen Bereich der Seitenwand nur durch das erste Seitenwandsegment auszubilden, da bei einer Zweiteilung des vorderen Bereiches der Seitenwand in zwei Segmente die beiden Seitenwandsegmente beim Zusammenklappen bzw. Zusammenfalten der Dachbox mit ihren gekrümmten Flächen im vorderen Bereich der Seitenwand mit entgegengesetzten Krümmungsrichtungen aufeinanderliegen würden und so eine Art Hohlraum einschließen würden. Dies würde zu einem erhöhten Platzbedarf der Seitenwandsegmente im zusammengefalteten Zustand führen, was unerwünscht ist. Bei der Ausbildung des vorderen Bereiches der Seitenwand ausschließlich durch das erste Seitenwandsegment faltet dieses mit seiner gekrümmten Fläche im zusammengefalteten Zustand auf die Dachfläche auf. Die Dachfläche selbst ist in diesem Bereich ebenfalls gekrümmt, da das Dach im vorderen Bereich nicht nur nach außen gekrümmt ist, sondern auch nach unten unter einer vorgegebenen Krümmung in Richtung nach vorne zum Kraftfahrzeug hin abfällt. In diesem Fall weisen die Krümmung der Fläche des Daches des Kraftfahrzeuges und die Krümmung des ersten Seitenwandsegmentes im Bereich des vorderen Bereiches der Seitenwand in dieselbe Richtung, so dass die beiden Krümmungsflächen in der Art eines Formschlusses aufeinanderliegen und so nur ein geringer Platzbedarf entsteht.

Der vordere Bereich der Seitenwand schließt sich zweckmäßig in Längsrichtung der Seitenwand von vorne nach hinten betrachtet an einen mittleren Bereich der Seitenwand an, wobei sich der mittlere Bereich wieder an einen hinteren Bereich der Seitenwand anschließt. Zweckmäßig setzt sich die Seitenwand aus dem vorderen Bereich, dem mittleren Bereich und dem hinteren Bereich zusammen, d. h. diese drei Bereiche bilden unter Ausschluss weiterer Teile zusammen die gesamte Seitenwand. Bevorzugt ist nunmehr, dass das zweite Seitenwandsegment, das bevorzugt nicht im vorderen Bereich angeordnet ist, im mittleren Bereich und/oder im hinteren Bereich angeordnet ist. Besonders bevorzugt ist das zweite Seitenwandsegment ausschließlich im mittleren Bereich angeordnet. Das erste Seitenwandsegment, welches im vorderen Bereich angeordnet ist und diesen alleine bildet, ist ferner im mittleren Bereich und/oder im hinteren Bereich angeordnet, wobei dieses erste Seitenwandsegment bevorzugt in allen drei Bereichen, d. h. im vorderen, im mittleren und im hinteren Bereich, angeordnet ist.

Der mittlere Bereich verläuft bevorzugt in einem Bereich der Seitenwand, in dem die Dachkante des Fahrzeugdaches, auf den die Dachbox montiert ist, im Wesentlichen geradlinig verläuft. Die Dachkante kann im Bereich des hinteren Bereiches ebenfalls im Wesentlichen geradlinig verlaufen oder von hinten nach vorne betrachtet nach innen gekrümmt verlaufen. Dies hängt von der Form des Fahrzeugdaches des jeweiligen Kraftfahrzeugmodells ab. In dem im Wesentlichen geradlinig verlaufenden Bereich des mittleren Bereiches der Seitenwand ist es daher zweckmäßig, dass dort sowohl das erste Seitenwandsegment als auch das zweite Seitenwandsegment angeordnet sind, da diese aufgrund der geradlinigen Ausbildung in Bezug auf ihre Flächen keine oder nur eine geringe Krümmung aufweisen und so im zusammengefalteten Zustand der Dachbox ohne Weiteres aufeinander gefaltet sein können, ohne dass ein übermäßig hoher Raumbedarf entsteht. Weist der hintere Bereich der Seitenwand bzw. die Dachform in diesem Bereich eine Krümmung auf, ist es zweckmäßig, dass dort ebenfalls nur das erste Seitenwandsegment angeordnet ist, bzw. dieses erste Seitenwandsegment alleine diesen hinteren Bereich der Seitenwand bildet. Hier ergeben sich dieselben Vorteile wie vorstehend in Bezug auf den vorderen Bereich der Seitenwand dargestellt.

Insbesondere ist es zweckmäßig, dass das zweite Seitenwandsegment, welches bevorzugt im mittleren und/oder auch im hinteren Bereich der Seitenwand, besonders bevorzugt ausschließlich im mittleren Bereich der Seitenwand, angeordnet ist, die Form eines Vielecks mit mindestens drei, bevorzugt vier Ecken aufweist. Insbesondere kann es bevorzugt sein, dass das zweite Seitenwandsegment die Form eines Trapezes aufweist. Eine der Kanten des als Vieleck ausgebildeten zweiten Seitenwandsegmentes bildet ferner einen Teilbereich einer Unterkante der Seitenwand. Alternativ ist es auch möglich, dass eine Kante des Seitenwandsegmentes einen Teilbereich einer Oberkante der Seitenwand bildet. Alle übrigen Kanten des als Vieleck ausgebildeten zweiten Seitenwandsegmentes liegen im ausgefahrenen Zustand der Dachbox bevorzugt an dem ersten Seitenwandsegment an bzw. grenzen an diesem an. Diese Ausführungsform ist insbesondere dann zweckmäßig, wenn das zweite Seitenwandsegment ausschließlich im mittleren Bereich der Seitenwand angeordnet ist. Die in einer Draufsicht auf die Seitenwand betrachtet rechts und links neben dem mittleren Bereich angeordneten vorderen und hinteren Bereiche der Seitenwand werden ausschließlich vom ersten Seitenwandsegment gebildet, so dass die Kanten des zweiten Seitenwandsegmentes in diesen Bereichen an dem ersten Seitenwandsegment angrenzen. Ebenso wird ein Bereich über oder unter dem zweiten Seitenwandsegment von einem ersten Seitenwandsegment gebildet, so dass hier die Kanten der beiden Segmente ebenfalls aneinander angrenzen. Hierdurch ergibt sich für eine Vielzahl von Dachformen von bekannten Kraftfahrzeugen eine optimale Ausbildung der Seitenwandsegmente im Hinblick auf einen möglichst flachen eingefalteten bzw. eingefahrenen Zustand der Dachbox.

In einer weiteren bevorzugten Ausführungsform sind die Schwenkmittel derart ausgebildet, dass sie zusätzlich zur Schwenkbewegung ferner eine translatorische Bewegung zwischen den Wandungselementen bzw. den Wandungsegmenten, die sie miteinander verbinden, erlauben bzw. ermöglichen. Insbesondere ist es bevorzugt, dass die translatorische Bewegung in Richtung der Schwenkachse der Schwenkmittel erfolgt. Die zusätzliche, translatorische Funktionalität kann entweder durch eine entsprechende Ausbildung der Schwenkmittel oder durch eine Vorsehung ausreichenden Spiels innerhalb der Schwenkmittel erfolgen. Sind die Schwenkmittel beispielsweise als Scharnier ausgebildet, kann zwischen den Buchsen der beiden Scharnierteile ein Spiel vorgesehen sein, welches eine translatorische Bewegung der beiden mittels des Scharnieres verbundenen Wandungselemente entlang der Schwenkachse des Scharnieres erlaubt. Ferner sind weitere geeignete Lager möglich, die sowohl eine Längs- als auch eine Dreh- bzw. Schwenkbewegung zu lassen, beispielsweise Gleitdrehlager. Besonders bevorzugt ist es bei dieser Ausführungsform, dass insbesondere die Schwenkmittel zwischen Seitenwänden und Deckenelement in der vorgeschriebenen Weise ausgebildet sind und eine zusätzliche translatorische Bewegung erlauben. In diesem Fall sind die Seitenwände entlang ihrer oberen Kanten gegenüber dem Deckenelement verschieblich ausgebildet. Dies ist vorteilhaft, damit sich das Deckenelement im Verhältnis zu den Seitenwänden beim Zusammenfalten der Dachbox nach hinten bewegen kann, um Verspannungen der Dachbox zu vermeiden.

In einem weiteren bevorzugten Ausführungsbeispiel ist für die Dachbox ein (unterer) Rahmen vorgesehen, der bevorzugt mindestens eine, besonders bevorzugt zwei Querträger und zwei Längsträger umfasst. Der Rahmen ist zweckmäßigerweise durch mindestens ein Schwenkmittel mit der Rückwand oder durch jeweils mindestens ein Schwenkmittel mit den beiden Seitenwänden verbunden. Das Deckenelement ist ferner zweckmäßigerweise, bevorzugt durch mindestens ein vorderes Deckenelementscharnier, mit dem Rahmen verbunden. Der Rahmen ist vorteilhafterweise durch mindestens ein Schwenkmittel mit dem Bodenelement verbunden und kann so zusammen mit den Seitenwänden, der Rückwand und dem Deckenelement nach oben oder nach unten geklappt werden, um die Dachbox zu öffnen oder zu schließen. Der Rahmen, die Rückwand, das Deckenelement und die Seitenwände bilden so zusammen ein Oberteil, das einen Deckel für die Dachbox bildet und gegenüber einem Unterteil, welches beispielsweise vom Bodenelement gebildet ist, im ausgefahrenen Zustand der Dachbox verschwenkbar ist, wodurch die Dachbox geöffnet und geschlossen werden kann. Alternativ kann der Rahmen auch zusammen mit der Rückwand, den Seitenwänden und dem Bodenelement ein Unterteil bilden, wobei dann in ähnlicher Weise das Deckenelement (welches dann alleine das Oberteil bildet) gegenüber dem Unterteil zum Öffnen und Schließen der Dachbox verschwenkbar ausgebildet ist. Auch ist es möglich, dass nur ein oder mehrere Deckensegmente zum Hochschwenken nach oben und somit zum Öffnen der Dachbox ausgebildet sind. Hierbei würde dann nur ein Teilbereich des Deckenelements einen Deckel für die Dachbox bilden.

Zweckmäßigerweise kann ferner eine Hebevorrichtung vorgesehen sein, mit der das Oberteil zum Beladen der Dachbox geöffnet und anschließend wieder geschlossen werden kann. Insofern ist das Oberteil mittels der Hebevorrichtung zwischen einer offen-Position und einer geschlossen-Position der Dachbox bewegbar. Die Hebevorrichtung kann beispielsweise als Hubvorrichtung ausgebildet sein, wobei diese dann geeignete Hubzylinder und dergleichen umfasst. Alternativ kann die Hebevorrichtung auch als manuelle Hebevorrichtung ausgebildet sein und ein manuelles Öffnen und Schließen des Oberteils möglich machen. Hierfür sind entsprechende Griffe, Halterungen und/oder Verschlusseinrichtungen vorzusehen. Ferner können Feststellmittel vorgesehen sein, mit denen das Oberteil in der geöffneten Position festgestellt wird und erst wieder in die geschlossene Position gebracht werden kann, wenn die Feststellmittel gelöst werden. Das Oberteil kann mittels Schwenkmitteln mit dem Unterteil bzw. dem Bodenelement, welches häufig das Unterteil bildet, verbunden und um eine Schwenkachse schwenkbar sein. Es ist ferner zweckmäßig zwischen dem Oberteil und dem Unterteil eine Dichtung vorzusehen. Die Vorsehung der Hebevorrichtung ist insbesondere dann zweckmäßig, wenn das Oberteil seitlich verschwenkbar bzw. öffenbar sein soll, da dann die Hebevorrichtung das Verschwenken des Oberteils um einen vorstehenden Rand des Bodenelementes gegenüber einem manuellen Verschwenken erleichtert bzw. verbessert.

Um ein unbefugtes Öffnen der Dachbox zu verhindern, ist es ferner zweckmäßig, Verschlussmittel zum Verschließen der Dachbox in der geschlossen-Position vorzusehen. Hiermit kann insbesondere ein nicht gewolltes Öffnen des Oberteils (Deckels) der Dachbox vermieden werden. Grundsätzlich kann das Verschlussmittel als separates Bauteil ausgebildet sein. Bevorzugt ist es jedoch auch möglich, dass ein Schwenkmittel die zusätzliche Funktionalität des Verschließens mit ausführen kann und dadurch gleichzeitig das Verschlussmittel bildet. Hierbei handelt es sich insbesondere um dasjenige Schwenkmittel, welches zum Verschwenken des Oberteils ausgebildet ist.

Ferner ist es zweckmäßig, wenn das Oberteil ein Innenvolumen von mindestens 40%, bevorzugt mindestens 60%, besonders bevorzugt mindestens 80% des Gesamtinnenvolumens der Dachbox aufweist. Grundsätzlich können für das Oberteil auch noch größere Innenvolumen wie mindestens 85%, mindestens 90% oder mindestens 95% des Gesamtinnenvolumens der Dachbox erreicht werden. Eine solche Ausführung ist bevorzugt, da dann im geöffneten Zustand beim Unterteil im Wesentlichen kein oder nur ein relativ niedriger umlaufender, nach oben vorstehender Rand oder dergleichen verbleibt und das Unterteil im Wesentlichen durchgehend eben ausgebildet ist. Hierdurch ist die Dachbox für einen Benutzer bequemer be- und entladbar, da Gegenstände nicht höher als das relativ flache Unterteil gehoben werden müssen. Das Innenvolumen des Oberteils wird von einer imaginären Linie bzw. Ebene eingeschlossen, die am unteren Rand des Oberteils anliegt. Alternativ kann es aus den vorgenannten Gründen zweckmäßig sein, dass das Oberteil eine Höhe von mindestens 50%, bevorzugt mindestens 65%, besonders bevorzugt mindestens 80% der Gesamthöhe der Dachbox aufweist. Die vorgenannten Prozentangaben werden dabei zweckmäßigerweise im ausgefahrenen Zustand der Dachbox bestimmt.

Beide Seitenwände verjüngen sich zur Vorderseite der Dachbox hin, d.h. nach vorne hin, in der Höhe und bilden auf diese Weise mit dem darauf angeordneten, entsprechend der jeweiligen Dachform des Kraftfahrzeugs gekrümmten Deckenelement eine etwa keilförmige, aerodynamische Form aus, wodurch sich selbst im ausgefahrenen Zustand ein relativ günstiger Luftwiderstand der Dachbox ergibt. Diese aerodynamische Form wird insbesondere dadurch erreicht, dass sich das Deckenelement in seinem vorderen Bereich direkt an das Bodenelement anschließt und keine zusätzliche Vorderwand oder dergleichen vorgesehen ist, wie dies beispielsweise bei herkömmlichen, separat auf dem Fahrzeugdach zum montierenden Dachboxen der Fall ist. Vielmehr verläuft das Deckenelement von seinen Verbindungspunkt mit dem Bodenelement aus schräg nach hinten weg, so dass insgesamt eine aerodynamische Form erreicht wird.

In einer weiteren bevorzugten Ausführungsform der Erfindung umfassen die Volumenänderungsmittel Verformungsmittel zur reversiblen, d.h. wiederholbaren, Formänderung eines Wandungselementes bzw. eines Teilbereichs eines Wandungselementes. Die Verformungsmittel können insbesondere im bzw. am jeweiligen zu verformenden Wandungselement bzw. Teilbereich vorgesehen sein. Insbesondere ist dieses Wandungselement bzw. dieser Teilbereich zwischen einem ersten vorgegebenen Verformungszustand, der einem eingefahrenen Zustand der Dachbox entspricht, und einem zweitem Verformungszustand, der einem ausgefahrenen Zustand der Dachbox entspricht, verformbar, so dass das Wandungselement bzw. der Teilbereich vom ersten Verformungszustand in den zweiten Verformungszustand und umgekehrt gebracht werden kann. Zur Auslösung der Formänderungen ist ferner eine Aktivierungseinrichtung vorgesehen. Hierdurch können das Wandungselement bzw. der Teilbereich bzw. die Verformungsmittel gezielt angesteuert werden, um zum jeweils gewünschten Zeitpunkt eine Formänderung bzw. einen gewünschten Verformungszustand zu erreichen. Insbesondere kann es bei dieser Ausführungsform zweckmäßig sein, dass keine zusätzlichen Schwenkmittel vorgesehen sind. Bei dieser Ausführungsform kann es ferner ausreichend sein, dass nur ein einziges Wandungselement verformbar ausgebildet ist, um die Dachbox von einem eingefahrenen Zustand in einen ausgefahrenen Zustand oder umgekehrt zu bringen. Beispielsweise können die Verformungsmittel im Deckenelement vorgesehen sein und ferner kann die gesamte Dachbox von nur einem Bodenelement und einem Deckenelement gebildet sein. Hierdurch ergibt sich ein besonders einfacher Aufbau der Dachbox. Um ein gezieltes Verformen der Dachbox zwischen dem eingefahrenen und dem ausgefahrenen Zustand sicherzustellen, kann es ferner zweckmäßig sein, an dem zu verformenden Wandungselement oder hierzu benachbarten Wandungselementen Führungsmittel vorzusehen, mittels derer das zu verformende Wandungselement während des Verformungsvorganges in der jeweils gewünschten Position gehalten wird. Das Wandungselement kann vollständig aus demselben Material ausgebildet sein. Alternativ ist eine Kompositausbildung aus verschiedenen Materialien möglich, wobei dann bevorzugt der Teilbereich aus einem anderen Material ausgebildet ist als der Rest des Wandungselementes.

Insbesondere ist es bei dieser Ausführungsform bevorzugt, dass das zu verformende Wandungselement bzw. der zu verformende Teilbereich des Wandungselements Formgedächtnis-Legierungen oder Formgedächtnis-Polymere aufweist. Diese Materialien können sich durch Zuführung von Energie aktiv in vorherbestimmte Zustände verformen und anschließend wieder in den Ursprungszustand rückverformen. Solche Materialien werden allgemein auch als "mechanisch aktive Materialien" bezeichnet. Durch Hinzuführung von (thermischer) Energie können diese von einem Ursprungszustand in einen Verformungszustand überführt werden. Es ist grundsätzlich auch möglich, dass das Wandungselement Zwischenzustände, in Abhängigkeit der Höhe der zugeführten Energie, annimmt.

Alternativ kann das Wandungselement oder der Teilbereich des Wandungselementes dehnbares Material, insbesondere einen, bevorzugt wasserfesten, Stretch-Stoff, umfassen, wobei die Verformungsmittel dann derart auszubilden sind, dass sie das Wandungselement bzw. den Teilbereich des Wandungselements von einen ungedehnten in einen gedehnten Zustand und umgekehrt versetzen können. Mit anderen Worten bringen die Verformungsmittel, um einen gedehnten Zustand zu erreichen, eine Kraft auf das dehnbare Material auf, so dass eine Ausdehnung erfolgt. Durch die Ausdehnung entsteht innerhalb der Dachbox ein Laderaum, der dann mit Transpostgut befüllt werden kann. Es kann ferner zweckmäßig sein, das Wandungselement oder den Teilbereich des Wandungselementes mehrlagig auszuführen, wobei dann bevorzugt die äußere Lage von dem dehnbaren Material gebildet wird. Die innere Lage kann von einem anderen, bevorzugt stabilen und/oder flexiblen, Material gebildet sein, um eine ausreichende Stabilität der Dachbox, trotz der Verwendung von dehnbaren Material, sicherzustellen. Im eingefahrenen Zustand kann die innere Lage zusammengefaltet sein und die äußere Lage aus dehnbaren Material liegt stramm auf der inneren Lage auf, so dass sich optisch eine glatte Oberfläche der Dachbox ergibt. Im ausgefahrenen Zustand der Dachbox wird die äußere Lage gedehnt und die innere Lage auseinandergefaltet, so dass sich ein beladbarer Innenraum einstellt. Auch in diesem Zustand ergibt sich eine glatte Außenoberfläche der Dachbox.

Ferner kann es bei dieser Ausführungsform zweckmäßig sein, im Wandungselement bzw. im Teilbereich des Wandungselements eine oder mehrere Soll-Biegelinien ober Soll-Biegestellen vorzusehen, in deren Bereichen die Formänderung, d.h. eine Biegung des Materials des Wandungselements bzw. des Teilbereichs des Wandungselements, erfolgt. In den übrigen Bereichen des Wandungselements, die außerhalb des Einflussbereiches der Soll-Biegestellen bzw. Soll-Biegelinien liegen, erfolgt keine Biegung. Entsprechend muss hier nicht zwingend biegbares Material verwendet werden, vielmehr ist die Verwendung von normalem Karosserieblech, herkömmlichen Metallplatten, etc. möglich. Hierdurch kann auf einfache Weise eine gezielte Verformung vorgegeben und beliebig oft wiederholt werden. Ferner kann es zweckmäßig sein, dass das Wandungselement von hinten nach vorne in Längsrichtung der Dachbox betrachtet an Steifigkeit zunimmt. Dies kann durch unterschiedliche Materialdicken, die Verwendung unterschiedlicher Materialien in unterschiedlichen Bereichen des Wandungselementes, etc. erreicht werden. Dies ist insbesondere in solchen Fällen zweckmäßig, in denen der Grad der Biegung des Wandungselementes von hinten nach vorne in Längsrichtung der Dachbox betrachtet abnimmt.

Bei dieser Ausführungsform ist es ferner besonders bevorzugt, dass die Verformungsmittel eines oder mehrere Piezoelemente umfassen. Die Piezoelemente sind bevorzugt in das mindestens eine, zu verformen Wandungselement integriert angeordnet. Die Aktivierungseinrichtung umfasst zweckmäßigerweise Stromgeber, die mit den Piezoelemente elektrisch verbunden sind, um die Piezoelemente aktivieren bzw. deaktivieren zu können und so das Wandungselement in verschiedene Verformungszustände zu versetzen. Auch können die Verformungsmittel elektrische Kontakte umfassen, mittels denen ein Strom auf das Wandungselement bzw. auf in das Wandungselement eingelassene Heizmittel, wie Heizdrähte, gegeben werden kann, um so dem Wandungselement (thermische) Energie zuzuführen. Dies ist insbesondere bei mechanisch aktiven bzw. bei Formgedächtnis-Materialen zweckmäßig. Eine andere Möglichkeit zur Ausbildung der Aktivierungsmittel ist die Vorsehung mechanischer Verstellmittel, wie Hubzylinder, Teleskopstangen, verschwenkbare Gestänge, u. dgl. Eine solche Ausführungsform ist insbesondere bei der Verwendung von dehnbarem Material bevorzugt.

In einer weiteren bevorzugten Ausführungsform weist das Bodenelement eine umlaufende Bodenwandung auf, die im Sinne eines umlaufenden Rahmens umlaufend am Rand des Bodenelementes angeordnet ist und nach oben vorsteht. Die Höhe der Bodenwandung kann insbesondere derart bemessen sein, dass die Dachbox im eingefahrenen Zustand im von der Bodenwandung umschlossenen Raum zusammengeklappt bzw. zusammengefaltet werden kann, so dass sich nach oben hin eine bündige Abschlussfläche ergibt. Ferner wird durch die Bodenwandung im ausgefahrenen und geöffneten Zustand der Dachbox ein Abschlussrand geschaffen, durch den verhindert wird, dass in der Dachbox gelagerte Gegenstände ungewollt aus der Dachbox rutschen können oder dergleichen.

In einer weiteren bevorzugten Ausführungsform umfassen die Volumenänderungsmittel Verschiebemittel, wobei hierdurch einzelne Wandungselemente gegeneinander verschiebbar sind. Insbesondere können hierdurch im eingefahrenen Zustand einige Wandungselemente oder Segmente von Wandungselemente unter anderem Wandungselemente verschoben sein, wodurch sich ein besonders kompakter und Platz sparender Aufbau ergibt. Dies liegt insbesondere hierin begründet, dass die Flächen der Wandungen, wenn diese an die Grundform der Dachfläche angepasst sind, häufig gekrümmte und nicht ebene Flächen bilden. Je nach Dachform kann es vorteilhaft sein, zwei Wandungen oder auch Wandungsabschnitte, deren Flächen in ähnlicher Richtung und Stärke gekrümmt sind, gegeneinander so zu verschieben, dass einen Fläche über der anderen liegt, da dann die Krümmung der einen Flächen in die Krümmung der anderen Fläche eingreifen kann und so die Dachbox im eingefahrenen Zustand möglichst flach ist. Die Rückwand ist bevorzugt unter das Deckenelement, insbesondere unter dessen hinteres Deckensegment, verschiebbar ausgebildet. Dies kann insbesondere bei der Integration der Dachbox in Coupes und ähnlichen Kraftfahrzeugformen vorteilhaft sein. Die Verschiebemittel können dabei jede aus dem Stand der Technik bekannte und für den vorliegenden Zweck geeignete Einrichtung umfassen, beispielsweise Führungsschienen, Anschläge und dergleichen. Ferner können die Verschiebemittel mit den Schwenkmitteln kombiniert werden, so dass eine einzelne Einrichtung sowohl eine Verschiebefunktion als auch eine Schwenkfunktion aufweist.

In einer weiteren bevorzugten Ausführungsform sind Stützelemente vorgesehen, die an einem oder mehreren der Wandungselemente angeordnet sind. Mithilfe dieser Stützelemente können die Wandungselemente im ausgefahrenen Zustand der Dachbox gegeneinander abgestützt werden, so dass sich ein verstärkter Aufbau ergibt. An einem Wandungselement vorgesehene Stützmittel sind insbesondere zur Stützung von zu diesem einen Wandungselement benachbarten Wandungselementen ausgebildet. Die Stützelemente können beispielsweise als Winkel, abgebogene Blechabschnitte der Wandungselemente, etc. ausgebildet sein. Ferner ist es bevorzugt, dass die Stützelemente gleichzeitig einen Anschlag für die Wandungselemente beim Verschwenken bieten.

Zweckmäßigerweise sind ferner Arretiermittel vorgesehen, mit denen die einzelnen Wandungselemente im eingefahrenen und/oder ausgefahrenen Zustand der Dachbox in einer jeweilig vorgesehenen Position arretierbar sind. Hierdurch wird verhindert, dass einzelne Wandungselemente ungewollt verschwenken oder sich anderweitig bewegen. Besonders bevorzugt sind die Arretiermittel an den Stützelementen angeordnet, insbesondere wenn diese in Form von Winkeln ausgeführt sind. Beispielsweise können die Arretiermittel Elektromagneten, elektromagnetisch verschiebbare Riegel und dergleichen umfassen.

In einer weiteren bevorzugten Ausführungsform sind im Innenraum der Dachbox Mittel zum Lagefixieren von zu transportierenden Gegenständen vorgesehen. Hierdurch wird gewährleistet, dass ein Verrutschen der Ladung während des Transportes nicht erfolgt. Diese Mittel zum Lagefixieren können beispielsweise mit Gas, insbesondere Luft, gefüllte Kissen, Halterungen oder entsprechend der Ladung geformte Polsterungen sein. Die Mittel zum Lagefixieren und insbesondere die Gaskissen, können Ausnehmungen, Aussparungen oder sonstige Aufnahmen für bestimmte Gegenstände aufweisen. Beispielsweise kann ein auf dem Bodenelement flächig angeordnetes Gaskissen Ausnehmungen für Ski oder dergleichen aufweisen. Das Gaskissen kann mehrere Kammern umfassen, die über entsprechende Ventile und eine Steuereinrichtung wahlweise ansteuerbar sind. So können zu einem gegebenen Zeitpunkt nur bestimmte Bereiche des Gaskissens aufgepumpt oder entleert werden Hierdurch kann das Gaskissen zur Aufnahme verschiedener Gegenstände adaptiert bzw. angepasst werden.

In einer weiteren bevorzugten Ausführungsform sind ein oder mehrere Sensorelemente zum Ermitteln eines eingefahrenen oder ausgefahrenen Zustandes der Dachbox und/oder zum Ermitteln der Position (offen-Position oder geschlossen-Position) der Dachbox, und/oder zum Ermitteln des Befüllungszustandes der Dachbox vorgesehen. Alternativ oder zusätzlich können Beleuchtungsmittel zur Ausleuchtung des Innenraums der Dachbox vorgesehen sein, wobei die Beleuchtungsmittel bevorzugt auf Basis eines ausgewerteten Signals bzw. eines Inputs des Sensorelements angesteuert werden. So können beispielsweise die Beleuchtungsmittel angesteuert werden, wenn eine Steuereinrichtung, die mit dem Sensor und mit dem Beleuchtungsmittel verbunden ist, mittels des Sensorelementes erkannt hat, dass sich die Dachbox in einer offen-Position befindet.

In einer weiteren bevorzugten Ausführungsform ist mindestens ein Wandungselement und/oder mindestens ein Segment eines Wandungselementes im Wesentlichen transparent ausgebildet. Diese transparente Ausbildung kann insbesondere dann gewünscht sein, wenn vom Benutzer des Kraftfahrzeuges gewünscht ist, dass Licht von oben durch das transparente Wandungselement bzw. das Segment des transparenten Wandungselements ins Innere des Kraftfahrzeuges eindringt. Zur Herstellung einer transparenten Ausbildung des Wandungselementes bzw. des Segments des Wandungselements kann insbesondere Glas verwendet werden. Des Weiteren können bevorzugt Farbzustandsänderungsmittel zur Änderung des Farbzustandes des mindestens einen Wandungselementes und/oder des mindestens einem Segmentes eines Wandungselementes vorgesehen sein. Mithilfe der Farbzustandsänderungsmittel kann das mindestens eine Wandungselement und/oder das mindestens eine Segment eines Wandungselementes von dem transparenten Zustand in einen farbigen Zustand und umgekehrt versetzt werden. Insbesondere ist es zweckmäßig, dass die Farbzustandsänderungsmittel in dem mindestens einen Wandungselement und/oder in dem mindestens einen Segment eines Wandungselementes vorgesehen sind. Hierbei kann es sich beispielsweise um Thermo-Lacke oder dergleichen handeln.

Ferner ist es bei Vorsehung eines transparenten Wandungsegmentes im Bodenelement und/oder im Deckenelement der Dachbox zweckmäßig, dass bei Vorsehung des transparenten Wandungssegments im Bodenelement bevorzugt im Deckenelement eine komplementäre Öffnung vorgesehen ist, die besonders bevorzugt Abdeckmittel umfasst, oder dass bei Vorsehung des transparenten Wandungssegments im Deckenelement bevorzugt im Bodenelement eine komplementäre Öffnung vorgesehen ist, die besonders bevorzugt Abdeckmittel umfasst. Die Abdeckmittel sind vorteilhaft derart stabil ausgebildet, dass sie zur Aufnahme von zu transportierenden Gegenständen geeignet sind, wobei die Abdeckmittel insbesondere Abstützmittel, bevorzugt ein Stützgestänge und/oder Stützlamellen, aufweisen.

Weiterhin ist es bevorzugt, dass die Grundfläche des Bodenelements kein Polygon und insbesondere kein Rechteck bildet und/oder dass die Form der Grundfläche des Bodenelements der Form der Dachfläche des jeweiligen Fahrzeugs entspricht, an dem die Dachbox zu installieren ist. Bei herkömmlichen, aus dem Stand der Technik bekannten Dachboxen ist die Grundfläche des Bodenelements in der Regel rechteckig ausgebildet. Die Dachfläche von modernen Kraftfahrzeugen sind in der Draufsicht betrachtet jedoch normalerweise nicht rechteckig ausgebildet, sondern die Seitenkanten der Dachflächen weisen vielmehr Krümmungen auf. Insbesondere verbreitert sich die Dachfläche häufig nach vorne hin, wobei der vordere Bereich der Seitenkanten der Dachflächen dann unter einem Krümmungsradius nach außen verläuft. Insofern nutzen Dachboxen mit rechteckiger Grundfläche zum einen die Dachfläche nicht optimal aus und zum anderen setzen sie sich optisch deutlich von der nicht rechteckigen Grundfläche des Daches ab, so dass optisch kein integratives Gesamtbild entsteht. Mit der vorliegenden Ausführungsform werden diese Nachteile nunmehr beseitigt. Die Grundfläche des Bodenelements weist bevorzugt mindestens eine gekrümmte Seitenkante auf, wobei besonders bevorzugt mehrere oder auch alle Seitenkannten gekrümmt verlaufen können. Hierdurch wird jeweils bezogen auf die Dachfläche ein maximaler Raum für die in ihrem Volumen veränderbare Dachbox geschaffen und es entsteht ein integratives Gesamtbild, insbesondere in dem Fall, wenn die Grundfläche des Bodenelements die Form der Dachfläche annimmt. Besonders bevorzugt ist es hierbei, wenn die Grundfläche des Bodenelements bzgl. ihrer Dimensionen denen der Dachfläche im Wesentlichen entspricht.

In einer weiteren bevorzugten Ausführungsform weisen die Volumenänderungsmittel mindestens ein Gestänge, insbesondere mindestens einen Drehbügel, auf, wobei das Gestänge zum Verfahren der Dachbox zwischen dem eingefahrenen Zustand und dem ausgefahrenen Zustand, und zweckmäßigerweise auch umgekehrt, ausgebildet ist. Ein Drehbügel weist vorzugsweise an seinen beiden Enden Gelenke auf, mit denen dieser zweckmäßigerweise am Bodenelement der Dachbox befestigt ist. Insbesondere kann das mindestens eine Gestänge in Querrichtung zur Dachbox bzw. zum Kraftfahrzeug angeordnet sein. Im eingefahrenen Zustand liegt der Bügel flach auf dem Dach bzw. dem Bodenelement der Dachbox auf. Zum Herstellen eines ausgefahrenen Zustandes der Dachbox wird der Bügel um seine beiden Gelenke hochgeschwenkt, beispielsweise um einen Winkel von 60° bis 120°, bevorzugt 70° bis 100°. Durch das Verschwenken des Gestänges bzw. des Drehbügels werden über dem Gestänge angeordnete Wandungselemente, wie beispielsweise Deckenelemente oder auch Seitenwände, aufgestellt und die Dachbox entfaltet sich. In einer besonders bevorzugten Ausführungsform ist das Deckenelement dreiteilig ausgebildet und die Dachbox weist ferner eine Rückwand, zwei Seitenwände und ein Bodenelement auf. Im aufgestellten Zustand der Drehbügel sind diese jeweils im Wesentlichen parallel ausgerichtet zu den Fügestellen zwischen den beiden äußeren und dem mittleren Deckensegmenten und liegen an diesen Fügestellen an der Innenseite des Deckenelementes an. Die Seitenwände sind dabei bevorzugt jeweils einteilig bzw. einstückig ausgebildet und sind nur als Ganzes gegenüber dem Bodenelement verschwenkbar. Insbesondere übergreifen die Seitenwände in einem Randbereich das Deckenelement mit einem Flanschabschnitt oder dergleichen und werden beim Hochschwenken des Gestänges durch das daraus resultierende Hochschwenken des Deckenelementes mit aufgestellt. Insbesondere müssen die Seitenwände im ausgefahrenen Zustand der Dachbox nicht vertikal ausgerichtet sein, sondern sind im ausgefahrenen Zustand der Dachbox bevorzugt leicht schräg zu einer Vertikalen gestellt. Ferner ist es zweckmäßig, dass an dem Gestänge Rastmittel vorgesehen sind, die in korrespondierende Gegenstücke an den Wandungselementen in einem ausgefahrenen Zustand der Dachbox einrasten, um so eine stabile Dachbox im ausgefahrenen Zustand zu erhalten. Insbesondere können die Rasten durch vom Gestänge vorstehende Vorsprünge oder dergleichen gebildet sein, die in entsprechende Vertiefungen in den Wandungselementen einrasten. Die Kanten können zusätzlich einen Rahmen umfassen, der zusammen mit der Rückwand, dem Deckenelement und den Seitenwänden ein Oberteil bildet, wobei die vorgenannten Wandungselemente allesamt an den Rahmen angrenzen und/oder mit diesem, insbesondere schwenkbar, verbunden sind. Das mindestens eine Gestänge kann dann am Rahmen anstelle des Bodenelementes schwenkbar gelagert sein. Das von Rahmen, Seitenwänden, Rückwand und Deckenelement gebildete Oberteil kann im ausgefahrenen Zustand der Dachbox gegenüber dem Bodenelement zum Öffnen der Dachbox verschwenkt werden.

Weiterhin ist es zweckmäßig, wenn zwischen mindestens zwei gegeneinander bewegbaren und benachbart zueinander angeordneten Bauteilen der Dachbox, insbesondere zwischen benachbarten Wandungselementen und/oder zwischen benachbarten Segmenten von Wandungselementen und/oder zwischen einem Rahmen und einem Wandungselement, ein Dichtelement vorgesehen ist, wobei das Dichtelement bevorzugt in einem Überlappungsbereich der beiden Bauteile der Dachbox angeordnet ist. Hierdurch wird das Eindringen von Feuchtigkeit, Staub und sonstigen unerwünschten Partikeln ins Innere der Dachbox vermieden. Zur Herstellung einer Überlappung zwischen zwei Bauteilen ist es zweckmäßig, bei einem der beiden Bauteile im Überlappungsbereich eine Einziehung oder einen sonstigen abgebogenen oder abgekanteten Bereich vorzusehen, umso die Überlappung herzustellen. Das Dichtelement ist dann zwischen den zwei sich überlappenden Abschnitten der beiden Bauteile anzuordnen.

Die der Erfindung zugrunde liegende Aufgabe wird ferner durch ein Dach eines Kraftfahrzeuges gelöst, wobei in das Dach eine vorbeschriebene Dachbox integriert angeordnet ist. Bevorzugt kann ein solches Dach ferner eine Dachvertiefung zur Aufnahme der Dachbox aufweisen. Die Dachvertiefung ist zweckmäßigerweise derart gestaltet, dass die Dachbox im eingefahrenen Zustand mit einer oberen Abschlussfläche bündig mit dem nicht vertieften Teil des Daches abschließt.

Zweckmäßigerweise ist die Dachbox derart ausgebildet, dass sie mindestens 80%, bevorzugt mindestens 90%, besonders bevorzugt mindestens 95%, am bevorzugtesten 100% der gesamten Dachfläche des Daches des Kraftfahrzeuges abdeckt. Hierdurch kann eine optimale Raumgewinnung für eine möglichst große Staufläche und eine optisch ansprechende Integration der Dachbox in das Dach erfolgen. Die Abdeckung in den angegebenen Prozentbereichen kann auf den eingefahrenen oder auch den ausgefahrenen Zustand der Dachbox zutreffen. Beide Möglichkeiten sind hiermit ausdrücklich bei dieser Ausführungsform einbezogen. Hierbei ist es auch ausreichend, dass die vorgegebene Fläche nur von einem der Wandungselemente abgedeckt wird.

In einer weiteren bevorzugten Ausführungsform ist das Kraftfahrzeugdach als Dach eines als Coupe oder als Sportwagen ausgebildeten Kraftfahrzeuges oder eines Kraftfahrzeuges mit Fließheck ausgebildet. Insbesondere im Bereich des Hecks bzw. des Fließhecks weist das Dach eine Führung auf, entlang derer die Dachbox verfahrbar ist. Hierdurch ist es möglich, die Dachbox im ausgefahrenen oder auch eingefahrenen Zustand von einer Fahrposition im oberen Bereich des Daches zu einer Ladeposition weiter unterhalb und näher am Heck des Kraftfahrzeuges zu verfahren. Hierdurch wird die Beladung der Dachbox für einen Benutzer in der Ladeposition bequemer als in der Fahrposition, bei welcher sich die Dachbox an der höchsten Stelle des Daches des Kraftfahrzeuges befindet. Insbesondere weist die Führung hierfür ein oder mehrere Schienen auf, die jeweils Profilierungen, vorteilhafterweise in Form von Nuten oder dergleichen, umfassen, wobei an der Dachbox Profilierungs-Gegenstücke, zum, insbesondere formschlüssigen, Eingriff in die Profilierungen der Schienen ausgebildet sind. Ferner können bevorzugt entsprechende Antriebe oder dergleichen zum automatischen Verfahren der Dachbox vorgesehen sein.

Ferner wird die der Erfindung zugrunde liegende Aufgabe durch ein Kraftfahrzeug gelöst, welches ein Dach mit einer darin integriert angeordneten Dachbox aufweist, wobei die Dachbox wie vorbeschrieben ausgebildet ist.

Bevorzugte Ausführungsformen der Erfindung werden unter Bezugnahme auf die Zeichnung beispielhaft beschrieben, wobei weitere vorteilhafte Einzelheiten den Figuren der Zeichnung zu entnehmen sind.

Funktionsmäßig gleiche Teile sind dabei mit denselben Bezugszeichen versehen. Die Figuren der Zeichnung zeigen schematisch:
- Figur 1: eine perspektivische Explosionsdarstellung der Dachbox in einer Vorderansicht;
- Figur 2: eine perspektivische Explosionsdarstellung der Dachbox in einer Rückansicht;
- Figur 3: eine perspektivische Vorderansicht der Dachbox;
- Figur 4: eine perspektivische Vorderansicht der Dachbox im geöffneten Zustand;
- Figur 5: eine perspektivische Rückansicht der Dachbox mit teilweise eingeklappter Rückwand;
- Figur 6: eine perspektivische Vorderansicht der Dachbox im teilweise zusammengefalteten Zustand;
- Figur 7: eine perspektivische Ansicht einer weiteren Ausführungsform der Dachbox;
- Figur 8: eine perspektivische Vorderansicht einer weiteren Ausführungsform der Dachbox im geöffneten Zustand;
- Figur 9: eine perspektivische Ansicht des Bodenelements mit Hubvorrichtung (für ein seitliches Öffnen der Dachbox);
- Figur 10: eine perspektivische Rückansicht das Deckenelements;
- Figur 11: eine perspektivische Rückansicht das Deckenelements mit teilweise ausgefahrener Rückwand;
- Figur 12: eine andere Ausführungsform des Deckenelements mit ausgeklappter Rückwand;
- Figur 13: das Deckenelement wie in Figur 12 mit eingefahrener Rückwand;
- Fig. 14a-c: eine weitere Ausführungsform der Dachbox in einer Entfaltungssequenz;
- Figur 15: eine weitere Ausführungsform einer Dachbox installiert auf einem Cabriolet im eingefahrenen Zustand;
- Figur 16: die Dachbox aus Figur 15 im teilweise ausgefahrenen Zustand;
- Figur 17: die Dachbox aus Figur 15 im teilweise ausgefahrenen Zustand;
- Figur 18: die Dachbox aus Figur 15 im vollständig ausgefahrenen Zustand;
- Figur 19: eine weitere Ansicht der Dachbox aus Figur 15 für ein Kraftfahrzeug mit Sonnendach;
- Figur 20: die Dachbox aus Figur 15 im ausgefahrenen und geöffneten Zustand;
- Figur 21: die Dachbox aus Figur 15 im ausgefahrenen und geöffneten Zustand;
- Figur 22: die Dachbox aus Figur 15 im ausgefahrenen und geöffneten Zustand, wobei das Dach des Cabriolets eingefahren ist; und
- Figur 23: die Dachbox aus Figur 15 im ausgefahrenen und geöffneten Zustand, wobei das Dach des Cabriolets eingefahren ist;
- Figur 24: eine perspektivische Darstellung eines Fahrzeugdaches mit integrierter Dachbox im eingefahrenen Zustand;
- Figur 25: die Darstellung aus Figur 24 ohne Deckenelement;
- Figur 26: die Darstellung aus Figur 5 mit hochgeklappter Rückwand;
- Figur 27: eine perspektivische Darstellung des Fahrzeugdachs aus den Figuren 24 bis 26 mit integrierter Dachbox im ausgefahrenen Zustand;
- Figur 28: eine perspektivische Seitenansicht eines Pkws mit integrierter Dachbox im eingefahrenen Zustand;
- Figur 29: die Darstellung aus Figur 28 mit der Dachbox im ausgefahrenen Zustand;
- Figur 30: die Darstellung aus den Figuren 28 und 29 mit der Dachbox im ausgefahrenen und aufgeklappten Zustand;
- Figur 31: eine perspektivische Darstellung eines Fahrzeugdaches mit einer weiteren Ausführungsform einer integrierter Dachbox im eingefahrenen Zustand;
- Figur 32: die Dachbox aus Figur 31 im ausgefahrenen und geschlossenen Zustand;
- Figur 33: die Dachbox aus Figur 31 im ausgefahrenen und geöffneten Zustand;
- Figur 34: die Ansicht aus Figur 31 ohne Deckenelement;
- Figur 35: die Ansicht aus Figur 32 ohne Deckenelement;
- Figur 36: die Ansicht aus Figur 33 ohne Deckenelement;
- Figur 37: eine weitere Ausführungsform einer Dachbox installiert auf einem Coupe im ausgefahrenen Zustand und in einer Fahrposition;
- Figur 38: die Ansicht aus Figur 37 mit der Dachbox im geöffneten Zustand und in einer Ladeposition;
- Figur 39: eine weitere Ausführungsform einer Dachbox;
- Figur 40: Rahmen der Dachbox aus Figur 42 mit Gestänge;
- Figur 41: Detailansicht eines Überlappungsbereichs zweir Wandungssegmente mit Dichtelement;
- Figur 42: Perspektivische Ansicht eines Kraftfahrzeugs mit ausgefahrener Dachbox;
- Figur 43: Perspektivische Ansicht der Dachbox aus Figur 42 im geöffneten Zustand;
- Figur 44: die Dachbox aus den Figuren 42 und 43 in einer Explosionsdarstellung;
- Figur 45: eine Ausführungsform einer Dachbox für Kraftfahrzeuge mit Sonnendach im eingefahrenen Zustand;
- Figur 46: die Dachbox aus Figur 45 im ausgefahrenen Zustand;
- Figur 47: die mittleren Deckensegmente der Dachbox aus Figur 45;
- Figur 48: Das Bodenelement der Dachbox aus Figur 45 mit Öffnung und Abdeckmittel;
- Figur 49: Fahrzeugdach mit Öffnung für die Dachbox aus Figur 45;
- Figur 50: eine weitere Ausführungsform einer Dachbox für Kraftfahrzeuge mit Sonnendach im ausgefahrenen Zustand;
- Figur 51: die Dachbox aus Figur 50 im eingefahrenen Zustand;
- Figur 52: Ansicht der zusammengeklappten Seitenwände der Dachbox aus Figur 50;
- Figur 53: Ansicht eines Stützgestänges der Dachbox aus Figur 50;
- Figur 54: das Stützgestänge aus Figur 53 in einem verfahrenen Zustand;
- Figur 55: das Stützgestänge aus Figur 53 in einem weiteren verfahrenen Zustand; und
- Figur 56: eine Detailansicht des Bodenelements der Dachbox aus Figur 50.

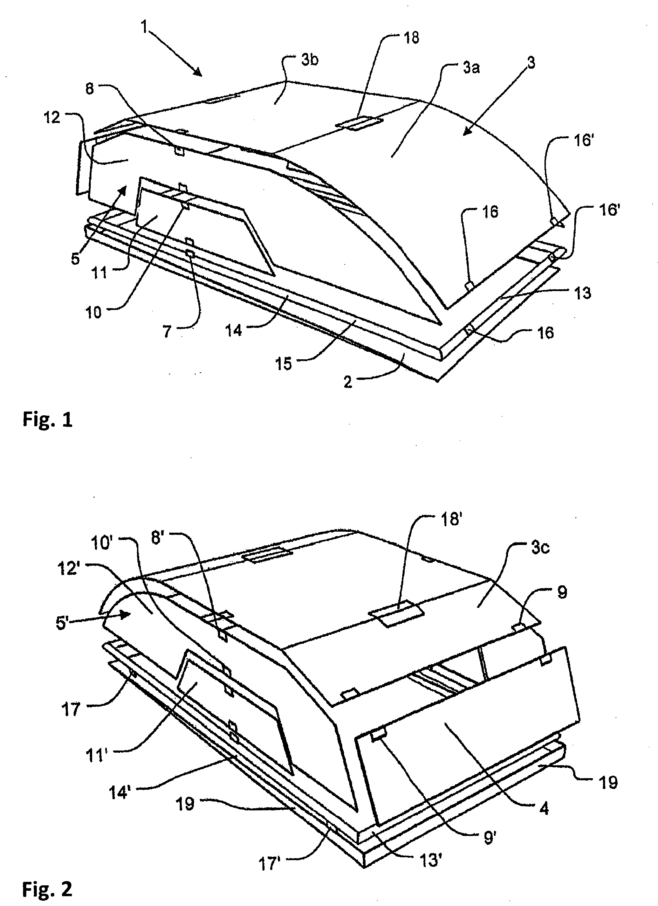

Die Figur 1 zeigt eine perspektivische Explosionsdarstellung der Dachbox 1 in einer Vorderansicht und die Figur 2 zeigt eine perspektivische Explosionsdarstellung der Dachbox 1 in einer Rückansicht. Unter Explosionsdarstellung ist zu verstehen, dass einige Elemente der Dachbox 1 aus Gründen der Anschaulichkeit "schwebend" aufeinander gezeigt sind. Bedingt durch die Explosionsdarstellung sind einige Scharniere als zwei getrennte, aufeinander schwebende Teile gezeigt, obwohl unter einem Scharnier ein Gelenk zu verstehen ist, das zwei Teile im Bereich ihrer Kanten beweglich miteinander verbindet und befestigt.

Die Dachbox 1 weist als Basis ein unteres Bodenelement 2 auf, das als eine etwa rechteckige Platte ausgebildet ist, deren ruckseitige Kante und deren beiden Seitenkanten eine Bodenwandung 19 aufweist. Um sich üblichen Formen von Fahrzeugdächern anzupassen, kann das Bodenelement 2 auch trapezförmig nach vorne hin verbreitert sein und/oder eine Krümmung aufweisen. Auf dem Bodenelement 2 ist ein etwa rechteckiger Rahmen 15 mit zwei Längsträgern 14, 14' und zwei Querträgern 13, 13' angeordnet. Die Außenabmessungen des Rahmens 15 sind etwas geringer als die Innenabmessungen der Bodenwandung 19 gewählt, so dass der Rahmen 15 innerhalb der Bodenwandung 19 auf dem Bodenelement 2 aufliegen kann. Der Rahmen 15 ist an einem Querträger 14' mit dem Bodenelement 2 durch ein vorderes 17 und ein hinteres Rahmenscharnier 17' gelenkig befestigt. Hierdurch kann der Rahmen 15 zusammen mit den auf ihm angeordneten Elementen nach oben hin aufgeklappt werden. Auf dem Rahmen 15 sind zwei Seitenwände 5, 5' angeordnet. Die beiden Seitenwände 5, 5' weisen jeweils ein unteres, ungefähr trapezförmiges Seitenwandsegment 11, 11' und ein oberes Seitenwandsegment 12, 12' auf, die durch ein Mittelscharnier 10 miteinander verbunden sind. Die unteren Seitenwandsegmente 11, 11' der Seitenwände 5, 5' sind jeweils durch ein unteres Seitenwandscharnier 7 mit einem Längsträger 14, 14' des Rahmens 15 verbunden. Auf den beiden Seitenwänden 5, 5' und dem vorderen Querträger ist ein Deckenelement 3 angeordnet. Die oberen Seitenwandsegmente 12, 12' der Seitenwände 5 sind durch obere Seitenwandscharniere 8, 8' am Deckenelement 3 befestigt. Die Seitenwände 5, 5' sind dabei gegenüber dem Deckenelement 3 entlang ihrer oberen Kanten, also in Richtung der Längsträger 14, 14', verschieblich ausgebildet. Zu diesem Zweck können die oberen Seitenwandscharniere 8, 8' verschieblich am Deckenelement 3 oder an den Seitenwände 5, 5' angeordnet sein, beispielsweise mittels einer (nicht gezeigten) Schiene. Eine weitere Möglichkeit ist, dass die Scharniere 8, 8' selbst so ausgebildet sind, dass sie in Längsrichtung Spiel haben und dadurch Deckenelement 3 und Seitenwände 5, 5' in Längsrichtung gegeneinander verschieblich sind.

Das Deckenelement 3 weist ein vorderes 3a, ein mittleres 3b und ein hinteres Deckensegment 3c auf, die durch Deckensegmentscharniere 18, 18' miteinander verbunden sind. Das vordere Deckensegment 3a ist außerdem durch vordere Deckenelementscharniere 16, 16' mit dem Rahmen 15 verbunden.

Beide Seitenwände 5 bzw. beide Seitenwandsegmente 12, 12' verjüngen sich nach vorne hin in der Höhe. Entsprechend ist das Deckenelement 3, insbesondere im Bereich des vorderen Deckensegments 3a, entsprechend gekrümmt. Hierdurch weist die Dachbox 1 eine ungefähr keilförmige, aerodynamische Form auf.

Beide Seitenwande 5 verjüngen sich ebenfalls in einem hinteren Abschnitt, auf dem das hintere Deckensegment 3c angeordnet ist. Mit diesem Deckensegment 3c ist eine Rückwand 4 durch zwei Rückwandscharniere 9, 9' verbunden.

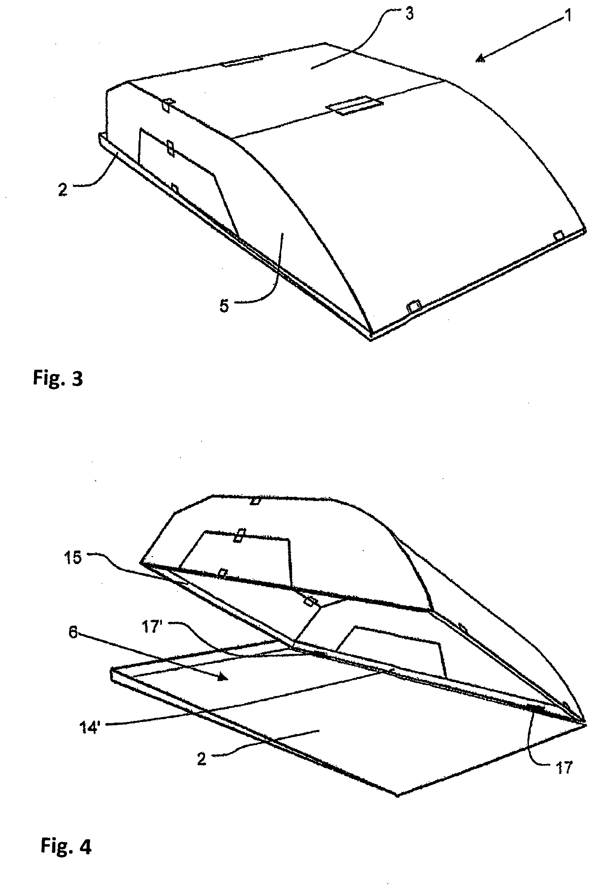

Die beschriebenen Teile der Dachbox 1 können aus Kunststoff, Metallen, insbesondere Aluminium und Titan, Carbon oder Verbundwerkstoffen bestehen. Der Rahmen kann beispielsweise aus Aluminiumrohren bestehen. Die Scharniere können mehrteilig oder einteilig ausgebildet sein, beispielsweise als Metall- oder flexibles Filmscharnier. Sie können an den entsprechenden Teilen befestigt oder diesen auch angeformt sein. Für die Dachbox 1 sind im Bereich von Kanten Dichtungen vorgesehen, so dass der Innenraum 6 (siehe Figur 4) gegen Nässe und Schmutz geschützt ist.

Wenn die Träger 13, 14 des Rahmens 15 Hohlprofile sind, können in ihrem Innern (nicht gezeigte) elektrische Leitungen zur Stromversorgung und Steuerung oder pneumatische Druckluftleitungen verlegt sein.

Figur 3 zeigt eine perspektivische Vorderansicht der Dachbox 1 im entfalteten, geschlossenen Zustand mit dem Bodenelement 2, einer Seitenwand 5 und dem Deckenelement 3. Das Bodenelement 2 weist zusätzlich (nicht gezeigte) Mittel auf, um die Dachbox 1 auf dem Dach eines Kraftfahrzeugs zu befestigen.

Figur 4 zeigt eine perspektivische Vorderansicht der Dachbox 1 im seitlich geöffneten Zustand. Es ist der von der Dachbox 1 gebildete, nutzbare Innenraum 6 gezeigt.

Der Rahmen 15 weist an einem seiner beiden Längsträger 14' zwei Rahmenscharniere 17, 17' auf, durch die er mit dem Bodenelement 2 verbunden ist. Da die Seitenwände 5, die Rückwand 4 und das Deckenelement 3 auf dem Rahmen 15 angeordnet sind, können diese Elemente zusammen mit dem Rahmen 15 nach oben oder nach unten geklappt werden, um die Dachbox 1 zu öffnen oder zu schließen. Es können auch zusätzlich ein oder mehrere (nicht gezeigte) Rahmenscharniere auf dem gegenüberliegenden Längsträger 14 vorgesehen sein, die so angeordnet oder ausgebildet sind, dass sich die Dachbox 1 je nach Bedarf sowohl von der einen als auch von anderen Seite öffnen lässt.

Es ist außerdem ein (nicht gezeigter) Verschluss vorgesehen, durch den die Dachbox 1 im verschlossenen Zustand gegen Öffnen gesichert ist.

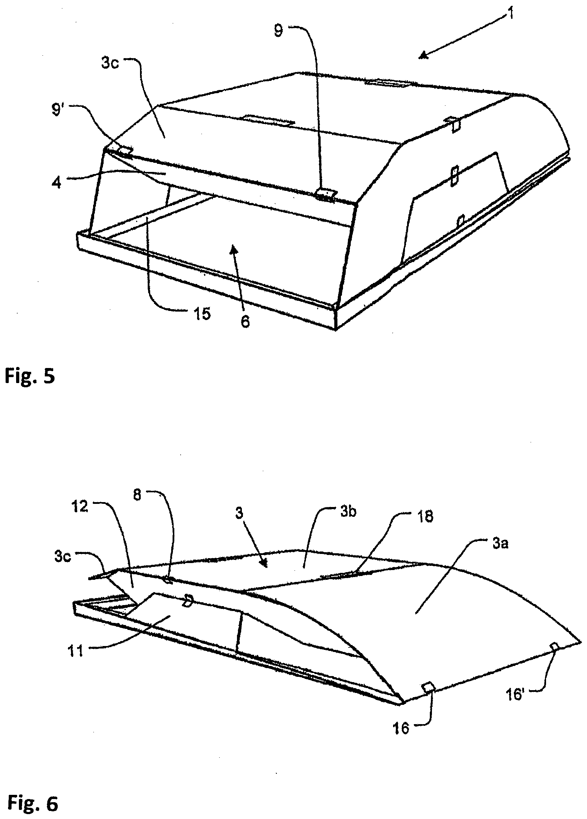

Figur 5 zeigt eine perspektivische Rückansicht der Dachbox 1 mit teilweise eingeklappter Rückwand 4. Soll die Dachbox 1 zusammengefaltet werden, wird in einem ersten Schritt zuerst die Rückwand 4 mittels der Rückwandscharniere 9, 9' nach innen, also in den Innenraum 6 geklappt. Die Rückwand 4 weist hierzu einen (nicht gezeigten) Verschluss auf, der vorher geöffnet wird. In der Figur 5 ist die im Wesentlichen rechteckige Rückwand 4 teilweise eingeklappt dargestellt, im vollständig eingeklappten Zustand liegt sie dem im Wesentlichen rechteckigen, hinteren Dachsegment 3c völlig an. Um dies zu ermöglichen, weisen die Rückwand 4 und das hintere Dachsegment 3c ungefähr dieselben Abmessungen auf, d.h. die Flächen beider Teile sind annähernd deckungsgleich.

Figur 6 zeigt eine perspektivische Vorderansicht der Dachbox 1 im teilweise zusammengefalteten Zustand. Hierbei ist die Rückwand 4 bereits vollständig nach innen eingeklappt und liegt dem hinteren Dachsegment 3c an (nicht gezeigt). Im nächsten Schritt werden die unteren 11, 11' und oberen Seitenwandsegmente 12, 12 gemeinsam nach innen eingeklappt, bis die unteren Seitenwandsegmente 11, 11' dem Bodenelement 2 und die oberen Seitenwandsegmente 12 dem Deckenelement 3 anliegen. Beim Einklappen der Seitenwandsegmente 11, 11', 12, 12' senkt sich auch das mittlere Deckensegment 3b ab, da dieses den oberen Seitenwandsegmenten 12, 12' aufliegt und mit ihnen jeweils durch die oberen Seitenwandscharniere 8, 8' verbunden ist. Damit die Seitenwandsegmente 11, 11' vollständig nach innen geklappt werden können, können die Seitenwandscharniere 8, 8' beispielsweise als elastische Filmscharniere so ausgebildet sein, dass die Seitenwandsegmente 11, 11' im Verhältnis zum mittleren Dachsegment 3b beim Einklappen leicht abgesenkt werden.

Da das vordere Deckensegment 3a an der Vorderkante durch die vorderen Deckenelementscharniere 16, 16' mit dem Rahmen 15 und durch das Deckensegmentscharnier 18 an der hinteren Kante mit dem mittleren Deckensegment 3b verbunden ist, schwenkt das vordere Deckensegment 3a um eine Schwenkachse, die im Bereich der Deckenelementscharniere 16, 16' liegt, nach unten in Richtung zum Bodenelement 2. Durch Schwenken des vorderen Deckensegments 3a gleitet es mit dem mittleren 3b und hinteren Deckensegment 3c beim Absenken an den oberen Seitenwandsegmenten 12, 12' entlang nach hinten. Um diese Bewegung in Längsrichtung zu ermöglichen, können die Scharniere 8, 8' beispielsweise mittels einer (nicht gezeigten) Schiene verschiebbar befestigt oder so ausgebildet sind sein, dass sie in Längsrichtung Spiel haben.

Die Dachbox 1 lässt sich auf die beschriebene Weise manuell öffnen oder schließen und sich zusammenfalten oder entfalten. In einer bevorzugten Ausführungsform sind an den Scharnieren und/oder beweglichen Teilen (nicht gezeigte) Elektromagnete und/oder Luftkissen und/oder Servomotoren vorgesehen, die von einer elektronischen Ablaufsteuerung angesteuert werden. Zur Koordination der Ablaufsteuerung können für die Dachbox 1 Sensoren vorgesehen sein, die den Zustand der beweglichen Teile übermitteln. Hierdurch kann das Öffnen/Schließen und/oder das Zusammenfalten/Entfalten völlig automatisiert, beispielsweise über eine Fernsteuerung oder eine Funkfernsteuerung, erfolgen. Die Dachbox 1 kann hierzu an das Stromnetz und/oder den Datenbus des Kraftfahrzeugs anschließbar sein. Sie kann außerdem eine Innen- und/oder Außenbeleuchtung mit Bremsleuchten aufweisen. Die Stromversorgung kann auch über ein (nicht gezeigtes) integriertes Solarmodul mit Energiespeicher erfolgen, das auf dem Deckenelement 3 angeordnet ist. Um die beweglichen Teile in einer bestimmten zusammengeklappten oder aufgeklappten Position zu halten, können Magnete bzw. Elektromagnete vorgesehen sein, beispielsweise an der Rückwand 4 und am Deckenelement 3. Es können außerdem geeignete Sensoren vorgesehen sein, die den Fahrer über den Zustand der Dachbox 1 informieren und/oder Warnsignale geben, beispielsweise falls beim Einfahren in ein Parkhaus die zulässige Höhe durch die Dachbox 1 überschritten wird oder falls innerhalb der Dachbox angeordnete Gegenstände nicht mit dafür vorgesehenen Sicherheitseinrichtungen, wie Gurte, gesichert sind. Weitere Sensoren können das Gewicht der Zuladung anzeigen oder ob die Dachbox 1 verschlossen oder geöffnet ist. Weiterhin kann beispielsweise eine Kamera vorgesehen sein, die den Innenraum 6 der Dachbox 1 während der Fahrt überwacht. Durch die Verbindung mit dem Datenbus des Kraftfahrzeugs können alle Daten auf dem Kombiinstrument angezeigt und überwacht werden, u.a. der Kraftstoffverbrauch. Möglich ist auch ein integriertes GPS-Ortungssystem mit einem Sender, um die Position der Dachbox 1 bei Diebstahl zu lokalisieren.

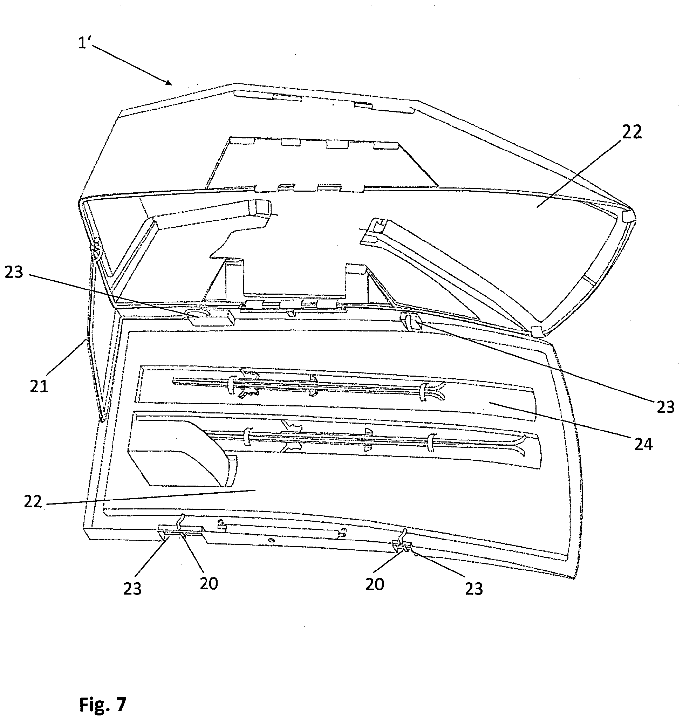

Figur 7 zeigt eine perspektivische Ansicht einer weiteren Ausführungsform der Dachbox 1'. Diese ist besonders für einen verfahrbaren Dachgepäckträger geeignet. So weist sie Befestigungsmittel 20 auf, mit denen die Dachbox 1' an einem (verfahrbaren) Dachgepäckträger bzw. Trägerrahmen (hier nicht dargestellt) befestigt werden kann. Über diese Befestigungsmittel 20 oder andere geeignete Anschlüsse kann die Dachbox 1' außerdem mit Strom oder Druckluft versorgt werden und an den Bordcomputer 25 angeschlossen sein.

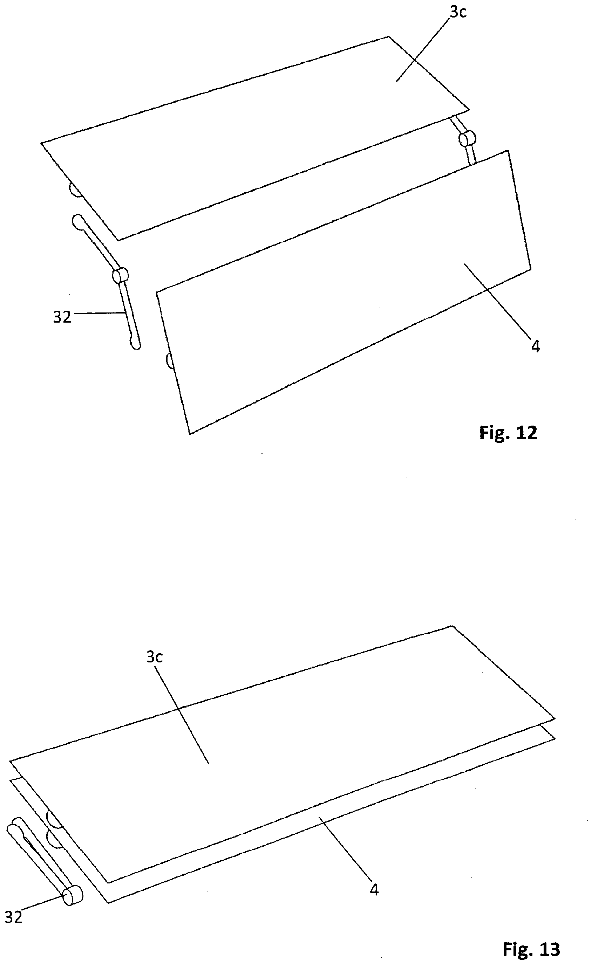

Vorzugsweise ist die Dachbox 1' von beiden Seiten zu öffnen. Dies kann beispielsweise dadurch ermöglicht werden, dass an jeder Seite der Dachbox 1' zwei, also insgesamt vier Scharnierverschlüsse 23 vorgesehen sind. Im geschlossenen Zustand verschließen die Scharnierverschlüsse 23 die Dachbox 1', beispielsweise durch Einrasten. Werden sie an einer Seite geöffnet, dann fungieren die gegenüberliegenden Scharnierverschlüsse 23 als Scharniere, wie dies in Figur 12 dargestellt ist. Alternativ oder zusätzlich kann ein Knickgelenk 21 vorgesehen sein. Eine andere (vorliegend nicht gezeigte) Möglichkeit besteht darin, zwei übereinander angeordnete Rahmen vorzusehen, wobei der untere Rahmen mittels eines Schwenkmittels gegenüber dem Bodenelement zu einer Seite der Dachbox verschwenkbar, wodurch ein Öffnen der Dachbox erfolgt. Für den Fall, dass die Dachbox zur anderen Seite geöffnet werden soll, ist der obere Rahmen mittels Schwenkmitteln mit dem unteren Rahmen verbunden. In diesem Fall bleibt der untere Rahmen unverschwenkt und nur der obere Rahmen wird relativ zum unteren Rahmen verschwenkt. Das Schwenkmittel zwischen den beiden Rahmen ist auf der gegenüberliegenden Seite vom Schwenkmittel zwischen unterem Rahmen und Bodenelement anzuordnen.

Weiterhin sind Luftkissen 22 vorgesehen, die Aussparungen 24 für die zu transportierenden Gegenstände aufweisen. Die Luftkissen 22 können außerdem, wie oben beschrieben, pneumatisch gesteuert werden um die Dachbox 1' zu entfalten oder zusammenzufalten. Zur Steuerung können (nicht gezeigte) Drucksensoren vorgesehen sein, die außerdem das Gewicht von in der Dachbox 1' befindlichen Gegenständen messen und durch den Bordcomputer anzeigen können.

Das Bodenelement 2 ist in Längsrichtung leicht gekrümmt, um sich der Dachform eines Kraftfahrzeuges anzupassen.

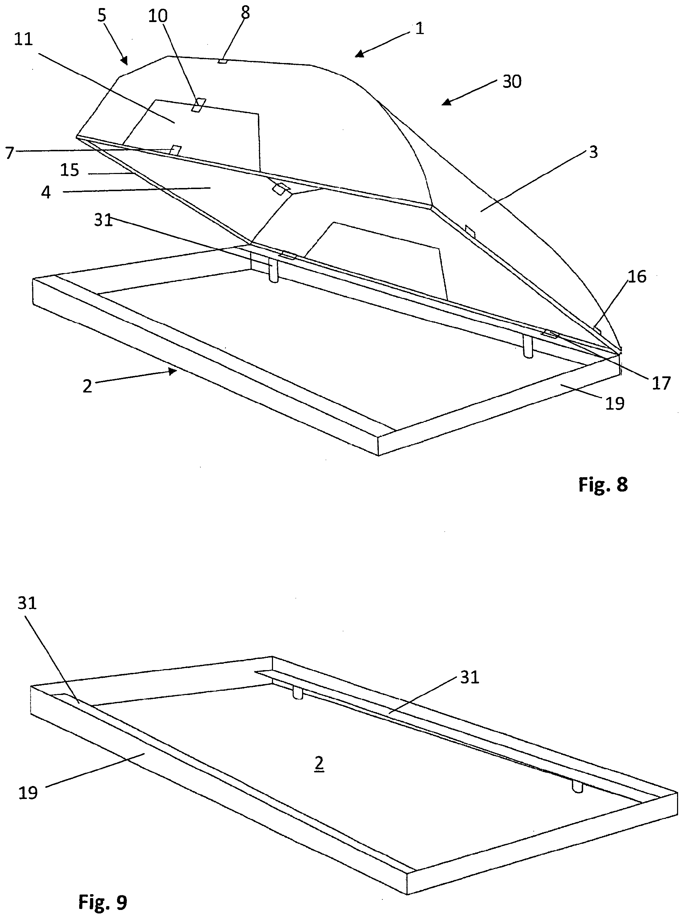

Die Figur 8 zeigt die Dachbox 1, die als Basis ein unteres Bodenelement 2 aufweist, das als eine etwa rechteckige Platte ausgebildet ist, deren rück- und vorderseitige Kante und deren beiden Seitenkanten eine umlaufende Bodenwandung 19 aufweisen. Um sich üblichen Formen von Fahrzeugdächern anzupassen, kann das Bodenelement 2 auch trapezförmig nach vorne hin verbreitert und/oder eine Krümmung aufweisen. Auf dem Bodenelement 2 ist ein etwa rechteckiger Rahmen 15 mit zwei Längsträgern und zwei Querträgern angeordnet. Die Außenabmessungen des Rahmens 15 sind etwas geringer als die Innenabmessungen der Bodenwandung 19 gewählt, so dass der Rahmen 15 innerhalb des Bodenelements 2 Platz hat.

Auf dem Rahmen 15 sind zwei Seitenwände 5 angeordnet. Die beiden Seitenwände 5 weisen jeweils ein unteres, ungefähr trapezförmiges Seitenwandsegment 11 und ein oberes Seitenwandsegment 12 auf, die durch ein Mittelscharnier 10 miteinander verbunden sind. Die unteren Seitenwandsegmente 11 der Seitenwände 5 sind jeweils durch ein unteres Seitenwandscharnier 7 mit dem Rahmen 15 verbunden. Auf den beiden Seitenwänden 5 und dem vorderen Rahmen 5 ist ein Deckenelement 3 angeordnet. Die oberen Seitenwandsegmente 12 der Seitenwände 5 sind durch obere Seitenwandscharniere 8 am Deckenelement 3 befestigt. Das Deckenelement 3 ist außerdem durch vordere Deckenelementscharniere 16 mit dem Rahmen 15 verbunden. Am Deckenelement 3 ist außerdem die Rückwand 4 klappbar angeordnet. Dadurch lässt sich das Oberteil 30 zusammenfalten. Damit das zusammengefaltete Oberteil 30 innerhalb der Höhe der Bodenwandung 19 des Bodenelements 2 untergebracht werden kann, ist für das Bodenelement 2 eine Hubvorrichtung 31 zum Absenken und Anheben des Oberteils 30 vorgesehen. Im entfalteten Zustand ist die Hubvorrichtung 31 zusammen mit dem daran angeordneten Oberteil 30 in einem angehobenen Zustand und das Oberteil 30 schließt sich bündig der oberen Kante der Bodenwandung 19 an. Der Rahmen 15 ist an der Hubvorrichtung 31, die wiederum am Bodenelement 2 befestigt ist, vorgesehen, und mit dieser durch Rahmenscharniere 17 gelenkig befestigt. Hierdurch kann der Rahmen 15 mit dem gesamten Oberteil 30 nach oben hin (seitlich) aufgeklappt werden. Die Hubvorrichtung 31 ist insbesondere bei solchen Dachboxen vorteilhaft, die seitlich geöffnet werden können. Bei Dachboxen, die durch Anheben des hinteren Bereichs der Dachbox um ein vorderes Gelenk herum geöffnet werden, ist eine Hubvorrichtung bevorzugt nicht vorgesehen.

Figur 9 zeigt zum Vergleich eine perspektivische Ansicht des Bodenelements 2 mit teilweise abgesenkter Hubvorrichtung 31. Durch das Absenken der Hubvorrichtung 31 und des zusammengefalteten Oberteils 30 findet dieses innerhalb des Bodenelements 2 mit der Bodenwandung 19 Platz. Das Bodenelement 2 ist in Längsrichtung leicht gekrümmt, um sich der Dachform eines Kraftfahrzeuges anzupassen.

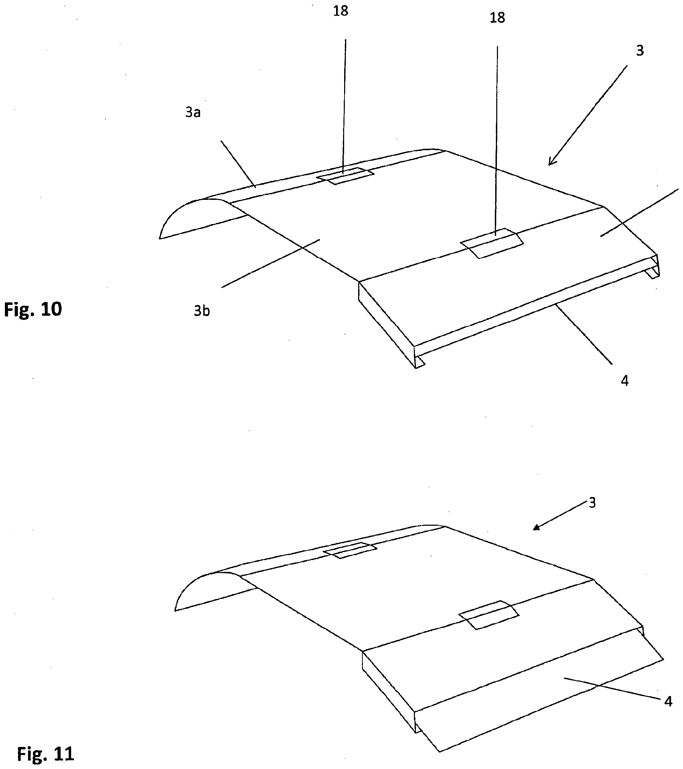

Figur 10 zeigt eine perspektivische Rückansicht das Deckenelements 3, das ein vorderes 3a, ein mittleres 3b und ein hinteres Deckensegment 3c aufweist. Diese Segmente sind durch Deckensegmentscharniere 18 miteinander verbunden. Unter dem hinteren Deckensegment 3c ist eine verschiebbare Rückwand 4 angeordnet. Die Rückwand 4 kann aus dem Deckensegment 3c nach hinten ausgefahren und dann nach unten ausgeklappt werden (dieser Zustand ist in Figur 8 gezeigt). Vorteilhafterweise ist bei einer Krümmung des Deckensegments 3c und/oder der Rückwand 4 eine besonders kompakte Anordnung beider Elemente im zusammengefalteten Zustand der Dachbox 1 möglich.

Figur 11 zeigt eine perspektivische Rückansicht das Deckensegments 3c wie in Figur 10 mit teilweise nach hinten ausgefahrener Rückwand 4.

Figur 12 zeigt eine andere Ausführungsform des Deckensegments 3c mit ausgeklappter Rückwand 4. Zur Veranschaulichung sind die Elemente schwebend übereinander dargestellt. Das Deckensegment 3c und die Rückwand 4 sind mittels eines Gelenks 32 verbunden. Das Gelenk 32 ist derart ausgebildet, dass es beim Entfalten der Dachbox 1 ein Verschieben der Rückwand 4 in einer etwa horizontalen Ebene nach hinten und danach ein Abklappen der Rückwand 4 nach unten ermöglicht. Beim Zusammenfalten der Dachbox 1 erfolgt zunächst ein Runterklappen in eine horizontale Stellung und dann ein Verschieben der Rückwand 4 unter das Deckensegment 3c in Fahrtrichtung des Kraftfahrzeugs. Dies ist insbesondere dann vorteilhaft, wenn die Fläche der Rückwand 4 und die Fläche des Deckenements 3 oder die Fläche des Bereichs der Seitenwand 5, an denen die Rückwand im eingefahrenen Zustand der Dachbox anliegt, eine ähnliche Krümmung in Richtung und Stärke aufweisen, da dann die gekrümmten Flächen platzsparend ineinander greifen.

Figur 13 zeigt das Deckenelement 3 wie in Figur 5. Die Rückwand 4 ist eingefahren und Platz sparend unterhalb des Deckensegments 3c angeordnet.

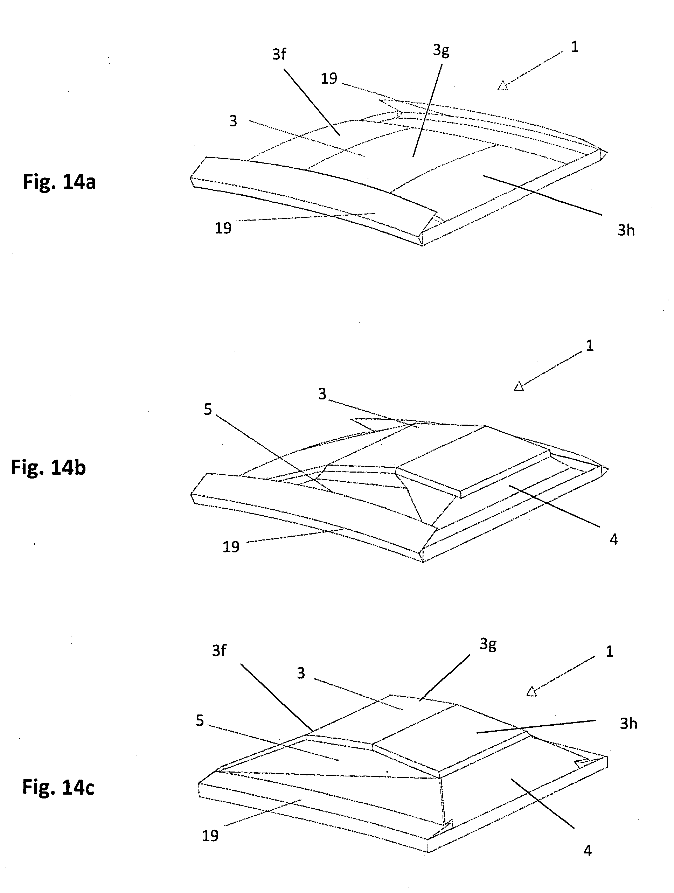

Die Figuren 14a, 14b und 14c zeigen jeweils eine perspektivische Ansicht einer weiteren Ausführungsform einer Dachbox 1. In den Figuren 14a, 14b und 14c ist der Entfaltungsprozess als Sequenz dargestellt. Die Dachbox 1 umfasst ein Deckenelement 3, welches drei miteinander verbundene und in Längsrichtung der Dachbox 1 betrachtet hintereinander angeordnete Deckensegmenten 3f, 3g, 3h umfasst. Das vordere Deckensegment 3f sowie das mittlere Deckensegment 3g sind aus Glas hergestellt. Im Bodenelement der Dachbox 1 und/oder im Dach des Fahrzeuges sind ebenfalls korrespondierende, aus Glas oder einem anderen transparenten Material hergestellte Segmente und/oder Öffnungen vorgesehen (hier nicht dargestellt). Im Falle des Kraftfahrzeugdaches können diese Elemente insbesondere von einem Sonnendach gebildet werden. In Figur 14a sind die Bodenwände 19 teilweise aufgeklappt. Figur 14b zeigt eine Zwischenstufe mit aufgeklappten Bodenwänden 19 und teilweise aufgeklappten Seitenwänden 5 und aufgeklappten Dachwänden 3. Figur 14c zeigt die vollständig entfaltete Dachbox 1. Im ausgefahrenen Zustand der Dachbox 1 verlaufen die Seitenwände 5 von unten nach oben betrachtet schräg nach innen.

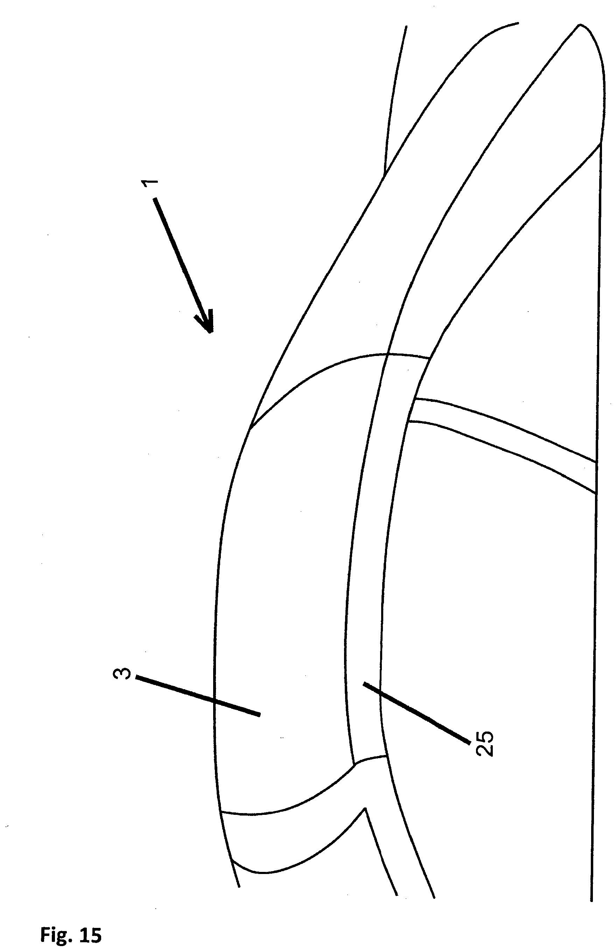

Die Figur 15 zeigt den oberen Bereich eines Cabrios mit einem Klappdach 25 aus Metall. Derartige Klappdächer 25 werden heute als Alternative zu Stoffdächern verwendet. Die Dachbox 1 befindet sich im vollständig zusammengefalteten Zustand auf dem Klappdach 25 und ist daher optisch nicht erkennbar. Lediglich das Deckenelement 3 ist sichtbar, fällt aber nicht auf.

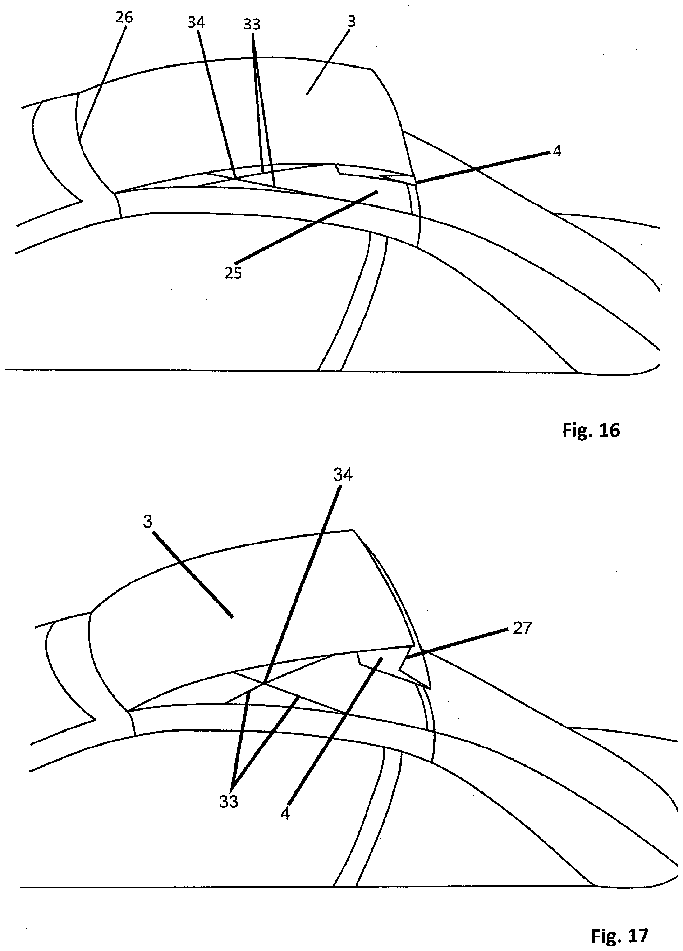

Die Figuren 16 bis 18 zeigen das Entfalten der Dachbox 1. Hierzu wird zunächst das Deckenelement 3 nach oben geklappt. Dies erfolgt mittels zweier über Kreuz angeordneter Stangen 33, die im Bereich beider Seitenwände der Dachbox angeordnet sind. Die Stangen 33 sind in einem gemeinsamen Gelenkpunkt 34 gelenkig miteinander verbunden. Die Enden der Stangen sind jeweils beweglich am Deckenelement 3 bzw. am Bodenelement, welches von der Dachoberfläche 28 gebildet wird, angebracht, so dass ein Verschwenken der Stangen 33 gegeneinander um den Gelenkpunkt 34 zu einem Entfalten bzw. Zusammenfalten der Dachbox 1 führt. Die Seitenwände sind aus einem weichen bzw. verformbaren Material, wie Stoff, insbesondere solcher Stoff, der herkömmlich zur Herstellung von Cabriodächern verwendet wird, hergestellt, was vorliegend der Übersichtlichkeit halber nicht dargestellt ist. Das Deckenelement 3 ist am Klappdach 25 mittels eines vorderen Gelenks 26 beweglich befestigt. Die Rückwand 4 ist noch unter dem Deckenelement 3 angeordnet und liegt diesem an.

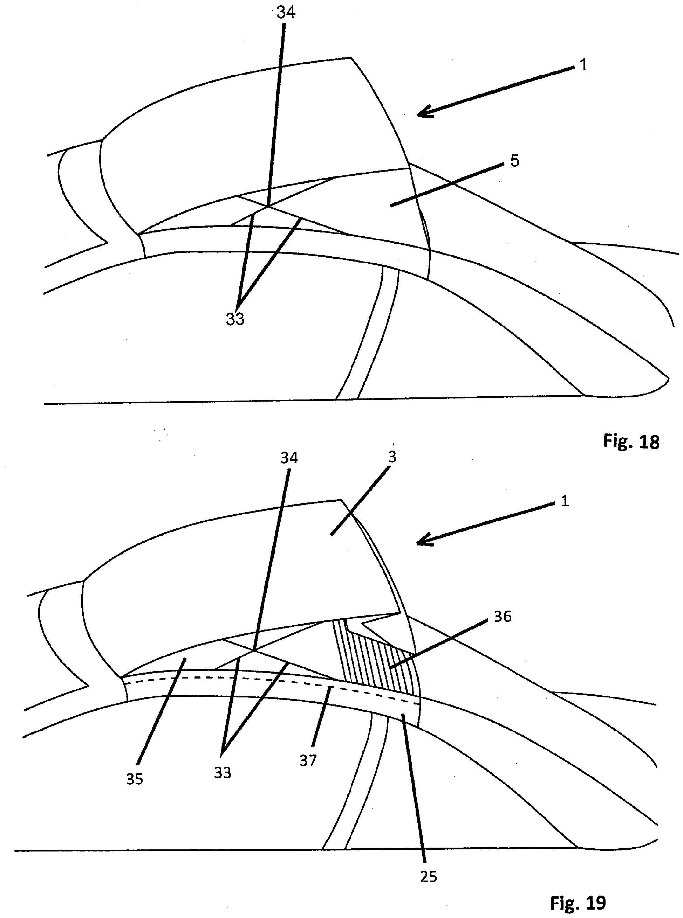

Figur 17 zeigt, dass zum Entfalten das Deckenelement 3 weiter nach oben geklappt wird und die Rückwand 4 unterhalb des Deckenelements 3 ausfährt. Wie Figur 18 zeigt, klappt dann die Rückwand 4 nach unten. Dies wird durch ein geeignetes, hinteres Gelenk 27 ermöglicht. Die Rückwand 4 kann aus einem harten Material, beispielsweise Metall, oder auch ebenfalls aus einem weichen bzw. stoffartigen, verformbaren Material, insbesondere aus demselben Material wie die Seitenwände, gefertigt sein.

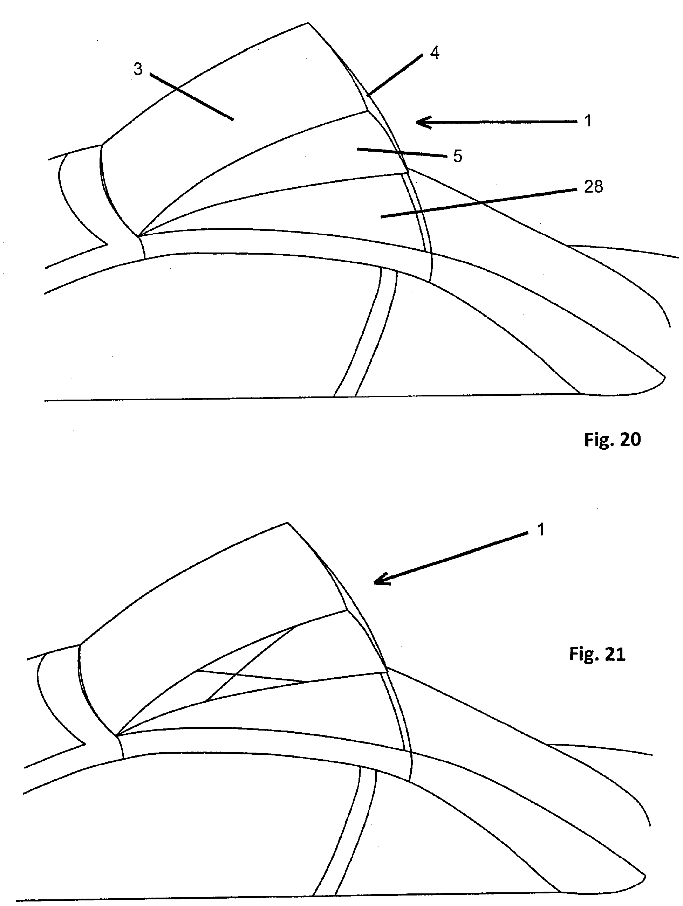

Die Figuren 16 bis 18 zeigen außerdem, dass die beiden Seitenwände 5 ausgeklappt werden. Insgesamt wird so eine Dachbox 1 mit einem geschlossenen, nutzbaren Innenraum gebildet, der durch das Deckenelement 3, die beiden Seitenwände 5 und die Rückwand 4 umgrenzt wird. An die Unterseite der beiden Seitenwände 5 und der Rückwand 4 schließt sich ein Rahmen 15 an. Hierdurch ist es ermöglicht, dass die Dachbox 1 im ausgefalteten Zustand nach oben hin um das Gelenk 26, d.h. nach vorne hin, hochklappen kann, so dass der Innenraum der Dachbox 1 für den Benutzer freigelegt wird und er die Dachbox 1 be- bzw. entladen kann. Der Boden der Dachbox 1 wird vorteilhafterweise durch die Dachoberfläche 28 gebildet (siehe Figur 20).

Zum Einfalten laufen die gezeigten und beschriebenen Vorgänge in umgekehrter Reihenfolge ab. Die gesamten Vorgänge können automatisiert und pneumatisch oder automatisiert mittels Servomotoren ablaufen.

Figur 18 zeigt die Dachbox 1 im vollständig entfalteten Zustand, wobei die Dachbox 1 geschlossen ist. Die Figuren 20 und 21 zeigen die entfaltete Dachbox 1, welche mittels des vorderen Gelenkes 26 nach oben geklappt, d.h. geöffnet ist. In diesem Zustand kann die Dachbox 1 beladen werden.

Figur 19 zeigt eine Ausführungsform, bei der trotz der installierten Dachbox 1 bei geschlossenem Fahrzeugdach durch das Dach ein direkter Sonneneinfall in den Innenraum des Fahrzeuges möglich ist. Hierbei ist das Deckenelement 3 aus einem transparenten Material, insbesondere Glas, gefertigt. Es ist auch möglich, dass nur ein Teilbereich des Deckenelementes 3 aus diesem transparenten Material besteht. Im Fahrzeugdach 25 ist eine Fahrzeugdachöffnung 35 vorgesehen, die mittels eines integrierten Verdecks 36 öffenbar und wieder schließbar ist. Das Verdeck 36 ist mittels eines Seilzuges 37 zu öffnen bzw. zu schließen. Das Verdeck 36 kann insbesondere in der Art eines Rollos oder einer Jalousie ausgebildet sein. Insbesondere ist es zweckmäßig, dass das Material, aus dem das Verdeck gebildet ist, eine ausreichende Stärke bzw. Stabilität aufweist, da im Zustand der Beladung der Dachbox 1 Gegenstände direkt auf dem Verdeck 36 abzustellen sind. Befindet sich keine Ladung in der Dachbox 1, kann das Verdeck 36 zurückgefahren werden, um die Öffnung 35 freizugeben, durch die dann, aufgrund des transparenten Deckenelementes 3, Sonnenlicht in den Innenraum des Kraftfahrzeuges gelangen kann.

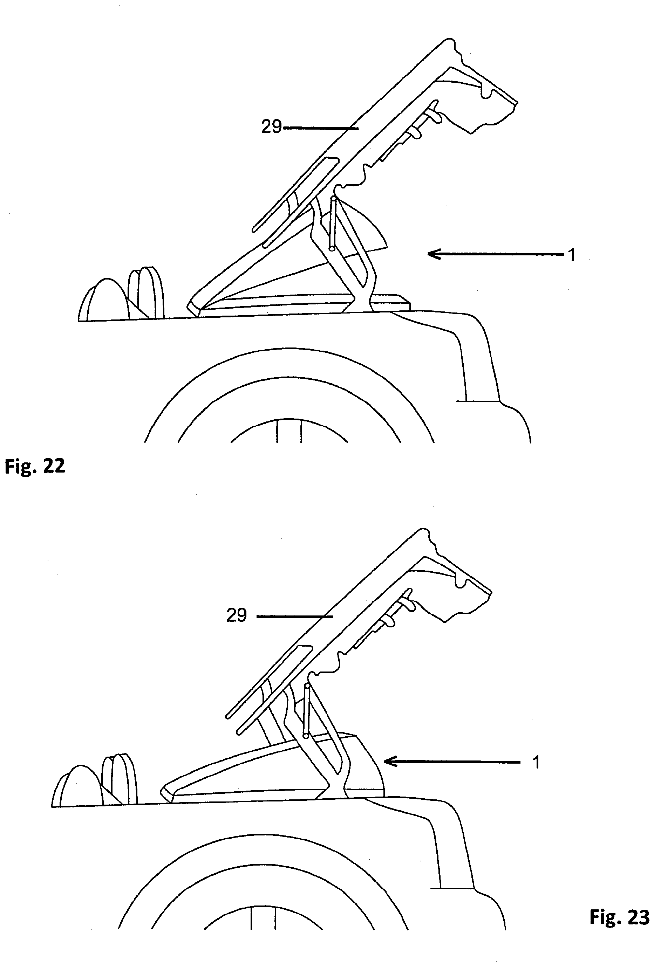

Da die Dachbox 1 auf dem Klappdach 25 des Cabrios angeordnet ist oder in dieses integriert ist, ist ein komfortables Beladen dadurch möglich, dass das Klappdach 25 bei geöffneter Kofferraumklappe 29 zum Teil eingefahren wird, wie es in den Figuren 22 und 23 dargestellt ist. Figur 22 zeigt, dass die Dachbox 1 dann niedriger angeordnet ist und auf einfache Weise geöffnet und beladen werden kann. Nach dem Beladen wird die Dachbox 1 wieder geschlossen, wie in Figur 23 dargestellt. Danach wird das Klappdach 25 wieder nach oben gefahren bzw. geschlossen. Das Klappdach 25 kann also vorteilhafterweise als Hebevorrichtung für die Dachbox 1 genutzt werden.

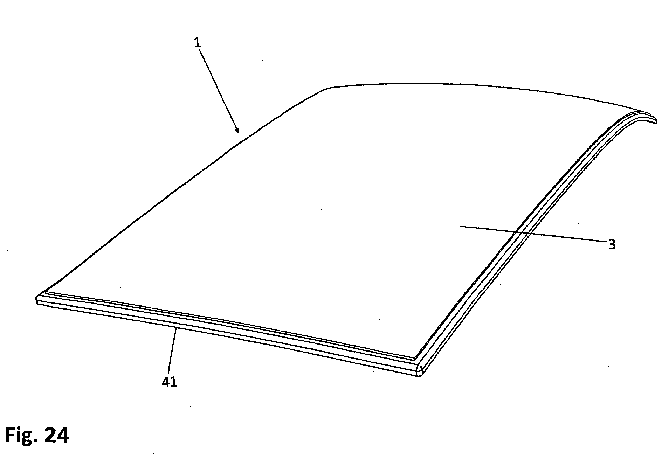

Figur 24 zeigt eine perspektivische Ansicht eines Fahrzeugdaches 41 eines Pkws (hier nicht dargestellt). Im Fahrzeugdach 41 ist eine Dachbox 1 integrativ angeordnet. Die Dachbox 1 befindet sich im eingefahrenen Zustand, in dem keine Ladung in der Dachbox 1 transportiert wird. In diesem Zustand ist, aufgrund der integrativen Ausgestaltung, die Dachbox 1 optisch im Wesentlichen nicht erkennbar. Von außen ist nur das Deckenelement 3 der Dachbox 1 erkennbar, das als flaches Blech ausgebildet ist und sich der Form des Fahrzeugdaches 41 anpasst. Ferner deckt das Deckenelement 3 im Wesentlichen die gesamte Dachfläche des Fahrzeugdaches 41 ab.

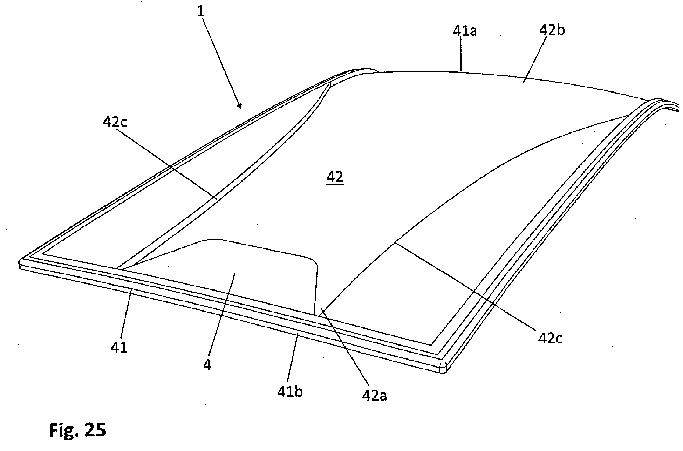

In Figur 25 ist das Fahrzeugdach 41 aus Figur 24 dargestellt, wobei das Deckenelement weggelassen ist. Das Fahrzeugdach 41 bildet gleichzeitig das Bodenelement für die Dachbox 1 und weist eine Vertiefung 42 auf, die im ausgefahrenen Zustand der Dachbox 1 zusammen mit dem Deckenelement 3 und einer Rückwand 4 den Innenraum der Dachbox 1 definiert bzw. umgibt. Die Vertiefung 4 weist im Bereich der Vorderkante 41a des Fahrzeugdaches 41, die zur Vorderseite eines Pkws ausgerichtet ist (hier nicht dargestellt), ihre breiteste Stelle auf. Die schmalste Stelle der Vertiefung 42 befindet sich in dem Bereich, der der Hinterkante 41b des Fahrzeugdaches 41 zugewandt ist. Im Bereich dieser schmalsten Stelle ist die Rückwand 4 angeordnet, die in der Darstellung in Figur 25 auf die Vertiefung 42 runtergeklappt ist und flächig an dieser anliegt. Die Rückwand 4 weist eine trapezartige Form auf, wobei die längere der beiden langen Seiten bündig an einer Hinterkante 42a der Vertiefung 42 anliegt. Die Seitenkanten 42c der Vertiefung 42 verlaufen von der Hinterkante 42a der Vertiefung 42 zur Vorderkante 42b der Vertiefung 42 leicht schräg nach außen, wobei die Seitenkanten 42c dabei im Wesentlichen keinen geraden Verlauf, sondern einen leicht gewölbten Verlauf aufweisen.

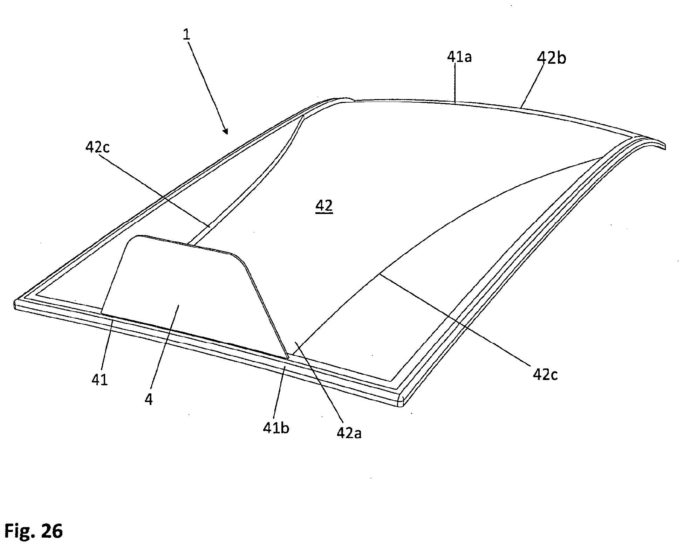

Figur 26 zeigt eine ähnliche Darstellung zur Figur 25, wobei bei der Figur 26 die Rückwand 4 hochgeklappt ist. Die Rückwand 4 wird um ihre an der Hinterkante 42 an der Vertiefung 42 anliegenden, unteren Langseite zum Hochklappen verschwenkt. Hierfür sind entsprechende Scharniere (nicht dargestellt) vorgesehen.

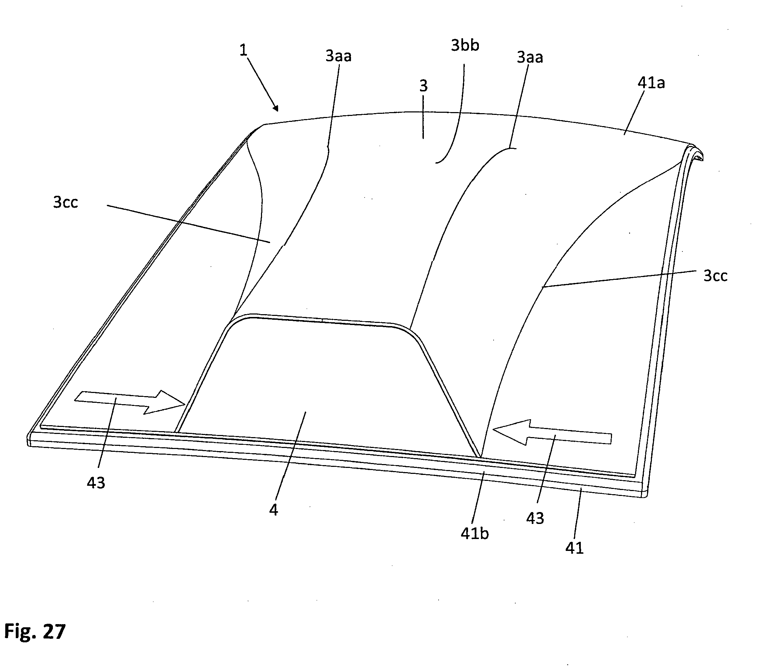

Die Figur 27 zeigt eine weitere Darstellung der Dachbox 1 aus den Figuren 24 bis 26, wobei hier das Deckenelement 3 wieder vorhanden ist und die Dachbox 1 im ausgefahrenen Zustand ist. Das Deckenelement 3 hat sich gegenüber der Darstellung aus der Figur 24 in seinem der Hinterkante 41 des Fahrzeugdaches 41 zugewandten Bereich in der durch die Pfeile 43 angezeigten Richtung nach innen verschoben. Hierdurch wölbt sich das Deckenelement 3 nach oben, so dass zwischen dem als Bodenelement wirkenden Fahrzeugdach 41 und dem Deckenelement 3 ein Hohlraum entsteht, der als Laderaum zum Transportieren von Gegenständen genutzt werden kann. Die dabei entstehende Öffnung des Hohlraumes wird durch die Rückwand 4, die hochgeklappt ist, abgedeckt, so dass ein geschlossener Laderaum entsteht. Das Material des Deckenelements 3 ist derart ausgebildet, dass es bei entsprechender Aktivierung seine Form in vorher bestimmter Weise ändert. Hierdurch schiebt sich das Deckenelement 3 bei Aktivierung zur Bildung eines ausgefahrenen Zustandes der Dachbox zusammen. Insbesondere erfolgt die Verformung um zwei in Längsrichtung des Fahrzeugdaches 41 verlaufende (Soll-)Biegelinien 3aa, so dass sich im ausgefahrenen Zustand ein oberer, die Oberseite des Laderaumes bildender Abschnitt 3bb des Deckenelementes 3 und zwei Seitenabschnitte 3cc ergeben. Der der Vorderkante 41a des Fahrzeugdaches 41 zugewandte Bereich des Deckenelement 3 bleibt unverformt, so dass sich auch im ausgefahrenen Zustand in Fahrtrichtung des Pkws eine relativ aerodynamisch günstige Form des Daches bzw. der Dachbox 1 ergibt.

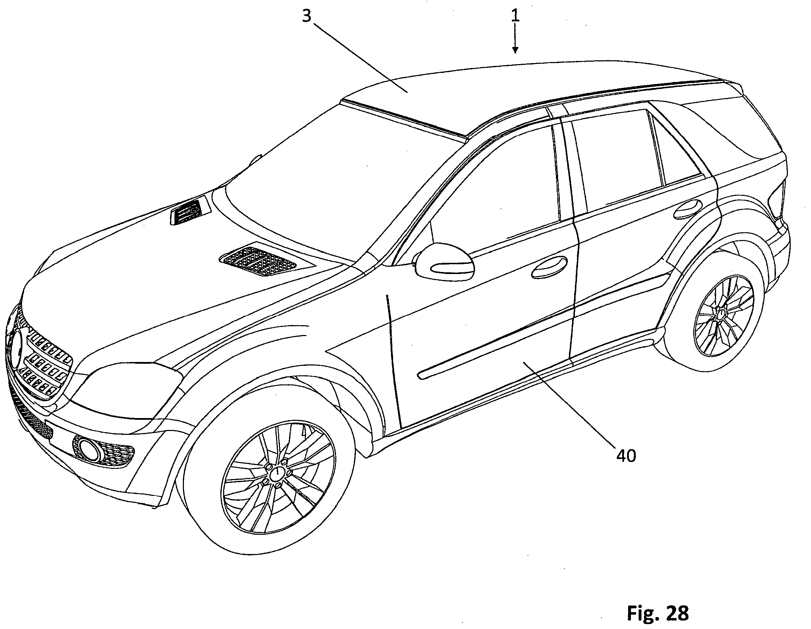

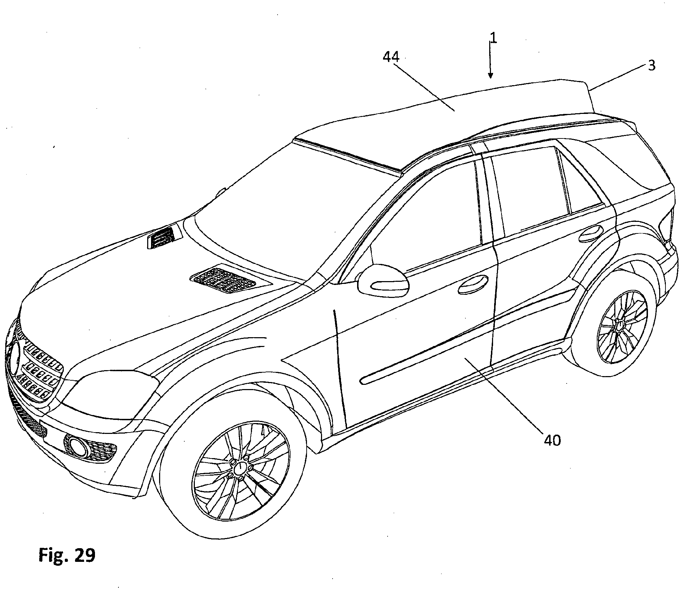

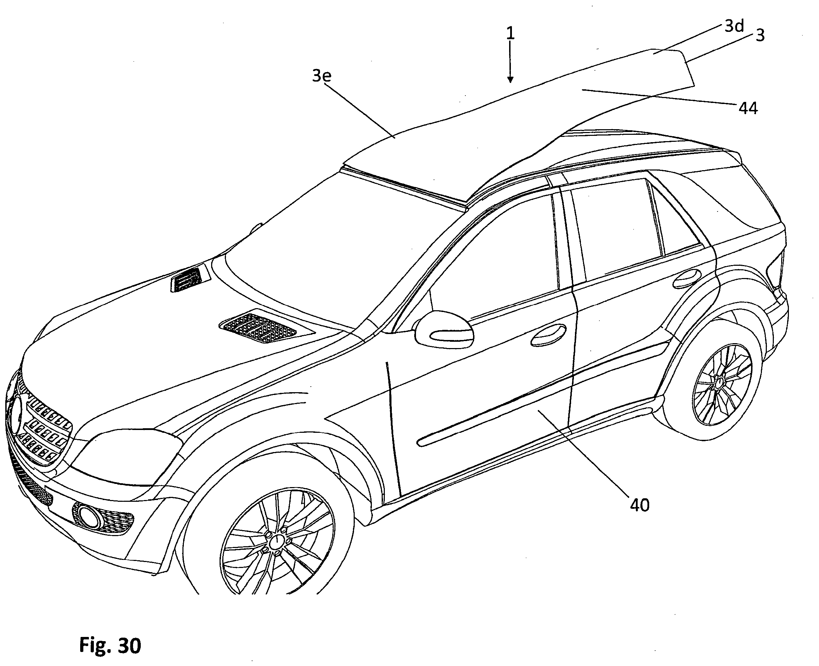

Die Figuren 28 bis 30 zeigen jeweils eine perspektivische Seitenansicht eines Kraftfahrzeuges 40 mit darin integrierter Dachbox 1. Die Dachbox 1 ist ähnlich wie in den Figuren 24 bis 27 ausgebildet. In der Figur 28 ist die Dachbox 1 im eingefahrenen Zustand gezeigt, wohingegen in der Figur 29 der ausgefahrene Zustand dargestellt ist. In der Figur 30 ist die Dachbox 1 im ausgefahrenen Zustand, d.h., das Deckenelement 3 ist um die Biegelinie 3aa abgebogen, und zusätzlich ist der hintere Bereich 3d des Deckenelementes 3 gegenüber dem Fahrzeugdach nach oben hochgeklappt. Der vordere Bereich 3e des Deckenelementes 3 liegt weiterhin auf dem Fahrzeugdach 41 auf und ist mit diesem fest verbunden. Das teilweise Hochklappen des Deckenelementes 3 kann ebenfalls durch eine durch ein Aktivierungsmittel ausgelöste Verformung des Deckenelementes 3 erreicht werden. Alternativ ist auch ein Verschwenken des verformten Deckenelementes 3 um ein oder mehrere, an deren Vorderkante angeordnete Schwenkmittel möglich. Im hochgeklappten Zustand kann die Dachbox 1 beladen werden. Alternativ kann auch die Rückwand 4 im ausgefahrenen Zustand runtergeklappt werden, wobei dann die Dachbox 1 über die Öffnung in der Hinterseite beladen bzw. entladen werden kann. Ein Hochklappen des Deckenelementes 3 ist dann nicht nötig. Das Deckenelement 3 verbiegt sich im ausgefahrenen Zustand in eine derart vorgegebene Form, dass es in seinen äußeren Randbereichen bündig mit den Seitenrändern 42c der Vertiefung 42 abschließt.

Das Deckenelement ist grundsätzlich derart gestaltet, dass es sich bei Aktivierung, z.B. wenn über in der Dachbox 1 verlegte Stromleitungen (hier nicht dargestellt) Strom auf das Deckenelement 3 gegeben wird, verbiegt und zwar in eine vorher bestimmte Form. Erfolgt eine erneute Aktivierung, biegt es sich wieder zurück in seine Ausgangsposition. Hierdurch kann ohne Gelenke, Scharniere und dergleichen eine zusammen- und auseinanderklappbare Dachbox erhalten werden. Die Dachbox und/oder das Deckenelement und/oder das Bodenelement können bevorzugt aus einem transparenten Material ausgebildet sein.

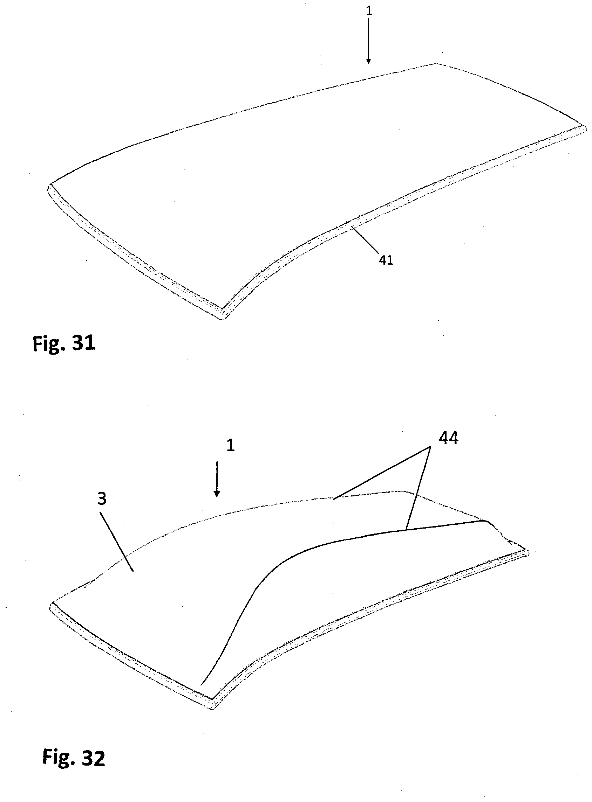

Die Figuren 31 bis 36 zeigen eine weitere Ausführungsform einer erfindungsgemäßen Dachbox 1. Figur 31 zeigt eine perspektivische Ansicht eines Fahrzeugdaches 41 eines Pkws (hier nicht dargestellt). Im Fahrzeugdach 41 ist eine Dachbox 1 integrativ angeordnet. Die Dachbox 1 befindet sich im eingefahrenen Zustand, in dem keine Ladung in der Dachbox 1 transportiert wird. In diesem Zustand ist, aufgrund der integrativen Ausgestaltung, die Dachbox 1 optisch im Wesentlichen nicht erkennbar. Von außen ist nur das Deckenelement 3 der Dachbox 1 erkennbar, das der Form und den Dimensionen des Fahrzeugdaches 41 anpasst. Ferner deckt das Deckenelement 3 im Wesentlichen die gesamte Dachfläche des Fahrzeugdaches 41 ab und liegt flach auf dem Fahrzeugdach 41 auf. Das Deckenelement 3 umfasst einen Stoff aus einem geeigneten Stretch-Material, welches elastisch verformbar ist. Bevorzugt kann unter der nach außen sichtbaren Lage aus Stretch-Stoff eine weitere Lage aus einem robusteren, aber faltbaren Material, insbesondere einer Kunststofffolie oder dergleichen, vorgesehen sein.

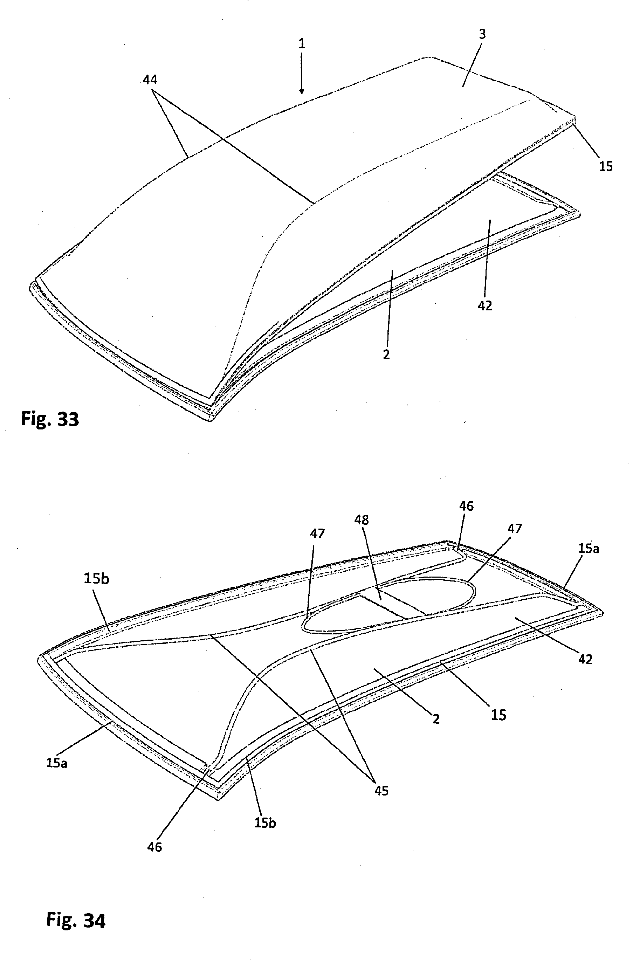

Figur 34 zeigt die Dachbox 1 im eingefahrenen Zustand ohne das Deckenelement. Das Bodenelement 2 wird von der Dachoberfläche gebildet, die wiederum eine Vertiefung 42 aufweist. Die Dachbox weist ferner einen Rahmen 15 auf. Zwischen den kürzeren Querstegen 15a des Rahmens 15b verlaufen zwei, beabstandet und im Wesentlichen parallel zueinander angeordnete Drehbügel 45, die in jeden ihrer beiden Enden mittels jeweils eines Drehbügelgelenks 46 mit den Querstegen 15a verbunden sind. Die Drehbügel verlaufen daher grob parallel zu den Längsstegen 15b des Rahmens 15. Beide Drehbügel 45 liegen flach auf dem Bodenelement 2 auf und sind von ihren Drehbügelgelenken 46 aus gesehen nach innen geschwenkt. Zwischen den beiden Drehbügeln 45 sind zwei Federbügel 47 vorgesehen, die im in Figur 34 gezeigten Zustand vorgespannt sind. Zwischen beiden Federbügeln ist ferner ein dehnbares Halteband 48 vorgesehen, dass im in Figur 34 gezeigten Zustand entspannt ist.

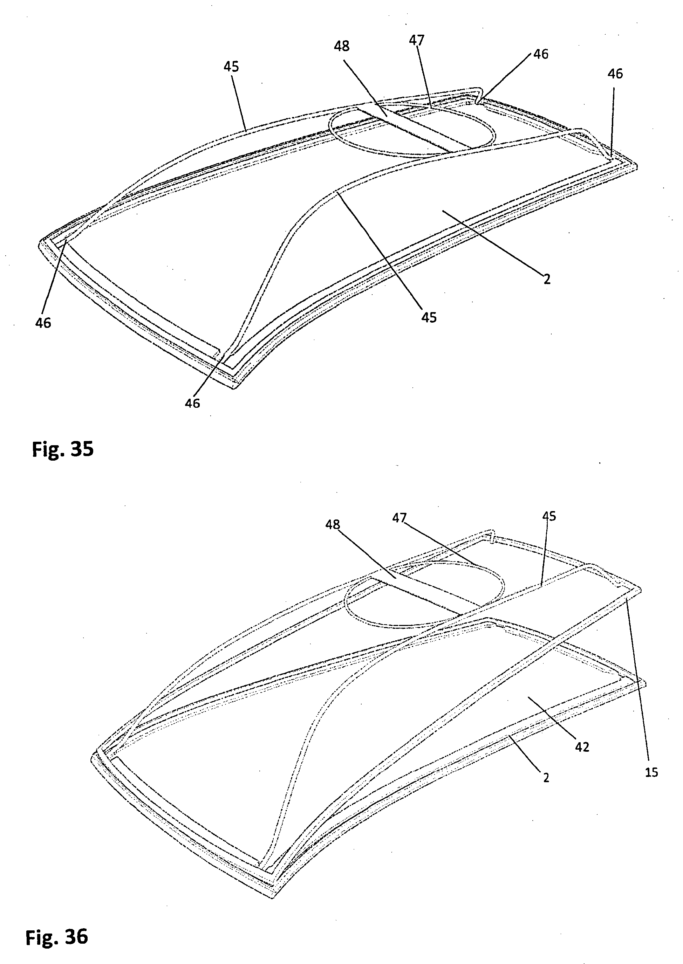

In Figur 35 sind die Drehbügel 45 nach oben geschwenkt bzw. gedreht, insbesondere um einen Winkel von 45 Grad bis 90 Grad gegenüber der Position in Figur 34. Die Federbügel 47 sind entspannt und das Halteband 48 befindet sich in einem gedehnten Zustand. Die Verschwenkung der Drehbügel 45 ist durch die Vorspannkraft der Federbügel 47 erreicht worden. Figur 32 zeigt die gleiche Situation wie in Figur 35, wobei in Figur 32 ein Deckenelement 3 dargestellt ist, so dass die Drehbügel nicht erkennbar sind. Die Dachbox 1 befindet sich im ausgefahrenen Zustand. Das Material des Deckenelements 3 befindet sich im gedehnten Zustand, und das Deckenelement hat sich gegenüber dem eingefahrenen Zustand (Figur 31) aufgestellt und weist ein gekrümmte Fläche auf, wobei sich die stärksten Krümmungen entlang der Biegelinien 44 einstellen, die mit den aufgestellten Drehbügeln 45 korrespondiert. Die ausgefahrene Dachbox 1 (Figuren 32 und 35) ist geschlossen.

Die Figuren 33 und 36 zeigen die Dachbox 1 im ausgefahrenen und geöffneten Zustand. Die Öffnung erfolgt um zwischen vorderen Quersteg 15a und Bodenelement 2 angeordneten Gelenken (hier nicht dargestellt), so dass die Dachbox 1 im geöffneten Zustand insbesondere von hinten beladbar ist. Der gesamte Rahmen 15 schwenkt mitsamt dem darauf angeordneten Deckenelement 3 um die am vorderen Quersteg 15a angeordneten Gelenke nach oben.

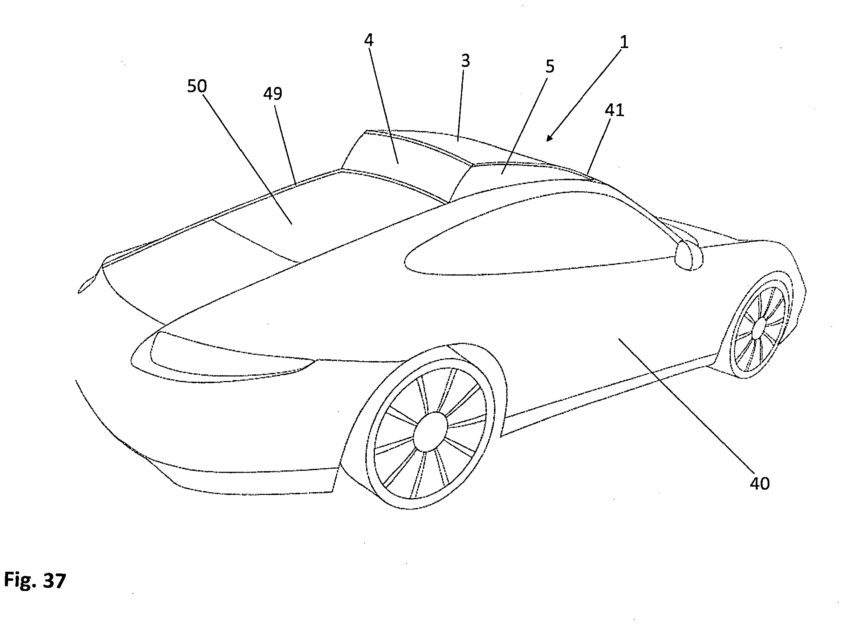

Figur 37 zeigt ein als Coupe ausgebildetes Kraftfahrzeug 40 mit einem Kraftfahrzeugdach 41, welches in diesem Fall das Fließheck des Kraftfahrzeuges 40 mit einschließt. Auf dem Dach 41 des Kraftfahrzeuges 40 ist eine Dachbox 1 angeordnet, die zwischen einer Fahrposition (am oberen Bereich des Daches) und einer Ladeposition (am unteren Bereich des Daches, insbesondere am unteren Bereich des Fließhecks) verfahrbar ist. In der Darstellung der Figur 37 befindet sich die Dachbox 1 im ausgefahrenen Zustand und in der Fahrposition. Insbesondere weist die Dachbox 1 zwei Seitenwände 5, eine Rückwand 4 und ein Deckenelement 3 auf. Das Kraftfahrzeugdach 41 weist in seinem Verlauf von einem oberen Abschnitt bis hin zu einem unteren und hinteren Abschnitt eine Führung auf, die zwei gegenüberliegend angeordnete und im Wesentlichen parallel zueinander ausgerichtete Schienen 49 umfasst. Diese Schienen 49 sind in die Längsseiten der Ränder einer Dachvertiefung 50 eingelassen, die über das gesamte Fließheck des Kraftfahrzeuges 40 verläuft. In den Schienen 49 sind Profilierungen (hier nicht dargestellt) vorgesehen, in die Profilierungs-Gegenstücke (hier nicht dargestellt) der Dachbox 1 eingreifen, um so entlang der Schiene 49 verfahren werden zu können.

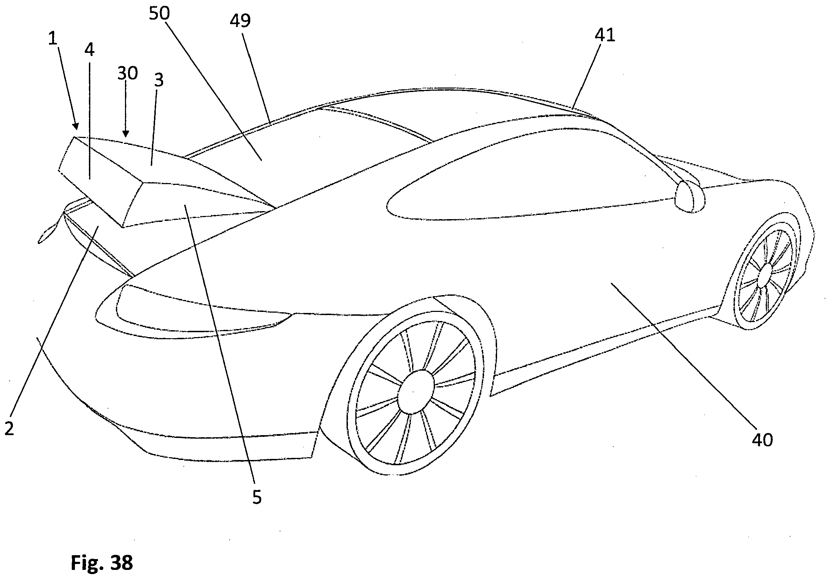

In Figur 38 ist die Dachbox 1 gegenüber der Darstellung aus der Figur 37 in den Ladezustand, d. h. nach unten, entlang der Schienen 49 verfahren worden. Es ist ferner erkennbar, dass die Dachbox 1 zusätzlich zu dem Deckenelement 3, der Rückwand 4 und den Seitenwänden 5 ein Bodenelement 2 aufweist, mit dem es auf dem Dach 41 des Fahrzeuges 40 aufliegt. Die Seitenwände 5, die Rückwand 4 und das Deckenelement 3 bilden zusammen ein Oberteil 30 der Dachbox 1, welches im gezeigten Zustand in Figur 38 geöffnet ist. D. h., das Oberteil 30 ist um ein vorderes Drehgelenk (hier nicht dargestellt) gegenüber dem Bodenelement 2 nach oben verschwenkt, so dass der Innenraum der Dachbox 1 freigegeben wird und in der Ladeposition bequem von einem Benutzer beladen werden kann. Die in den Figuren 37 und 38 dargestellte Dachbox ist, wie auch bei den vorbeschriebenen Ausführungsbeispielen, zusammenfaltbar in einen eingefahrenen Zustand.

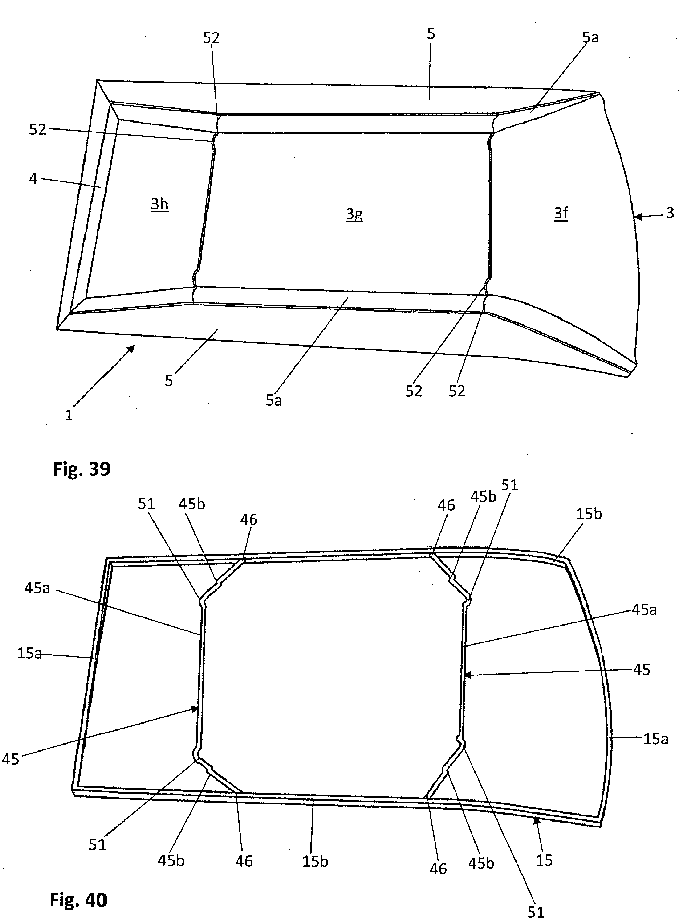

Figur 39 zeigt eine weitere Ausführungsform einer Dachbox 1 im ausgefahrenen Zustand in einer Draufsicht. Die Dachbox 1 umfasst ein Deckenelement 3, welches aus drei in Längsrichtung der Dachbox 1 nacheinander angeordneten Deckensegmenten 3f, 3g, 3h besteht. Die Dachbox 1 weist ferner zwei Seitenwände 5 auf, die jeweils einstückig ausgebildet sind, bzw. aus einem einzigen Segment bestehen. Auf ihrer dem Deckenelement 3 zugewandten Seite weisen die Seitenwände 5 einen Flansch 5a auf, der die einzelnen Segmente 3f, 3g, 3h des Deckenelementes 3 bis zu einer gewissen Tiefe übergreift. Ferner ist eine Rückwand 4 vorgesehen.

Die Figur 40 zeigt einen Rahmen 15 der Dachbox 1 aus der Figur 39, auf dem die Rückwand 4, das Deckenelement 3 und die Seitenwände 5 aufliegen bzw. an diesem angrenzen (hier nicht dargestellt). Zwischen den beiden Längsstegen 15b des Rahmens 15 sind zwei, im Wesentlichen parallel zueinander ausgerichtete Drehbügel 45 angeordnet, die jeweils an ihren freien Enden ein Drehbügelgelenk 46 aufweisen, mit denen diese am Rahmen 15 bzw. an den Längsstegen 15b des Rahmens 15 schwenkbar angeordnet sind. Im in Figur 40 gezeigten Zustand sind die Drehbügel 45 zur Seite verschwenkt und liegen auf dem Fahrzeugdach bzw. dem Bodenelement der Dachbox (hier nicht dargestellt) auf. Die Dachbox 1 befindet sich im eingefahren Zustand. Werden die Drehbügel 45 herumgeschwenkt, so dass sich diese nach oben aufstellen, wird die Dachbox 1 in den ausgefahrenen Zustand gebracht. Die Drehbügel 45 weisen einen Mittelsteg 45a, der im Wesentlichen parallel zu den Querstegen 15a des Rahmens 15 ausgerichtet ist, auf. An den Mittelsteg 45a schließt sich zu jeder Seite hin jeweils ein Außensteg 45b an, der schräg im Vergleich zum Mittelsteg 45a verläuft und jeweils in einem Drehbügelgelenk 46 endet. In den Verbindungsstellen zwischen Mittelsteg 45a und Außensteg 45b sind jeweils als nach oben vorstehende Wulste 51 ausgebildete Rastelemente vorgesehen. Entsprechend weist jeder Drehbügel 45 zwei solcher Wulste 51 auf. Diese Wulste 51 können in entsprechende Gegenvertiefungen 52 in dem Deckenelement 3 bzw. in den Flanschen 5a der Seitenwände 5 eingreifen (im ausgefahrenen Zustand der Dachbox 1), um so eine Verrastung herzustellen. Hierdurch wird ein stabiler Zustand für den ausgefahrenen Zustand der Dachbox 1 erreicht.

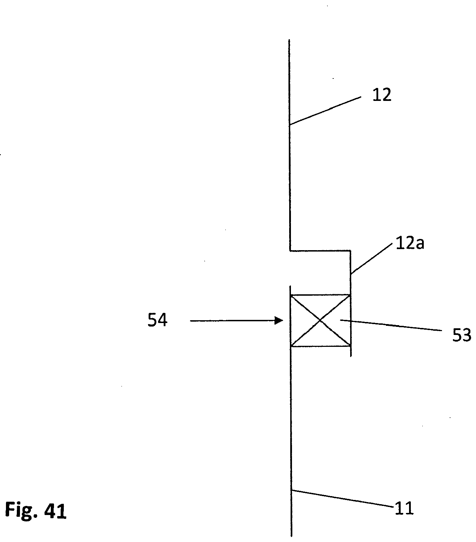

Figur 41 zeigt eine Detailansicht in Querschnittsansicht eines Bereichs, in dem zwei Seitenwandsegmente 11, 12 aneinander angrenzen. Die Seitenwandsegmente 11, 12 befinden sich im ausgefahrenen Zustand. Am unteren Ende des oberen Seitenwandsegmentes 12 ist ein nach innen und unten vorspringender, abgekanteter Bereich 12a vorgesehen. Das untere Seitenwandsegment 11 ist bereichsweise parallel zu diesem abgekanteten Bereich 12a angeordnet, so dass in diesem Bereich ein Überlappungsbereich 54 gebildet wird. In dem Überlappungsbereich 54 ist eine Dichtung 53 vorgesehen, die zum einen an der Innenseite des unteren Seitenwand Segmentes 11 und zum anderen an der Außenseite des abgekanteten Bereichs 12a anliegt und den Überlappungsbereich 54 abdichtet.

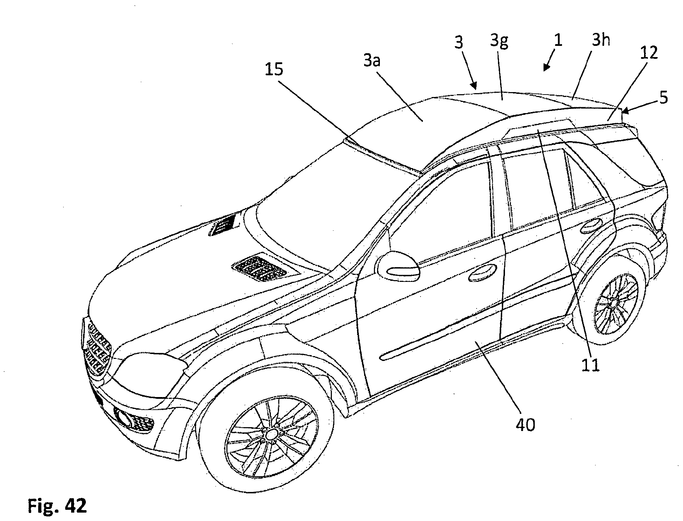

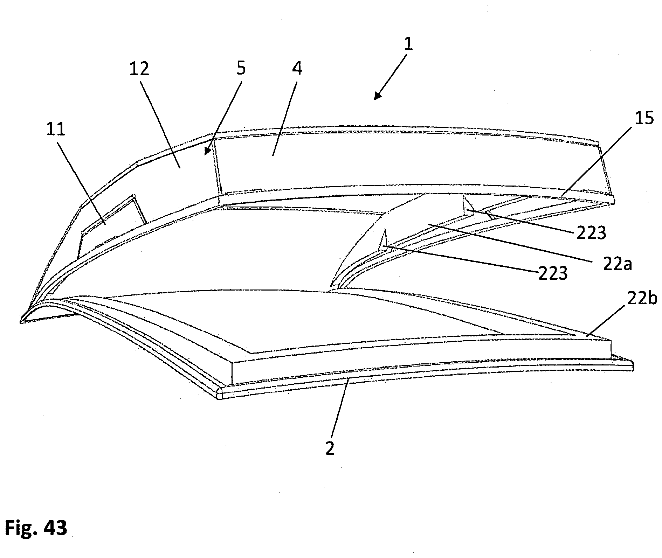

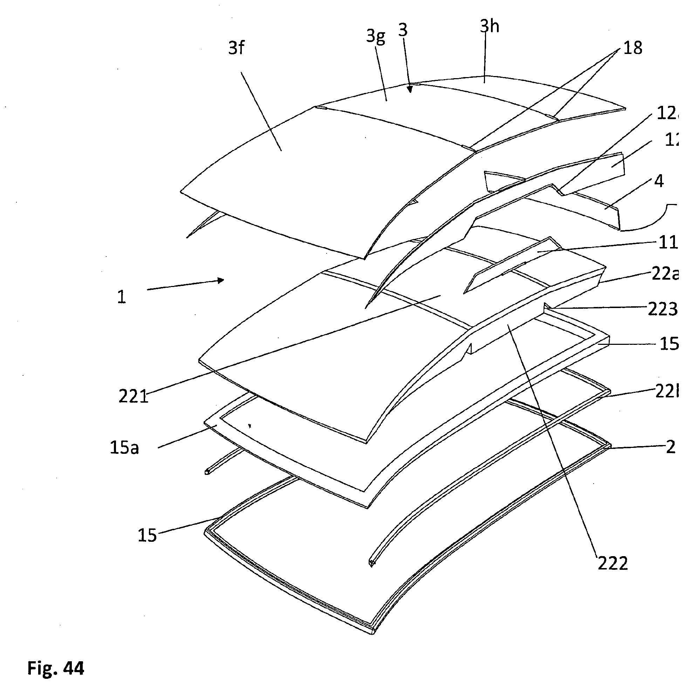

Die Figur 42 zeigt eine perspektivische Ansicht eines Kraftfahrzeuges 40, welches als SUV ausgebildet ist. Auf dem Dach des Kraftfahrzeuges 40 ist eine Dachbox 1 angeordnet, die sich im ausgefahrenen Zustand befindet. Der Aufbau der Dachbox 1 und das Prinzip des Zusammenfaltens und Auseinanderfaltens der Dachbox 1 entspricht im Wesentlichen der in Figuren 1 bis 7 dargestellten Ausführungsform einer Dachbox. Die Figur 43 zeigt die Dachbox 1 aus der Figur 42 ohne das Kraftfahrzeug und in einem ausgefahrenen und geöffneten Zustand, wohingegen die Dachbox 1 bei der Darstellung in Figur 42 geschlossen ist. In Figur 44 ist die gleiche Dachbox 1 in einer Explosionsdarstellung dargestellt. Die Dachbox 1 weist ein Deckenelement 3 auf, das aus drei in Längsrichtung hintereinander angeordneten und mittels Deckensegmentscharnieren 18 miteinander schwenkbar verbundenen Deckensegmenten 3f, 3g, 3h besteht. Die beiden Seitenwände 5 umfassen jeweils ein oberes Seitenwandsegment 12, das über die gesamte Länge der Seitenwand verläuft, und ein unteres Seitenwandsegment 11, welches trapezförmig ausgebildet ist und nur in einem mittleren Bereich der Seitenwand 5 angeordnet ist. Ferner verläuft das untere Seitenwandsegment 11 nicht über die gesamte Höhe der Seitenwand 5, sondern nur bis etwa zur Hälfte. Weiterhin umfasst die Dachbox 1 noch eine Rückwand 4, ein Bodenelement 2 und einen Rahmen 15, an dem die Rückwand 4 mittels Rückwandscharnieren 9 schwenkbar befestigt ist, so dass die Rückwand 4 zum Zusammenfalten nach unten auf das Bodenelement 2 schwenkt. Im ausgefahrenen Zustand liegen auch die Segmente 11, 12 der Seitenwände 5 am Rahmen 15 an. Der Rahmen 15 ist mittels an der vorderen Kante der Dachbox 1 angeordneten Scharniere bzw. sonstiger Schwenkmittel und über dem Bodenelement 2 hoch schwenkbar, so dass der vordere Quersteg 15a des Rahmens 15 auch im geöffneten Zustand der Dachbox 1 immer in Kontakt mit dem Bodenelement 2 verbleibt. Die Dachbox 1 ist im geöffneten Zustand entsprechend zweckmäßig von hinten zu beladen. Ferner umfasst die Dachbox 1 ein oberes Luftkissen 22a und ein unteres Luftkissen 22b. Das untere Luftkissen 22b ist U-förmig ausgebildet und weist zwei längliche U-Schenkel, die jeweils entlang der Längskanten des Bodenelementes 2 auf diesen aufliegen, und einen kürzeren Querschenkel, der entlang der rückwärtigen Kante des Bodenelementes 2 verläuft, auf. Im aufgepumpten Zustand ist das Luftkissen 22b gegenüber den Außenkanten des Bodenelementes 2 leicht nach innen versetzt angeordnet (siehe Figur 43). Das obere Luftkissen 22a weist eine Oberseite 221 auf, die im aufgepumpten Zustand in etwa bündig an der Innenseite des Deckenelementes 3 anliegt und im Wesentlichen die gesamte Innenfläche des Deckenelementes 3 abdeckt. An den äußeren Kanten der Längsseiten der Dachbox 1 und der Rückseite der Dachbox 1 steht von der Oberseite 221 des Luftkissens 22a ein Rand 222 nach unten vor. In den Längsseiten dieses Randes 222 sind jeweils zwei Aussparungen 223 vorgesehen, die nach unten hin offen sind. Die Aussparungen 223 befinden sich dort, wo sich abgekantete Bereiche 12a des oberen Seitenwandsegmentes 12 befinden, die im Grenzbereich zwischen dem oberen Seitenwandsegment 12 und dem unteren Seitenwandsegment 11 liegen. Diese abgekanteten Bereiche 12a überlappen einen Teilbereich des unteren Seitenwandsegmentes 11 im ausgefahrenen Zustand der Dachbox 1, so dass hier ein Schutz gegen Eindringen unerwünschter Partikel, Gase, Flüssigkeiten, etc. ins Innere der Dachbox 1 gewährleistet ist. Diese abgekanteten, nach innen verlaufenden Bereiche 12a liegen im Bereich der Aussparung 223 an, so dass diese das obere Luftkissen 22a nicht beschädigen können.

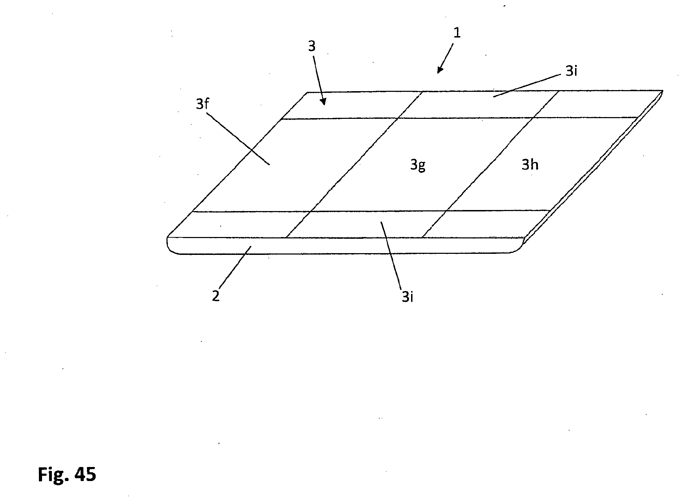

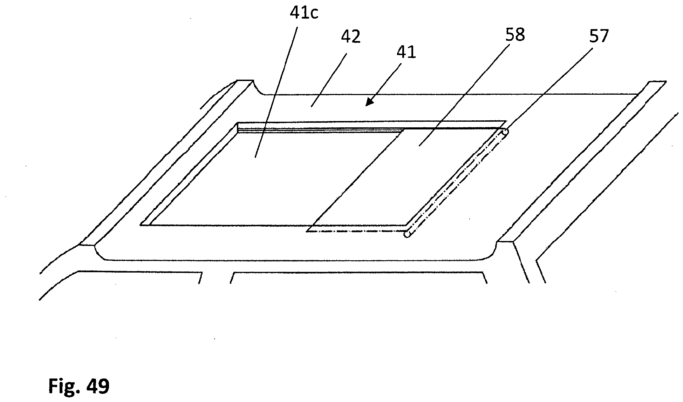

In den Figuren 45 bis 48 ist eine weitere Ausführungsform einer Dachbox 1 bzw. einzelne Komponenten dieser Dachbox 1 dargestellt, die für ein Kraftfahrzeug mit Sonnendach oder mit sonstigen Öffnungen im Kraftfahrzeugdach, durch die Sonnenlicht und/oder Frischluft ins Innere des Fahrzeuges gelangen soll, ausgebildet ist. In der Figur 49 ist das Dach eines solchen Fahrzeuges, für die die Dachbox 1 ausgebildet ist, dargestellt. Die Figur 45 zeigt die Dachbox 1 im zusammengefalteten bzw. eingefahrenen Zustand. Das Deckenelement 3 umfasst drei mittlere, hintereinander angeordnete Deckensegmente 3f, 3g, 3h, sowie zu jeder Seite dieser mittleren Deckensegmente 3f, 3g, 3h angeordnete Deckenelementseitenteile 3i, die sich jeweils über die gesamte Länge der Dachbox 1 erstrecken. Ferner ist in Figur 45 das Bodenelement 2 erkennbar.

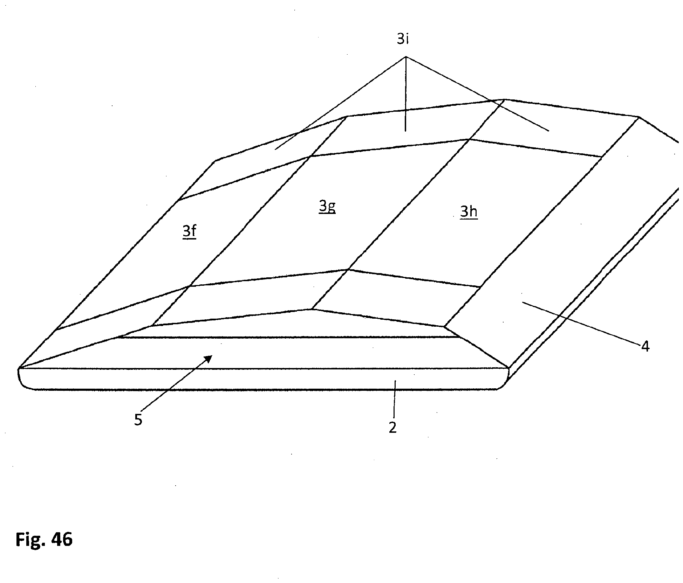

Figur 46 zeigt die Dachbox aus Figur 45 im ausgefahrenen Zustand, wobei hier zusätzlich die Rückwand 4 und die Seitenwände 5 erkennbar sind, wobei die Seitenwände 5 zwei Seitenwandsegmente aufweisen, die gegeneinander faltbar sind.

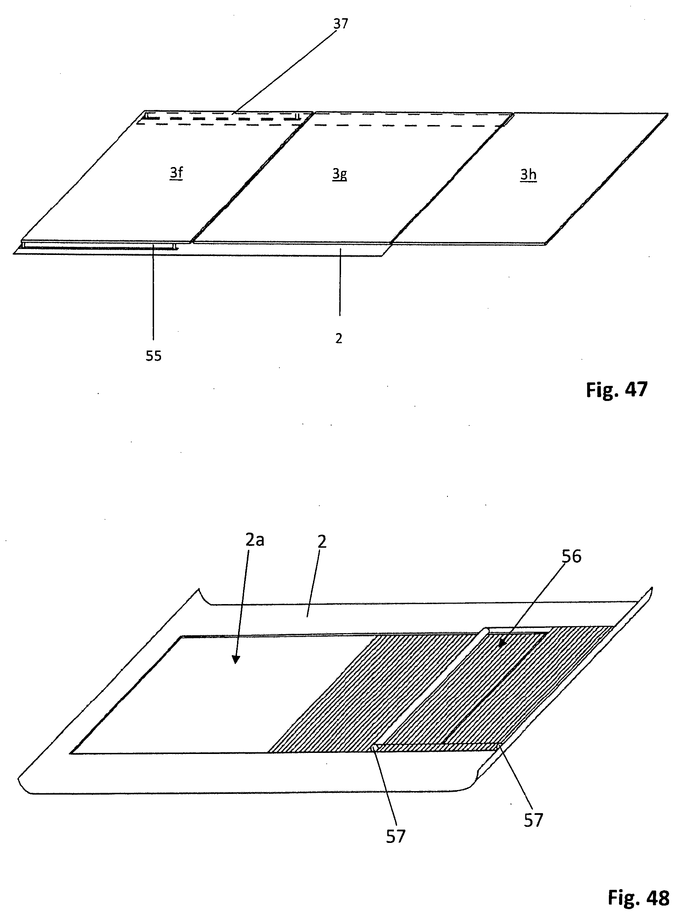

Die Figur 47 zeigt isoliert die mittleren Deckensegmente 3f, 3g, 3h, ohne die sie seitlich begrenzenden Deckenelementseitenteile 3i. Das Bodenelement 2 ist nur andeutungsweise dargestellt. Das vordere und das mittlere Deckensegment 3f, 3g sind aus einem transparenten Material, insbesondere Glas, hergestellt. Das hintere Deckensegment 3h kann dagegen aus einem normalen, nichttransparenten Material, beispielsweise Metallblech oder dergleichen, gefertigt sein. Will ein Benutzer eines Kraftfahrzeuges mit einem Sonnendach oder sonstiger Öffnung im Fahrzeugdach Frischluft durch das Dach in das Kraftfahrzeuginnere einlassen, kann er mit der Dachbox im eingefahrenen Zustand die mittleren Deckensegmente 3f, 3g nach hinten verfahren. Hierzu ist unterhalb des Deckensegmentes 3f eine Verfahrkufe 55 dargestellt, mit der das Deckensegment 3f auf dem Bodenelement 2 entlang verfahrbar ist. Das mittlere Deckensegment 3g kann ebenfalls eine solche Verfahrkufe 55 aufweisen (hier nicht dargestellt). Je nach Ausführung kann das vordere Deckensegment 3f über das mittlere Deckensegment 3g oder darunter nach hinten verschoben werden, wobei die Deckensegmente im Sinne einer Parallelverschiebung im verschobenen Zustand im Wesentlichen bündig aneinander anliegen. Gegebenenfalls sind Abstandshalter, Luftkissen oder dergleichen vorgesehen, so dass es nicht zu einem Zerkratzen oder einer sonstigen Beschädigung des Glases kommt. Zum Verfahren der Deckensegmente 3f und gegebenenfalls 3g ist ein Antrieb vorgesehen, der im vorliegenden Ausführungsbeispiel als Seilzug ausgebildet und mit dem Bezugszeichen 37 bezeichnet ist. Es sind jedoch alternativ auch andere geeignete Antriebe denkbar. Durch das Verfahren der Deckensegmente 3f und gegebenenfalls 3g ist es möglich, trotz installierter Dachbox 1, einen freien Zugang durch eine Öffnung des Kraftfahrzeugdaches und durch die durch die verschobenen Deckensegmente 3f, 3g geschaffene Öffnung im Deckenelement 3 der Dachbox 1 nach außen zu schaffen.

Damit ein solcher freier Zugang nach außen durch die Dachbox 1 hindurch möglich ist, ist zweckmäßigerweise in dem in Figur 48 dargestellten Bodenelement 2 ebenfalls eine Öffnung 2a vorgesehen. Diese Öffnung 2a entspricht von ihren Dimensionierungen her der zusammengenommenen Fläche der beiden mittleren Deckensegmente 3f, 3g und kann mittels eines als Lamellenjalousie 56 ausgebildeten Abdeckmittels abgedeckt oder auch wahlweise freigegeben werden. Die Lamellenjalousie 56 kann über geeignete Antriebsmittel (hier nicht dargestellt) und Rollen 57 auf- und abgerollt werden. Die Lamellenjalousie 56 ist zweckmäßigerweise aus einem derartigen Material auszubilden, dass sie stabil genug ist, dass die auf ihr zu transportierenden Gegenstände und dergleichen abgestellt werden können, ohne dass die Jalousie beschädigt wird oder die Gegenstände gar durch die Jalousie ins Innere des Kraftfahrzeuges durchbrechen.

In Figur 49 ist ein Fahrzeugdach 41 eines Kraftfahrzeuges vorgesehen, das eine Vertiefung 42 aufweist, in die die Dachbox 1 formschlüssig eingreift. Auch im Fahrzeugdach 41 ist eine Öffnung 41c vorgesehen, die mit ihren Dimensionierungen der Öffnung 2a des Bodenelementes 2 bzw. der zusammengenommenen Fläche der beiden mittleren Deckensegmente 3f, 3g entspricht. Die Öffnung 41c ist mittels eines als Rollo 58 ausgebildeten Abdeckmittels abdeckbar bzw. freilegbar. Das Rollo 58 ist mittels einer Rolle 57 auf- und abrollbar. Sind das Rollo 58, die Lamellenjalousie 56 und die mittleren Deckensegmente 3f und gegebenenfalls zusätzlich 3g in eine Freigabeposition verfahren, entsteht ein freier Zugang vom Inneren des Fahrzeuges aus durch die Öffnungen 41c, 2a und die freigegebene Öffnung im Deckenelement 3 nach außen. Wahlweise können in einem solchen Zustand auch die Deckenelemente 3f und 3g zugefahren werden, so dass zwar keine Außenluft, jedoch Sonnenlicht durch die vorgenannten Öffnungen ins Innere des Fahrzeuges dringen kann.

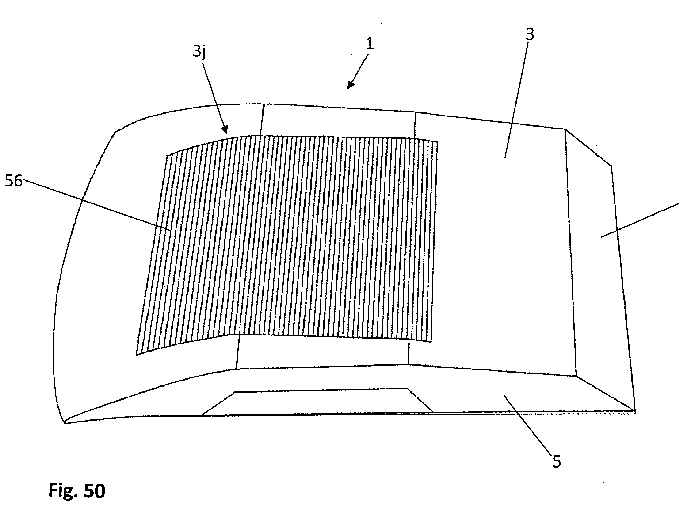

Die Figuren 50 bis 56 zeigen verschiedene Ansichten einer weiteren Ausführungsform einer Dachbox 1 bzw. Komponenten hiervon, die zur Verwendung bei einem Kraftfahrzeug mit einem Sonnendach oder einer sonstigen Öffnung im Kraftfahrzeugdach geeignet ist.

Die Figur 50 zeigt eine perspektivische Ansicht der Dachbox 1 im ausgefahrenen Zustand. Es ist erkennbar, dass im Deckenelement 3 eine in etwa rechteckige Öffnung 3j vorgesehen ist. Diese Öffnung 3j ist in der Darstellung der Figur 50 mit einer Lamellenjalousie 56 abgedeckt bzw. verschlossen. Diese Lamellenjalousie 56 wirkt als Abdeckmittel für die Öffnung 3j und kann wahlweise zugezogen oder zurückgezogen werden. Insbesondere kann die Lamellenjalousie 56 in der Art eines Rollos aufgerollt werden.

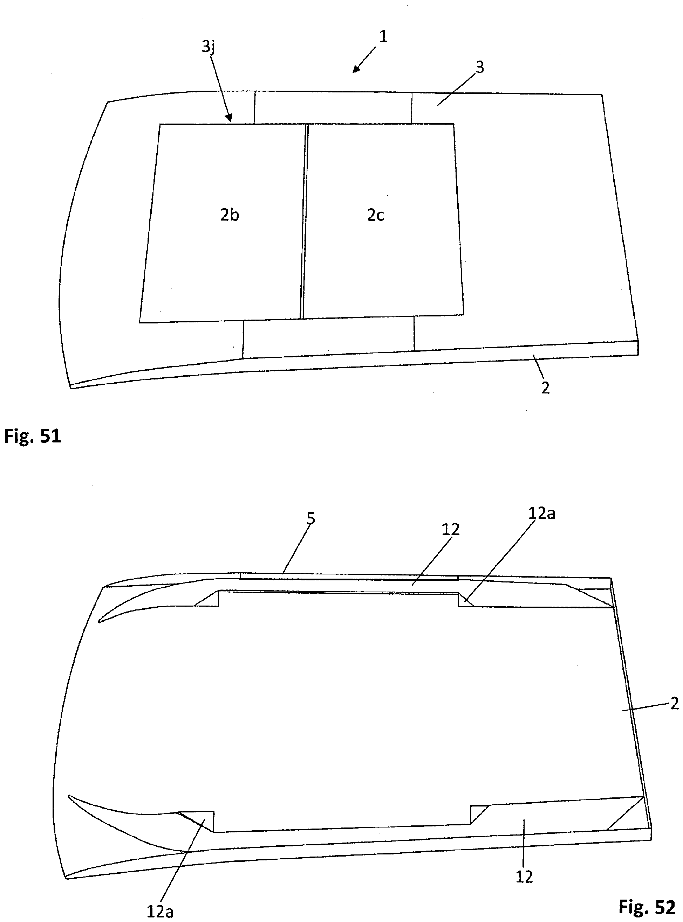

Figur 51 zeigt eine perspektivische Ansicht der Dachbox 1 im eingefahrenen Zustand. Ferner ist die Lamellenjalousie 56 eingerollt bzw. zurückgezogen, so dass sie die Öffnung 3j im Deckenelement 3 frei gibt. Durch die Öffnung 3j hindurch sind zwei transparente Bodensegmente 2b, 2c des Bodenelementes 2 zu erkennen, die zweckmäßigerweise aus Glas ausgebildet sind. Unter den Bodensegmenten 2b, 2c ist eine Öffnung im Fahrzeugdach vorgesehen (hier nicht dargestellt), die zweckmäßigerweise ebenfalls mittels geeigneter Abdeckmittel abgedeckt oder freigegeben werden kann. Ist die Dachbox 1 in dem in Figur 51 gezeigten Zustand am Fahrzeugdach montiert bzw. installiert und die Öffnung im Fahrzeugdach freigegeben, kann Sonnenlicht durch die transparenten Bodensegmente 2b, 2c ins Innere des Fahrzeuges gelangen. Wahlweise können die transparenten Bodensegmente 2b, 2c auch in eine Freigabeposition zurückgefahren werden, so dass dann eine Öffnung im Bodenelement 2 entsteht, durch die hindurch, im Zusammenspiel mit der Öffnung 3j im Deckenelement und der Öffnung im Fahrzeugdach, ein freier Zugang von außen ins Innere des Fahrzeuges besteht.

Figur 52 zeigt das Bodenelement 2 mit darauf angeordneten, zusammengefalteten Seitenwänden 5, wobei im zusammengefalteten Zustand nur das obere Seitenwandsegment 12 erkennbar ist, da das kleinere, in der Mitte der Seitenwand 5 angeordnete untere Seitenwandsegment unterhalb des Seitenwandsegmentes 12 bzw. zwischen dem Bodenelement 2 und dem Seitenwandsegment 12 liegt. In den Eckbereichen der Ausnehmung zur Aufnahme des unteren Seitenwandsegments 11 in das obere Seitenwandsegment 12 sind abgekantete Bereiche 12a erkennbar, die nach innen, d. h. im zusammengefalteten Zustand nach oben, vorstehen.

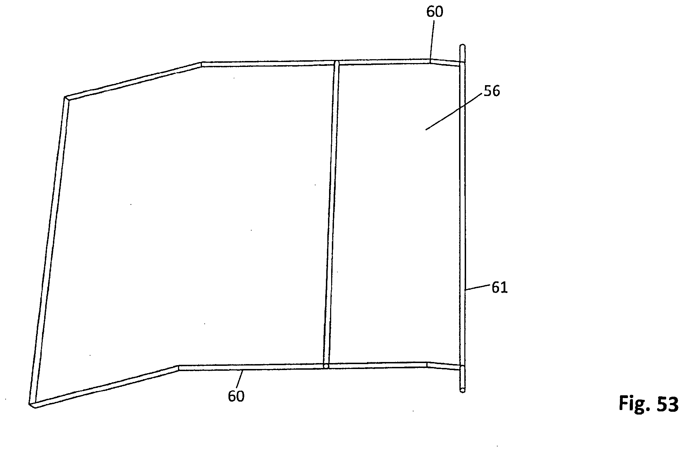

Die Figur 53 zeigt eine Detailansicht eines Rahmens 60 für die Lamellenjalousie 56. Die Lamellenjalousie 56 ist auf eine am Rahmen 60 befestigte Rolle 61 aufrollbar und kann entlang des Rahmens 60 verfahren werden. Der Rahmen 60 ist bevorzugt in der Öffnung 3j des Deckenelementes 3 angeordnet.

Figur 4 zeigt eine Detailansicht eines Stützgestänges 59, welches im Bereich der Öffnung 3j des Deckenelementes 3, jedoch unterhalb der Öffnung 3j und des Rahmens 60 angeordnet ist. Das Stützgestänge 59 umfasst eine vordere Querstange 59a und eine hintere Querstange 59b sowie zwei diese verbindenden Längsstangen 59c, 59d. Das Stützgestänge 59 ist insbesondere an der Innenseite des Deckenelementes 3 anzuordnen. Ferner ist erkennbar, dass aus den Längsstangen 59c, 59d seitlich nach außen Stabilisatoren 62 ausfahren, die aus kreuzweise angeordneten Stangen 63 und einer äußeren, parallel zu den Längsstangen 59c, 59d angeordneten Abschlussstange 64 bestehen. Die beiden Kreuzstangen 63 sind in einem mittleren Gelenkspunkt 65 gelenkig miteinander verbunden.

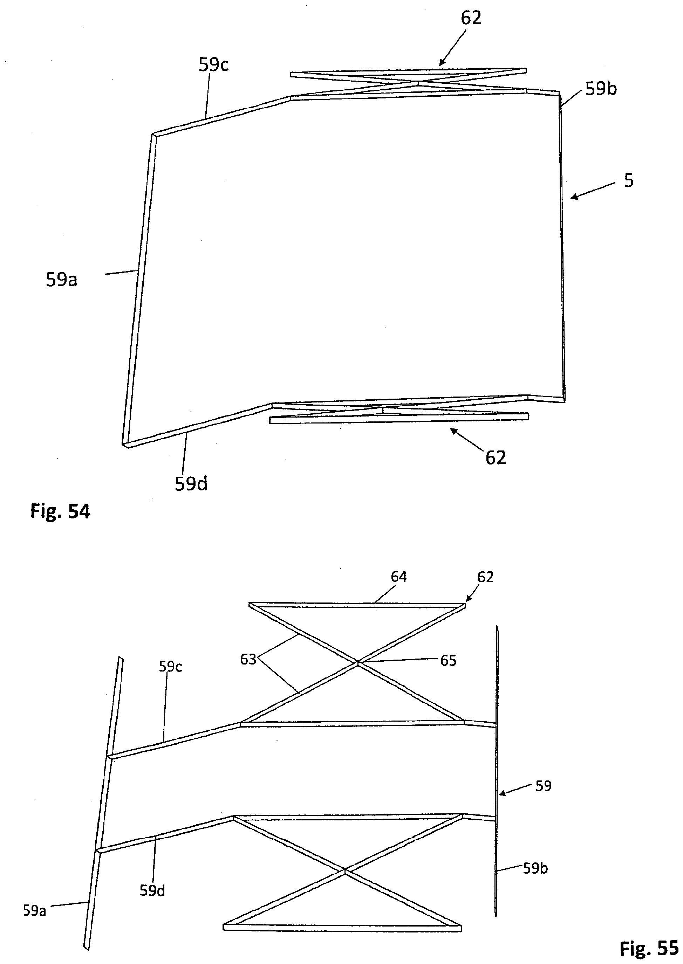

In Figur 55 ist ein weiterer Verfahrzustand des Stützgestänges 59 dargestellt. Es ist erkennbar, dass die Längsstangen 59c, 59d aufeinander zu nach innen verfahren sind, wobei die freien Enden der beiden Längsstangen 59c, 59d entlang der vorderen und hinteren Querstangen 59a, 59b verfahren. Die Stabilisatoren 62 sind gegenüber der Darstellung in Figur 54 weiter ausgefahren. In diesem Zustand stützt das Stützgestänge 59 im Zusammenspiel mit den ausgefahrenen Stabilisatoren und den verschobenen Längsstangen 59c, 59d die darüber liegende Lamellenjalousie 56 ab, so dass diese relativ große Kräfte aufnehmen kann, ohne Schaden zu nehmen.

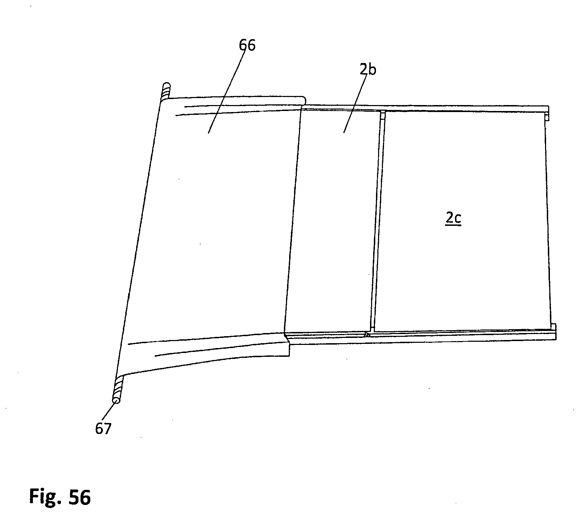

Figur 56 zeigt die beiden transparenten Bodensegmente 2b, 2c des Bodenelementes 2. Ferner ist dargestellt, dass eine Schutzhülle 66 über die linke Hälfte des Bodensegmentes 2b verfahren ist. Die Schutzhülle 66 wickelt sich von einer Rolle 67 ab und kann im weiteren Verlauf die gesamten Bodensegmente 2b, 2c bedecken. Die Schutzhülle 66 kann beispielsweise aus einem Stoff oder dergleichen bestehen. Alternativ oder zusätzlich kann die Schutzhülle 66 auch Gaskissen oder dergleichen aufweisen. Die Überziehung der Bodensegmente 2b, 2c mit der Schutzhülle 66 ist insbesondere dann zweckmäßig, wenn Gegenstände in die Dachbox eingebracht werden, so dass ein Zerkratzen der aus Glas bestehenden Bodensegmente 2b, 2c vermieden wird.

### Bezugszeichenliste

- 1: Dachbox
- 2: Bodenelement
- 2a: Öffnung in Bodenelement
- 2b, 2c: transparentes Bodensegment
- 3: Deckenelement
- 3a: Deckensegment
- 3aa: Biegelinie
- 3b: Deckensegment
- 3bb: Oberseite Deckelement
- 3c: Deckensegment
- 3cc: Seitenteil Deckenelement
- 3d: Hinterer Bereich Deckenelement
- 3e: Vorderer Bereich Deckenelement
- 3f, 3g, 3h: Deckensegment
- 3i: Deckenelementseitenteil
- 3j: Öffnung in Deckenelement
- 4: Rückwand
- 5: Seitenwand
- 5a: Flansch
- 6: Innenraum
- 7: Untere Seitenwandscharniere
- 8: Obere Seitenwandscharniere
- 9: Rückwandscharniere

- 10: Mittelscharniere
- 11: Untere Seitenwandsegmente
- 12: Obere Seitenwandsegmente
- 12a: abgekanteter Bereich
- 13: Querträger
- 14: Längsträger
- 15: Rahmen
- 15a: Quersteg Rahmen
- 15b: Längssteg Rahmen
- 16: Vordere Deckenelementscharniere
- 17: Rahmenscharniere
- 18: Deckensegmentscharniere
- 19: Bodenwandung

- 20: Befestigungsmittel
- 21: Knickgelenk
- 22: Luftkissen
- 22a: oberes Luftkissen
- 22b: unteres Luftkissen
- 221: Oberseite Luftkissen
- 222: Rand Luftkissen
- 223: Aussparung in Luftkissen
- 23: Scharnierverschlüsse
- 24: Aussparungen
- 25: Klappdach
- 26: Vorderes Gelenk
- 27: Hinteres Gelenk
- 28: Dachoberfläche
- 29: Kofferraumklappe

- 30: Oberteil
- 31: Hubvorrichtung
- 32: Gelenk
- 33: Stangen
- 34: Gelenkpunkt
- 35: Fahrzeugdachöffnung
- 36: Verdeck
- 37: Seilzug

- 40: Kraftfahrzeug
- 41: Fahrzeugdach
- 41a: Vorderkante Fahrzeugdach
- 41b: Hinterkante Fahrzeugdach
- 41c: Öffnung in Fahrzeugdach
- 42: Vertiefung
- 42a: Hinterkante Vertiefung
- 42b: Vorderkante Vertiefung
- 42c: Seitenkante Vertiefung
- 43: Verschieberichtung
- 44: Biegelinie
- 45: Drehbügel
- 45a: Mittelsteg
- 45b: Außensteg
- 46: Drehbügelgelenk
- 47: Federbügel
- 48: Halteband
- 49: Schiene

- 50: Dachvertiefung
- 51: Wulst
- 52: Wulst-Gegenstück
- 53: Dichtung
- 54: Überlappungsbereich
- 55: Verfahrkufe
- 56: Lamellenjalousie
- 57: Rolle
- 58: Rollo
- 59: Stützgestänge
- 59a: vordere Querstange
- 59b: hintere Querstange
- 59c, 59d: Längsstange

- 60: Rahmen
- 61: Rolle
- 62: Stabilisatoren
- 63: Kreuzstange
- 64: Abschlussstange
- 65: Gelenk
- 66: Schutzhülle
- 67: Rolle

## Patentansprüche

1. Dachbox (1) für Kraftfahrzeuge zur Ausbildung eines nutzbaren Innenraums (6) zur Anordnung bzw. Lagerung von Gegenständen, wobei die Dachbox (1) in das Dach eines Kraftfahrzeuges integrierbar ausgebildet ist, wobei Volumenänderungsmittel zum Ändern des Volumens des Innenraums (6) vorgesehen sind, wobei die Dachbox (1) als eigenständiger, in sich geschlossener Behälter ausgebildet ist, wobei die Dachbox (1) Wandungselemente zur Ausbildung des Innenraums (6) umfasst und wobei die Wandungselemente ein Bodenelement (2), ein Deckenelement (3), eine Rückwand (4) und/oder eine oder mehrere Seitenwände (5) umfassen, wobei die Dachbox (1) ein Oberteil (30), das einen Deckel für die Dachbox (1) bildet und gegenüber einem Unterteil der Dachbox (1) in einem ausgefahrenen Zustand der Dachbox verschwenkbar ist, umfasst, wobei das Oberteil (30) vom Deckenelement (3) und/oder der Rückwand (4) und/oder den Seitenwänden (5) gebildet wird.

2. Dachbox nach Anspruch 1, **dadurch gekennzeichnet, dass** die Dachbox (1) mittels der Volumenänderungsmittel zwischen einem ausgefahrenen Zustand, in dem der Innenraum (6) ein maximales Volumen aufweist, und einem eingefahrenen Zustand, in dem der Innenraum (6) ein minimales Volumen aufweist, verfahrbar ist, wobei insbesondere das minimale Volumen weniger als 50%, bevorzugt weniger als 25%, besonders bevorzugt weniger als 10% des maximalen Volumens beträgt; und/oder die Dachbox (1) Aktivierungsmittel zum Aktivieren der Volumenänderungsmittel umfasst.

3. Dachbox nach Anspruch 1 oder 2, , **dadurch gekennzeichnet, dass** zumindest eines der Wandungselemente oder Teile eines Wandungselementes vom Dach eines Kraftfahrzeugs gebildet ist; und/oder die Volumenänderungsmittel Schwenkmittel umfassen, wobei die Schwenkmittel zum Verschwenken einzelner Wandungselemente und/oder zum Verschwenken von Segmenten einzelner Wandungselemente ausgebildet sind.

4. Dachbox nach Anspruch 3, **dadurch gekennzeichnet, dass** die Schwenkmittel ein Gelenk, insbesondere ein Scharnier (8, 9, 10), oder einen elastisch und/oder plastisch verformbaren Materialabschnitt umfassen, und/oder die Rückwand (4) und/oder die Seitenwände (5) mittels Schwenkmitteln mit dem Deckenelement (3) und/oder dem Bodenelement (2) verbunden sind.

5. Dachbox nach Anspruch 4, **dadurch gekennzeichnet, dass** die Rückwand (4), die Seitenwände (5) und/oder das Deckenelement (3) mindestens zwei Rückwandsegmente, mindestens zwei Seitenwandsegmente (11, 12) und/oder mindestens zwei Deckensegmente (3a, 3b, 3c) aufweisen, wobei die mindestens zwei Segmente der Rückwand (4), der Seitenwände (5) und/oder des Deckenelements (3) mittels Schwenkmitteln miteinander verbunden sind, wobei bevorzugt die mindestens zwei Segmente der Rückwand (4) oder die mindestens zwei Segmente der Seitenwände (5) nach innen einklappbar sind.

6. Dachbox nach Anspruch 5, **dadurch gekennzeichnet, dass** die Schwenkmittel zwischen den beiden Seitenwandsegmenten (11, 12) und/oder zwischen den beiden Rückwandsegmenten und/oder zwischen den beiden Deckensegmenten (3a, 3b, 3c) um eine im Wesentlichen horizontal ausgerichtete Schwenkachse schwenken; und/oder die Seitenwände (5) jeweils mindestens zwei Seitenwandsegmente (11, 12) aufweisen, wobei in Längsrichtung der Seitenwand (5) betrachtet sich ein erstes Seitenwandsegment (12) bis zu einem vorderen Bereich der Seitenwand (5), welcher im montierten Zustand der Dachbox (1) der Vorderseite eines Kraftfahrzeugs zugewandt ist, erstreckt, und sich ein zweites Seitenwandsegment (11) nicht in den vorderen Bereich der Seitenwand (5) erstreckt, wobei insbesondere der vordere Bereich der Seitenwand (5) in dem Bereich beginnt, in dem die Dachfläche des Kraftfahrzeugs beginnt sich nach außen zu krümmen.

7. Dachbox nach Anspruch 6, **dadurch gekennzeichnet, dass** sich in Längsrichtung der Seitenwand (5) betrachtet der vordere Bereich der Seitenwand (5) an einen mittleren Bereich der Seitenwand (5) und der mittlere Bereich an einen hinteren Bereich der Seitenwand (5) anschließt, wobei die Seitenwand (5) aus dem vorderen Bereich, dem mittleren Bereich und dem hinteren Bereich besteht, und das zweite Seitenwandsegment (11) im hinteren Bereich und/oder im mittleren Bereich, bevorzugt ausschließlich im mittleren Bereich angeordnet ist, und/oder das erste Seitenwandsegment (12) im vorderen Bereich und im mittleren Bereich und/oder im hinteren Bereich, bevorzugt im vorderen Bereich und im mittleren Bereich und im hinteren Bereich, angeordnet ist.

8. Dachbox nach einem der Ansprüche 3 bis 7, **dadurch gekennzeichnet, dass** die Dachbox (1) einen Rahmen (15), vorzugsweise umfassend zwei Querträger (13) und zwei Längsträger (14), aufweist und der Rahmen (15) mittels der Schwenkmittel mit dem Bodenelement (2), mit der Rückwand (4), mit Seitenwänden (5) und/oder mit dem Deckenelement (3) verbunden ist; und/oder sich die Seitenwände (5) zur Vorderseite der Dachbox (1) hin in der Höhe verjüngen und zusammen mit dem Deckenelement (3), welches entsprechend der Dachform eines Kraftfahrzeugs gekrümmt ausgebildet ist, eine etwa keilförmige, aerodynamische Form bilden.

9. Dachbox nach einem der Ansprüche 1 bis 3 wobei die Dachbox (1) Wandungselemente zur Ausbildung des Innenraums (6) umfasst, **dadurch gekennzeichnet, dass** die Volumenänderungsmittel Verformungsmittel zur reversiblen Formänderung eines Wandungselementes oder eines Teilbereichs eines Wandungselementes von einem ersten Verformungszustand, der einem eingefahren Zustand der Dachbox (1) entspricht, in einen zweiten Verformungszustand, der einem ausgefahren Zustand der Dachbox (1) entspricht, aufweisen, wobei eine Aktivierungseinrichtung zur Aktivierung der Verformungsmittel vorgesehen ist.

10. Dachbox nach Anspruch 9, **dadurch gekennzeichnet, dass** die Verformung des Wandungselementes bzw. des Teilbereichs des Wandungselementes eine Verbiegung des Wandungselementes bzw. des Teilbereichs des Wandungselementes umfasst, wobei im Wandungselement bzw. im Teilbereich des Wandungselements Soll-Biegestellen oder Soll-Biegelinien vorgesehen sind, um die herum die Verbiegung erfolgt; und/oder der Innenraum (6) von einem Bodenelement (2) und einem Deckenelement (3) gebildet ist, wobei die Verformungsmittel im Deckenelement (3) vorgesehen sind.

11. Dachbox nach einem der Ansprüche 2 bis 10, **dadurch gekennzeichnet, dass** die Aktivierungsmittel pneumatisch steuerbare Gaskissen, insbesondere Luftkissen, Elektromotoren, insbesondere Servomotoren, Federn, Magnete und/oder Elektromagnete umfassen, die insbesondere mit einer Steuerungsvorrichtung verbunden sind, um die Dachbox (1) automatisiert zwischen einem eingefahrenen und einem ausgefahrenen Zustand zu verfahren, wobei die Aktivierungsmittel bevorzugt an den Schwenkmitteln und/oder den Wandungselementen vorgesehen sind und wobei besonders bevorzugt pro Schwenkmittel ein Luftkissen, ein Elektromagnet und eine Feder vorgesehen sind; und/oder dass eine Hebevorrichtung (31) zum Bewegen des Oberteils (30) zwischen einer OffenPosition und einer Geschlossen-Position der Dachbox (1) vorgesehen ist, wobei das Oberteil (30) beim Bewegen zwischen den beiden Positionen bevorzugt mittels eines Schwenkmittels um ein Schwenkachse schwenkbar ist und wobei besonders bevorzugt ein, insbesondere in sich geschlossener, Rahmen vorgesehen ist, der einen unteren Abschluss für das Oberteil (30) bildet und mit dem das Oberteil (30) in geschlossenen Zustand auf einem Unterteil der Dachbox (1) aufliegt.

12. Dachbox nach Anspruch 11, **dadurch gekennzeichnet, dass** das das Oberteil (30) ein Innenvolumen von mindestens 40%, bevorzugt mindestens 60%, besonders bevorzugt mindestens 80% des Gesamtvolumens der Dachbox (1) aufweist.

13. Dachbox nach einem der Ansprüche 3 bis 12, **dadurch gekennzeichnet, dass** an einem oder mehreren der Wandungselemente Stützelemente zur Abstützung benachbarter Wandungselemente in einem ausgefahrenen Zustand der Dachbox (1) vorgesehen sind, wobei die Stützelemente bevorzugt gleichzeitig einen Anschlag beim Verschwenken der Wandungselemente bilden.

14. Dachbox nach einem der Ansprüche 2 bis 13, **dadurch gekennzeichnet, dass** Arretiermittel zum Arretieren der Dachbox (1) im eingefahrenen und/oder im ausgefahrenen Zustand vorgesehen sind, wobei bevorzugt die Arretiermittel an den Stützelementen angeordnet sind und ferner bevorzugt die Arretiermittel Elektromagneten umfassen.

15. Dachbox nach einem der Ansprüche 3 bis 14, **dadurch gekennzeichnet, dass** die Grundfläche des Bodenelements (2) kein Polygon, insbesondere kein Rechteck, ist und/oder dass die Form der Grundfläche des Bodenelements (2) im Wesentlichen der Form der Dachfläche des Kraftfahrzeugs entspricht; und/oder die Volumenänderungsmittel zur Bewegung einzelner Wandungselemente und/oder einzelner Abschnitte von Wandungselementen kein Gestänge und/oder keine elektromechanischen oder mechanischen Zylinder umfassen und/oder die Volumenänderungsmittel mindestens ein Gestänge, insbesondere einen Drehbügel, umfassen, das zum Verfahren der Dachbox zwischen dem eingefahren Zustand und dem ausgefahrenen Zustand ausgebildet ist, wobei das Gestänge bevorzugt Rastmittel zum Einrasten in einem ausgefahrenen Zustand der Dachbox (1) und/oder in einem eingefahrenen Zustand der Dachbox (1) aufweist.

16. Dach eines Kraftfahrzeugs, **dadurch gekennzeichnet, dass** in das Dach integriert eine Dachbox nach einem der vorhergehenden Ansprüche angeordnet ist.

17. Dach nach Anspruch 16, **dadurch gekennzeichnet, dass** das Dach eine Dachvertiefung (214) zur Aufnahme der Dachbox (1) aufweist; und/oder die Dachbox mindestens 80%, bevorzugt mindestens 90%, besonders bevorzugt mindestens 95% der gesamten Dachfläche des Daches abdeckt und/oder im Fahrzeugdach (41) eine Fahrzeugdachöffnung (35) vorgesehen ist, die komplementär zu der Öffnung im Bodenelement (2) oder im Deckenelement (3) der Dachbox (1) ausgebildet ist.

18. Kraftfahrzeug, **dadurch gekennzeichnet, dass** das Kraftfahrzeug ein Dach nach einem der vorhergehenden Ansprüche aufweist.

## Claims

1. A roof box (1) for motor vehicles to form a useful interior space (6) for arranging or storing objects, wherein the roof box (1) is designed such that it can be integrated into the roof of a motor vehicle, wherein volume changing means for changing the volume of the interior space (6) are provided, wherein the roof box (1) is formed as an independent, self-contained box, wherein the roof box (1) comprises wall elements for forming the interior space (6) and wherein the wall elements comprise a floor element (2), a ceiling element (3), a rear wall (4) and/or one or several side walls (5), wherein the roof box (1) comprises an upper element (30) which forms a lid for the roof box (1) and is pivotable against a bottom element of the roof box (1) in an extended state of the roof box, wherein the upper element (30) is formed by the ceiling element (3), and/or the rear wall (4) and/or the side walls (5)

2. The roof box according to claim 1, **characterized in that** the roof box (1) can be moved by means of the volume changing means between an extended state, in which the interior space (6) has a maximum volume, and a retracted state, in which the interior space (6) has a minimum volume, wherein in particular the minimum volume is less than 50%, preferably less than 25%, and particularly preferably less than 10% of the maximum volume; and/or the roof box (1) comprises activation means to activate the volume change means.

3. The roof box according to claim 1 or 2, **characterized in that** at least one of the wall elements or parts of a wall element is formed by the roof of a motor vehicle; and/or that the volume changing means comprise pivoting means, wherein the pivoting means are designed to pivot individual wall elements and/or segments of individual wall elements

4. The roof box according to claim 3, **characterized in that** the pivoting means comprise an articulation, in particular a hinge (8, 9, 10) or an elastically and/or plastically deformable material section, and /or the rear wall (4) and/or the side walls (5) are connected with the ceiling element (3) and/or the floor element (2) by means of pivoting means.

5. The roof box according to claim 4, **characterized in that** the rear wall (4), the side walls (5) and/or the ceiling element (3) have at least two rear wall segments, at least two side wall segments (11, 12) and/or at least two ceiling segments (3a, 3b, 3c), wherein the at least two segments of the rear wall, of the side walls and/or of the ceiling element (3) are connected to each other by pivoting means, wherein preferably the at least two segments of the rear wall (4) or the at least two segments of the side walls (5) can be folded inward.

6. The roof box according to claim 5, **characterized in that** the pivoting means pivot between the two side wall segments (11, 12) and/or between the two rear wall segments and/or between the two ceiling segments (3a, 3b, 3c) about a substantially horizontally aligned axis of rotation; and/or the side walls (5) each have at least two side wall segments (11, 12), wherein viewed in the longitudinal direction of the side wall (5), a first side wall segment (12) extends up to a front region of the side wall (5) that faces the front side of a motor vehicle when the roof box (1) is in the mounted state, and a second side wall segment (11) does not extend into the front region of the side wall (5), wherein in particular the front region of the side wall (5) begins in the region in which the roof surface of the motor vehicle begins to curve outward.

7. The roof box according to claim 6, **characterized in that**, when viewed in the longitudinal direction of the side wall (5), the front region of the side wall (5) adjoins a middle region of the side wall (5), and the middle region adjoins a rear region of the side wall (5), wherein the side wall (5) consists of the front region, the middle region, and the rear region, and the second side wall segment (11) is arranged in the rear region and/or in the middle region, preferably only in the middle region, and/or the first side wall segment (12) is arranged in the front region and in the middle region and/or in the rear region, preferably in the front region and in the middle region and in the rear region.

8. The roof box according to any one of claims 3 to 7, **characterized in that** the roof box (1) has a frame (15), preferably comprising two cross members (13) and two longitudinal members (14), and that the frame (15) is connected by means of the pivoting means with the floor element (2), with the rear wall (4), with side walls (5) and/or with the ceiling element (3); and/or that the side walls (5) taper in height toward the front side of the roof box (1) and, together with the ceiling element (3), which is designed curved corresponding to the shape of a motor vehicle roof, form an approximately wedge-like aerodynamic shape.

9. The roof box according to any one of claims 1 to 3, wherein the roof box (1) comprises wall elements to form the interior space (6), **characterized in that** the volume changing means have deformation means for reversibly changing the shape of a wall element, or a section of a wall element, from a first deformation state corresponding to a retracted state of the roof box (1) into a second deformation state corresponding to an extended state of the roof box (1), wherein an activation device is provided to activate the deformation means.

10. The roof box according to claim 9, **characterized in that** the deformation of the wall element, or respectively the section of the wall element, comprises a bending of the wall element, or respectively the section of the wall element, wherein designated bending sites or designated bending lines are provided in the wall element, or in the section of the wall element, around which the bending occurs; and/or the interior space (6) is formed by a floor element (2) and a ceiling element (3), wherein the deformation means are provided in the ceiling element (3).

11. The roof box according to any one of claims 2 to 10, **characterized in that** the activation means comprise pneumatically controllable gas cushions, in particular air cushions, electric motors, in particular servomotors, springs, magnets and/or electromagnets that are in particular connected to a control device in order to automatically move the roof box (1) between a retracted and an extended state, wherein the activation means are provided preferably on the pivoting means and/or the wall elements, and wherein particularly preferably one air cushion, one electromagnet and one spring is provided for each pivoting means; and/or that a lifting device (31) is provided to move the upper element (30) between an open position and a closed position of the roof box (1), wherein the upper element (30) can be pivoted, preferably by a pivoting means, about an axis of rotation when moving between the two positions, and wherein particularly preferably a frame, in particular a self-contained frame, is provided that forms a bottom termination for the upper element (30) and by means of which the upper element (30), when in a close state, lies on a bottom element of the roof box (1).

12. The roof box according to claim 11, **characterized in that** the upper element (30) has an interior volume of at least 40%, preferably at least 60%, and particularly preferably at least 80% of the overall interior volume of the roof box (1).

13. The roof box according to any one of claims 3 to 12, **characterized in that** support elements are provided on one or more of the wall elements to support adjacent wall elements when the roof box (1) is in an extended state, wherein the support elements preferably simultaneously form a stop when pivoting the wall elements.

14. The roof box according to any one of claims 2 to 13, **characterized in that** locking means are provided to lock the roof box (1) in the retracted state and/or the extended state, wherein the locking means are preferably arranged at the support elements, and further, the locking means preferably comprise electromagnets.

15. The roof box according to any one of claims 3 to 14, **characterized in that** the base surface of the floor element (2) is not a polygon and is in particular not a rectangle, and/or that the shape of the base surface of the floor element (2) substantially corresponds to the shape of the roof surface of the motor vehicle; and/or that the volume changing means for moving individual wall elements and/or individual sections of wall elements comprise no arrangement of rods and/or no electromechanical or mechanical cylinders, and/or the volume changing means comprise at least one arrangement of rods, in particular one swivel bow, that is designed to move the roof box between the retracted state and the extended state, wherein the arrangement of rods preferably has latching means for latching when the roof box (1) is in an extended state and/or a retracted state.

16. A roof of a motor vehicle, **characterized in that** a roof box according to one of the preceding claims is arranged integrated into the roof.

17. The roof according to claim 16, **characterized in that** the roof has a roof recess (214) to accommodate the roof box (1); and/or that the roof box covers at least 80%, preferably at least 90%, particularly preferably at least 95% of the entire roof surface of the roof, and/or a vehicle roof opening (35) is provided in the vehicle roof (41) that is designed to be complementary with the opening in the floor element (2) or in the ceiling element (3) of the roof box (1).

18. A motor vehicle, **characterized in that** the motor vehicle has a roof according to one of the preceding claims.

## Revendications

1. Coffre de toit (1) pour véhicules automobiles pour la formation d'un espace intérieur utilisable (6) pour la disposition ou le stockage d'objets, dans lequel le coffre de toit (1) est réalisé de manière intégrable dans le toit d'un véhicule automobile, dans lequel des moyens de modification de volume pour la modification du volume de l'espace intérieur (6) sont prévus, dans lequel le coffre de toit (1) est réalisé en tant que contenant indépendant fermé sur lui-même, dans lequel le coffre de toit (1) comprend des éléments de paroi pour la formation de l'espace intérieur (6) et dans lequel les éléments de paroi comprennent un élément de fond (2), un élément de couverture (3), une paroi arrière (4) et/ou une ou plusieurs parois latérales (5), dans lequel le coffre de toit (1) comprend une partie supérieure (30) qui forme un couvercle pour le coffre de toit (1) et peut pivoter par rapport à une partie inférieure du coffre de toit (1) dans un état déployé du coffre de toit, dans lequel la partie supérieure (30) est formée par l'élément de couverture (3) et/ou la paroi arrière (4) et/ou les parois latérales (5).

2. Coffre de toit selon la revendication 1, **caractérisé en ce que** le coffre de toit (1) peut être déplacé à l'aide des moyens de modification de volume entre un état déployé dans lequel l'espace intérieur (6) présente un volume maximal et un état escamoté dans lequel l'espace intérieur (6) présente un volume minimal, dans lequel en particulier le volume minimal comporte moins de 50 %, de préférence moins de 25 %, de manière particulièrement préférée, moins de 10 % du volume maximal ; et/ou que le coffre de toit (1) comprend des moyens d'activation pour l'activation des moyens de modification de volume.

3. Coffre de toit selon la revendication 1 ou 2, **caractérisé en ce qu'**au moins l'un des éléments de paroi ou des parties d'un élément de paroi est/sont formé(es) par le toit d'un véhicule automobile ; et/ou que les moyens de modification de volume comprennent des moyens de pivotement, dans lequel les moyens de pivotement sont réalisés pour le pivotement d'éléments de paroi individuels et/ou pour le pivotement de segments d'éléments de paroi individuels.

4. Coffre de toit selon la revendication 3, **caractérisé en ce que** les moyens de pivotement comprennent une articulation, en particulier une charnière (8, 9, 10) ou un tronçon de matériau élastique et/ou plastiquement déformable et/ou que la paroi arrière (4) et/ou les parois latérales (5) sont reliées à l'aide de moyens de pivotement à l'élément de couverture (3) et/ou l'élément de fond (2).

5. Coffre de toit selon la revendication 4, **caractérisé en ce que** la paroi arrière (4), les parois latérales (5) et/ou l'élément de couverture (3) présentent au moins deux segments de paroi arrière, au moins deux segments de paroi latérale (11, 12) et/ou au moins deux segments de couverture (3a, 3b, 3c), dans lequel les au moins deux segments de la paroi arrière (4), des parois latérales (5) et/ou de l'élément de couverture (3) sont reliés ensemble à l'aide de moyens de pivotement, dans lequel de préférence les au moins deux segments de la paroi arrière (4) ou les au moins deux segments des parois latérales (5) peuvent être rabattus vers l'intérieur.

6. Coffre de toit selon la revendication 5, **caractérisé en ce que** les moyens de pivotement entre les deux segments de paroi latérale (11, 12) et/ou entre les deux segments de paroi arrière et/ou entre les deux segments de couverture (3a, 3b, 3c) pivotent autour d'un axe de pivotement orienté sensiblement horizontalement ; et/ou que les parois latérales (5) présentent respectivement au moins deux segments de paroi latérale (11, 12), dans lequel, en vue en direction longitudinale de la paroi latérale (5), un premier segment de paroi latérale (12) s'étend jusqu'à une zone avant de la paroi latérale (5), laquelle est tournée vers le côté avant d'un véhicule automobile à l'état monté du coffre de toit (1), et un deuxième segment de paroi latérale (11) ne s'étend pas dans la zone avant de la paroi latérale (5), dans lequel en particulier la zone avant de la paroi latérale (5) commence dans la zone dans laquelle la surface de toit du véhicule automobile commence à se courber vers l'extérieur.

7. Coffre de toit selon la revendication 6, **caractérisé en ce que**, en vue en direction longitudinale de la paroi latérale (5), la zone avant de la paroi latérale (5) est en jonction avec une zone médiane de la paroi latérale (5) et la zone médiane est en jonction avec une zone arrière de la paroi latérale (5), dans lequel la paroi latérale (5) se compose de la zone avant, de la zone médiane et de la zone arrière, et que le deuxième segment de paroi latérale (11) est disposé dans la zone arrière et/ou dans la zone médiane, de préférence exclusivement dans la zone médiane, et/ou que le premier segment de paroi latérale (12) est disposé dans la zone avant et dans la zone médiane et/ou dans la zone arrière, de préférence dans la zone avant et dans la zone médiane et dans la zone arrière.

8. Coffre de toit selon l'une des revendications 3 à 7, **caractérisé en ce que** le coffre de toit (1) présente un cadre (15), comprenant de préférence deux supports transversaux (13) et deux supports longitudinaux (14), et que le cadre (15) est relié à l'aide des moyens de pivotement à l'élément de fond (2), à la paroi arrière (4), à des parois latérales (5) et/ou à l'élément de couverture (3) ; et/ou que les parois latérales (5) se réduisent en hauteur vers le côté avant du coffre de toit (1) et forment, ensemble avec l'élément de couverture (3), lequel est réalisé de manière courbée conformément à la forme de toit d'un véhicule automobile, une forme à peu près cunéiforme, aérodynamique.

9. Coffre de toit selon l'une des revendications 1 à 3, dans lequel le coffre de toit (1) comprend des éléments de paroi pour la formation de l'espace intérieur (6), **caractérisé en ce que** les moyens de modification de volume présentent des moyens de déformation pour la modification de forme réversible d'un élément de paroi ou d'une zone partielle d'un élément de paroi d'un premier état de déformation, lequel correspond à un état escamoté du coffre de toit (1), à un deuxième état de déformation, lequel correspond à un état déployé du coffre de toit (1), dans lequel un dispositif d'activation est prévu pour l'activation des moyens de déformation.

10. Coffre de toit selon la revendication 9, **caractérisé en ce que** la déformation de l'élément de paroi ou de la zone partielle de l'élément de paroi comprend une flexion de l'élément de paroi ou de la zone partielle de l'élément de paroi, dans lequel, dans l'élément de paroi ou dans la zone partielle de l'élément de paroi, des emplacements de flexion de consigne ou des lignes de flexion de consigne sont prévu(e)s autour desquels/desquelles la flexion s'effectue ; et/ou que l'espace intérieur (6) est formé par un élément de fond (2) et un élément de couverture (3), dans lequel les moyens de déformation sont prévus dans l'élément de couverture (3).

11. Coffre de toit selon l'une des revendications 2 à 10, **caractérisé en ce que** les moyens d'activation sont des coussins de gaz à commande pneumatique, comprennent en particulier des coussins d'air, des moteurs électriques, en particulier des servomoteurs, des ressorts, des aimants et/ou électroaimants qui sont en particulier reliés à un dispositif de commande pour déplacer de manière automatisée le coffre de toit (1) entre un état escamoté et un état déployé, dans lequel les moyens d'activation sont de préférence prévus sur les moyens de pivotement et/ou les éléments de paroi et dans lequel on prévoit de manière particulièrement préférée, par moyen de pivotement, un coussin d'air, un électroaimant et un ressort ; et/ou que l'on prévoit un dispositif de levage (31) pour déplacer la partie supérieure (30) entre une position ouverte et une position fermée du coffre de toit (1), dans lequel, lors du déplacement entre les deux positions, la partie supérieure (30) peut de préférence pivoter à l'aide d'un moyen de pivotement autour d'un axe de pivotement et dans lequel on prévoit de manière particulièrement préférée un cadre, en particulier fermé sur lui-même, qui forme une terminaison inférieure pour la partie supérieure (30) et avec lequel la partie supérieure (30) repose, à l'état fermé, sur une partie inférieure du coffre de toit (1).

12. Coffre de toit selon la revendication 11, **caractérisé en ce que** la partie supérieure (30) présente un volume intérieur d'au moins 40 %, de préférence d'au moins 60 %, de manière particulièrement préférée, d'au moins 80 % du volume total du coffre de toit (1).

13. Coffre de toit selon l'une des revendications 3 à 12, **caractérisé en ce qu'**au niveau d'un ou plusieurs des éléments de paroi, on prévoit des éléments de support pour supporter des éléments de paroi voisins dans un état déployé du coffre de toit (1), dans lequel les éléments de support forment de préférence simultanément une butée lors du pivotement des éléments de paroi.

14. Coffre de toit selon l'une des revendications 2 à 13, **caractérisé en ce que** l'on prévoit des moyens d'arrêt pour arrêter le coffre de toit (1) dans l'état escamoté et/ou dans l'état déployé, dans lequel les moyens d'arrêt sont de préférence disposés sur les éléments de support et les moyens d'arrêt comprennent de manière également préférée des électroaimants.

15. Coffre de toit selon l'une des revendications 3 à 14, **caractérisé en ce que** la surface de base de l'élément de fond (2) n'est pas un polygone, en particulier pas un rectangle et/ou que la forme de la surface de base de l'élément de fond (2) correspond sensiblement à la forme de la surface de toit du véhicule automobile ; et/ou que les moyens de modification de volume pour le déplacement d'éléments de paroi individuels et/ou de tronçons individuels d'éléments de paroi ne comprennent pas de tringlerie et/ou pas de cylindre électromécanique ou mécanique et/ou que les moyens de modification de volume comprennent au moins une tringlerie, en particulier un étrier pivotant réalisé(e) pour le déplacement du coffre de toit entre l'état escamoté et l'état déployé, dans lequel la tringlerie présente de préférence des moyens d'encliquetage pour l'encliquetage dans un état déployé du coffre de toit (1) et/ou dans un état escamoté du coffre de toit (1).

16. Toit d'un véhicule automobile, **caractérisé en ce qu'**un coffre de toit selon l'une des revendications précédentes est disposé de manière intégrée dans le toit.

17. Toit selon la revendication 16, **caractérisé en ce que** le toit présente un renfoncement de toit (214) pour la réception du coffre de toit (1) ; et/ou que le coffre de toit recouvre au moins 80 %, de préférence au moins 90 %, de manière particulièrement préférée, au moins 95 % de la surface de toit totale du toit et/ou qu'une ouverture de toit de véhicule (35) est prévue dans le toit de véhicule (41), laquelle est réalisée de façon complémentaire à l'ouverture dans l'élément de fond (2) ou dans l'élément de couverture (3) du coffre de toit (1).

18. Véhicule automobile, **caractérisé en ce que** le véhicule automobile présente un toit selon l'une des revendications précédentes.
